# EUROPÄISCHE PATENTSCHRIFT

(11) **EP 2 543 830 B1**
(45) Veröffentlichungstag und Bekanntmachung des Hinweises auf die Patenterteilung: **17.05.2017**
(21) Anmeldenummer: 12004898.8
(22) Anmeldetag: 02.07.2012
(51) Int. Cl.: F01K 25/08, F01K 23/10, F01K 25/06, F01K 25/10, F25B 15/16, F25B 15/04

(54) **Arbeitsverfahren eines Sorptionskraftzyklus für ein Zweistoffgemisch aus Ammoniak und Wasser**
Method of operation of an absorption power cycle for a binary mixture of ammonia and water
Procédé de fonctionnement d'un cycle de production d'énergie de sorption utilisant un mélange binaire à base d'ammoniaque et d'eau

(30) Priorität: 02.07.2011 DE 102011106423
(43) Veröffentlichungstag der Anmeldung: 09.01.2013
(73) Patentinhaber: Von Reth, Anno, Dr., 33102 Paderborn (DE)
(72) Erfinder: Von Reth, Anno, Dr., 33102 Paderborn (DE)

(56) Entgegenhaltungen:
- WO-A1-2006/029702
- US-A1- 2003 167 769
- US-B1- 6 269 644

## Beschreibung

Die Erfindung betrifft ein Arbeitsverfahren eines Sorptionskraftzyklus in einer Sorptionsanlage für das Zweistoffgemisch Ammoniak und Wasser zur Erzeugung mechanischer Energie und/oder Kälteleistung aus mindestens einer externen Wärmequelle, vorzugsweise aus einer Niedertemperaturwärmequelle.

Aus einer Lösung von Ammoniak und Wasser Dampf auszutreiben und diesen zur Erzeugung mechanischer Energie zu entspannen, ist bekannt. Der entspannte Dampf wird im Unterschied zu Einstoffkreisläufen nicht kondensiert, sondern von Ammoniak/Wasser-Lösung absorbiert.

Zu den Kraftwerksprozessen, die Ammoniak und Wasser verwenden und die Entspannung eines Mischdampfes vorsehen, gehören die Kalina- Zyklen. Kalina hat in mehr als 20 Erfindungen Kraftwerkskreisläufe entwickelt, deren gemeinsames Merkmal die Verwendung von Ammoniak und Wasser ist. Für die Ausnutzung einer Wärmequelle mit einer Maximaltemperatur unterhalb von 200 °C ist der so bezeichnete Kreislauf KCS 34 nach Mlcak ("Kalina Cycle concepts for low temperature geothermal" in Tagungsband Geothermal Resources Council Meeting 2002 Reno 2002 S.707-713) geeignet. Es handelt sich um einen Sattdampfprozess, wobei die Phasenübergänge durch Desorption und Absorption stattfinden.

S. Köhler hat in der Dissertation "Geothermisch angetriebene Dampfkraftwerksprozesse" (2005) (www.edoc.gfz-potsdam.de; S.76f) diesen Kreislauf intensiv untersucht. In der Abbildung IV-22 wird die Entspannung eines Dampfes mit einem Wassergewichtsanteil von 5 % und 15 % und gleicher Eingangstemperatur von 135 °C verglichen: Die spezifische Enthalpie des Dampfes fällt mit steigenden Ammoniakgehalt sowohl bei dem Frischdampf als auch beim Abdampf. Die Enthalpiedifferenz in der Turbine liegt im ersten Fall deutlich höher. In der zugehörigen Textstelle wird angeführt, dass die spezifische Enthalpie des Dampfes bei kleinen Drücken stärker abnimmt als bei hohen Drücken.

Pall Valldimasson hat u.a. T-h Diagramme des binären Stoffpaares Ammoniak und Wasser mit unterschiedlichen Ammoniakanteilen veröffentlicht. Daraus geht u.a. hervor, dass Sattdämpfe bei einem Ammoniakgewichtsanteil von 95 % zwischen 10 und 70 bar den gleichen oder nahezu gleichen Enthalpiewert aufweisen, die Temperatur mit zunehmendem Druck hingegen höhere Werte annimmt. Die Enthalpiedifferenz zwischen Sattdampflinie zur Linie des Nassdampfes mit einem Dampfgehalt von 0,9 ist bei einem Ammoniakanteil von 0,95 besonders groß. Für das genannte binäre Zweistoffgemisch ergeben Berechnungen der Enthalpiedifferenz für die Entspannung eines Nassdampfes und Variation den Ausgangsdruck zwischen 10 und 70 bar: Bei gleichem Druckgefälle ist die Enthalpiedifferenz eines Dampfes mit gleichem Ammoniakanteil fast vollständig unabhängig vom Eingangsdruck und dessen Eingangstemperatur.

Es sind mehrere Kreisläufe für das binäre Stoffpaar Ammoniak und Wasser für die Erzeugung von mechanischer Energie bekannt, die entspannten Dampf nicht durch Kondensation sondern auf einem niedrigeren Druckniveau durch Absorption verflüssigen. Hierzu gehören die Kreisläufe DE 10 2005 005 409 A1, US 6 269 644 B1 und DE 10 206 005 472 A1, Feng Xu, et al.: "A combined power/cooling cycle" in Energy 25 (2000) S. 233 - 246. Ihnen ist gemeinsam, dass sie auf die Erzeugung und Entspannung eines nahezu reinen Ammoniakdampfes ausgelegt sind. Dieser wird möglichst hoch überhitzt, wobei der Dampf einen relativ großen Temperaturabstand zur Maximaltemperatur der Wärmequelle aufweist und mit entsprechendem Bauaufwand überhitzt werden muss.

Die Kreisläufe nach DE 10 2005 005 409 A1, US 6 269 644 B1 und DE 10 206 005 472 A1 sind so ausgelegt, dass eine Wärmequelle mit stetig fallender Temperatur über einen großen Temperaturbereich ausgenutzt werden kann. Dies geschieht mittels gleicher und unterschiedlicher Verfahrensschritte. In allen drei Verfahren weisen die Kreisläufe Hochdruckaustreiber und Mitteldruckaustreiber auf. In den Hochdruckaustreibern wird der Entspannungsdampf erzeugt. Dieser wird vor der Entspannung überhitzt. In den Mitteldruckaustreibern wird Dampf produziert, der nicht entspannt wird, sondern auf nahezu gleichem Druckniveau absorbiert wird. Die Wärmezufuhr in der Mitteldruckaustreibung findet auf einem niedrigeren Temperaturniveau als die Hochdruckaustreibung statt. In US 6 269 644 B1 dient der Mitteldruckdampf dazu, Lösung hoch anzureichern, so dass dem Hochdruckaustreiber eine Lösung zugeführt wird, die reicher als diejenige aus dem Absorber zur Absorption des entspannten Dampfes ist. Dieses Dokument US 6 269 644 B1 beschreibt den nächstliegenden Stand der Technik zu der vorliegenden Anmeldung.

In DE 10 2005 005 409 A1 und DE 10 2006 005 472 A1 wird die Mitteldruckaustreibung zu einer zweimaligen Wärmezufuhr genutzt. Während in DE 10 2006 005 472 A1 der gesamte Hochdruckdampf mit zweimaliger Wärmezufuhr genutzt wird, ist das in DE 10 2005 005 409 A1 nur für einen Teil des Dampfes vorgesehen.

In DE 10 2006 005 472 A1 wird die arme Lösung nur zur Aufwärmung reicher Lösung herangezogen. In US 6 269 644 B1 wird Wärme von der armen Lösung zusammen mit Rektifikationswärme zur Hochdruckdampferzeugung in einer Destillationssäule genutzt.

In DE 10 2005 005 409 A1 wird die arme Lösung durch Rückführung durch den Hochdruckaustreiber des Hauptkreislaufes zur Erzeugung von Hochdruckdampf herangezogen. Als technische Lösung wird dort vorgeschlagen, die Wärmeübertragung von der externen Wärmequelle und von der armen Lösung in zwei baulich voneinander getrennten Austreibern anzuordnen.

Binäre Gemische haben den thermodynamischen Vorteil, dass sie bei der Wärmeaufnahme eine stetig verlaufende Temperaturänderung erfahren. Die Wärmeaufnahme ist jedoch nicht linear. In DE 10 2005 005 409 A1 sind zur Minderung der nicht linearen Wärmeaufnahme neben den bereits beschriebenen u.a. folgende Verfahrensschritte angeordnet:
- Einem Hauptkreislauf wird ein Zusatzkreislauf hinzugefügt,
- Arbeitsmittel und Umlaufmenge in den Lösungen des Hauptkreislaufs bzw. des Zusatzkreislaufs werden von einander abweichend festgelegt,
- externe Wärmeenergie wird zur Dampfaustreibung im höheren Temperaturbereich an den Hauptkreislauf, im darunter liegenden Temperaturbereich an den Zusatzkreislauf übertragen,
- die Hochdruckdämpfe des Hauptkreislaufes und des Zusatzkreislaufes werden auf gleichem Druckniveau erzeugt,
- die Hochdruckdämpfe des Hauptkreislaufes und des Zusatzkreislaufes werden bezüglich der Anteile von Sorptionsmittel und Lösungsmittel angeglichen, wobei
- die Hochdruckdämpfe des Hauptkreislaufes und des Zusatzkreislaufes gemeinsam zur Erzeugung mechanischer Energie entspannt werden,
- das Druckniveau der Absorption wird im Zusatzkreislauf höher als im Hauptkreislauf festgelegt ist,
- Bei Rektifikation von Mischdämpfen wird freigesetzte Wärme an eine in den Rektifikator eingeleitete reiche Lösung übertragen und aus dieser Hochdruckdampf ausgetrieben und die verleibende Lösung aufgewärmt wird,
- Die Entspannung wird in Form von einem Entspannungsapparat oder einem Entspannungsapparat mit Dampfanzapfung vorgenommen, im letzteren Fall verknüpft mit einer Absorption des entspannten Dampfes auf zwei Druckstufen.

In DE 10 2006 011 429 A1 erfolgt die Wärmeübertragung zuerst nach dem Rieselprinzip, danach nach dem Blasenprinzip, wobei die reiche Lösung bei der ersten Hochdruckaustreibung den gleichen Wasseranteil wie die arme Lösung bei der zweiten Hochdruckaustreibung aufweist. Die Wasseranteile der in beiden Austreibern erzeugten Dämpfe sind gleich und weichen deutlich von einem Dampf ab, der im Gleichgewicht zu einer Lösung zu Beginn oder Ende der gesamten Hochdruckaustreibung stünde.

Weiterhin ist in der US 2003 0167769 A1 ein Sorptionskraftzyklus beschrieben, bei dem ein auf höherem Temperaturniveau extern beheizter Hochdruckaustreiber und je ein auf niedrigerem Temperaturniveau extern und ein von der armen Lösung beheizter Hochdruckaustreiber eingesetzt wird. Bei dieser Kreislaufschaltung wird der Wasseranteil des Hochdruckdampfes nach der Austreibung nicht erhöht.

Die technisch zu lösende Aufgabe besteht darin, für die binären Stoffe Ammoniak und Wasser einen Sorptionskraftzyklus oder eine Kombination von Kraft-Zyklen zu entwickeln, mit denen unter Einsatz einer Wärmequelle relativ niedriger Temperatur der Wirkungsgrad der Anlage gegenüber dem Stand der Technik gesteigert wird.

Die Lösung der Aufgabe findet sich in einem Hauptanspruch und in weiteren zugeordneten Unteransprüchen.

Kerngedanke der Erfindung ist, ein Arbeitsverfahren einer Sorptionsanlage mit dem binären Stoffpaar Ammoniak und Wasser so zu gestalten, dass zumindest im zweiten Teil der Entspannung die Taupunktlinie überschritten wird und der Entspannungsdampf einen energetisch optimalen Wassergewichtsanteil aufweist. Es werden hohe Leistungen erzielt bei vergleichsweise niedrigen Austreibertemperaturen. Dieser Kreislauf hat vorzugsweise einen definierten Wassergewichtsanteil von 3 bis 10 Gewichtsprozent vorzugsweise 6 %; bei einem Enddruck der Entspannung von 1,2 bis 4 bar, vorzugsweise von 1,5 bis 2 bar. Der Eingangsdruck beträgt mindestens 10 bar, vorzugsweise mindestens 13,5 bar. Der Dampfanteil wird am Entspannungsende oberhalb der Tropfenschlaggrenze eingestellt. Bei einem so ausgelegten Kreislauf wird an eine arme Lösung ein nicht unwesentlicher Teil der bei der Hochdruckaustreibung extern zugeführten Wärme übertragen. Diese kann zumindest teilweise intern zurückgewonnen werden, indem zur Hochdruckdampferzeugung Wärmeübertragung auch von der armen Lösung angeordnet wird. Die Entspannung kann sowohl in einem als auch in zwei hintereinander geschalteten Entspannungsapparaten erfolgen. Der Taupunkt wird im Entspannungsvollzug spätestens bei einem Druck von 9,5 bis 15 bar, vorzugsweise bei 13,5 bar überschritten, wobei die Taupunkttemperatur (entsprechend der Datenbank Refprop 8.0 des National Institute of Standards and Technology) zwischen 94,8 °C und 107,9 °C liegt. Der Kreislauf wird grundsätzlich so ausgelegt, dass die Hochdruckaustreibung aus einer Lösung beginnt, die bei dem genannten Druckniveau eine niedrigere Temperatur aufweist bzw. aufweisen würde und mit einer armen Lösung endet, die eine höhere Temperatur aufweist. Aufbauend auf dieser Basis wird bei Maximaltemperaturen der externen Wärmequelle über ca. 130 °C der Eingangsdruck zunehmend angehoben. Bei Anordnung nur eines einzigen Entspannungsapparats wird auch die Überhitzungstemperatur zunehmend angehoben. Hierbei wird ausgenutzt, dass die Taupunkttemperatur des Entspannungsdampfes deutlich unterhalb der Maximaltemperatur der Wärmequelle liegt, so dass der ausgetriebene Dampf überhitzt werden kann, gegebenenfalls über mehrere Zehner Kelvin. Der Wassergewichtsanteil im zu entspannenden Dampf wird grundsätzlich auf das energetische Optimum ausgerichtet und grundsätzlich nicht durch Gleichgewichtslinien am Ende oder Anfang der gesamten Hochdruckaustreibung bestimmt.

Kann die externe Wärmequelle über einen größeren Temperaturbereich ausgenutzt werden, findet die Absorption in bis zu drei Druckstufen statt. Ist die externe Wärmequelle zusätzlich tiefer als 60 bis 80 Kelvin oberhalb der Umgebungstemperatur ausnutzbar, wird ein Zusatzkreislauf angeordnet. Mit dieser Anordnung wird mittels des Prinzips der zweimaligen Wärmezufuhr für einen Teil des Hochdruckdampfes das Druckverhältnis bei der Entspannung vergrößert.

Zur Entspannung des beschriebenen Hochdruckdampfes können entweder ein Entspannungsapparat ohne Dampfanzapfung oder ein Entspannungsapparat mit Dampfanzapfung oder zwei Entspannungsapparate hintereinander geschaltete angeordnet werden.

Zur Austreibung sind in der Sorptionskältetechnik Apparate in Nutzung, bei denen der Wasseranteil des ausgetriebenen Dampfes entweder im Gleichgewichtspunkt zur eintretenden oder zur austretenden Lösung steht. Nur in wenigen Anwendungsfällen wird mit einem der beiden Apparate ein Wassergewichtsanteil von ca. 6 % eintreten. Um das Ziel zu erreichen, wird ein Verfahrensweg bei Erzeugung und Einstellung des Entspannungsdampfes vorgenommen, wobei zumindest eins der vier folgenden spezifischen Verfahrensmerkmale eingestellt sind:
a) erfindungsgemäß mindestens in einem Apparat Hochdruckdampf im Gleichgewichtspunkt zur eintretenden Lösung und in mindestens einem Apparat Hochdruckdampf im Gleichgewichtspunkt zur austretenden Lösung erzeugt wird,
b) erfindungsgemäß der Wassergewichtsanteil des Hochdruckdampfes in einem Rektifikator (oder außerhalb der Erfindung in einer Destillationssäule) festgelegt wird, wobei diese beiden Apparate auf eine Teilrektifikation ausgelegt sind,
c) außerhalb der Erfindung der Wassergewichtsanteil des Hochdruckdampfes auch durch eine eintretende Lösung festgelegt wird, die auf einem höheren Wasseranteil als die reichen Lösung (2) eingestellt ist,
d) erfindungsgemäß der Wassergewichtsanteil des Hochdruckdampfes durch Zuleitung und Verdampfung von Lösung in den Überhitzer eingestellt wird.

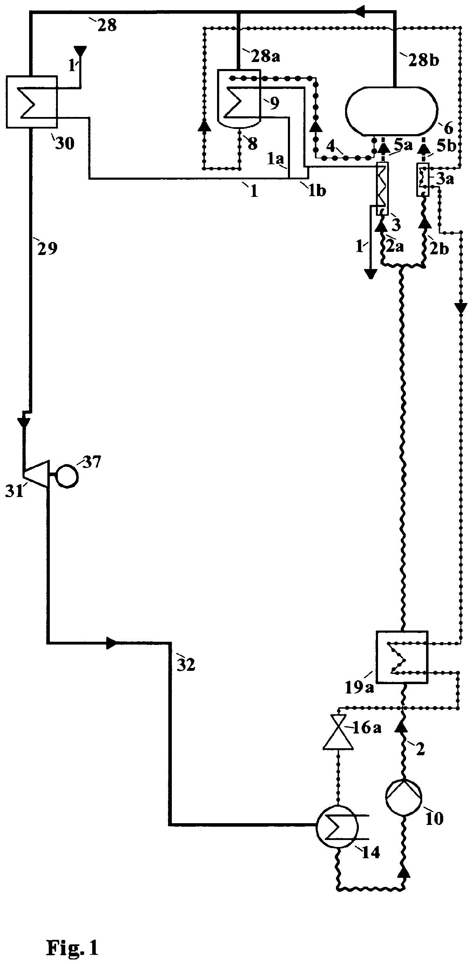

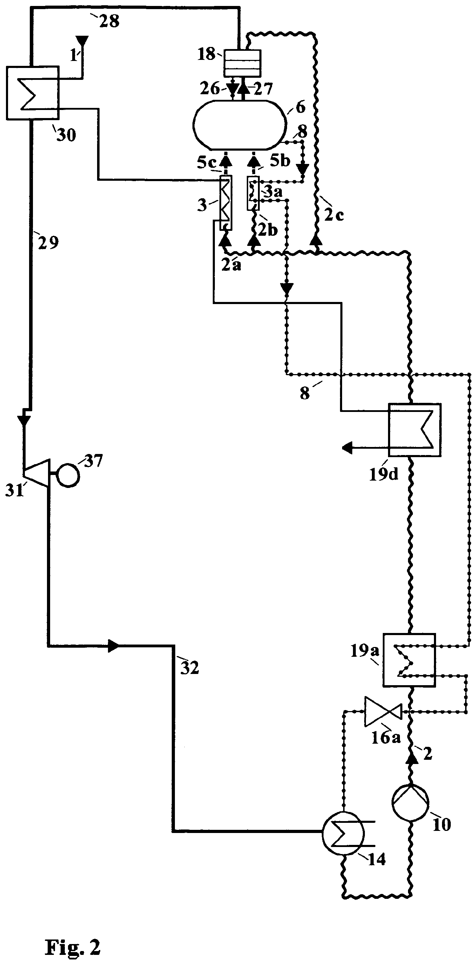

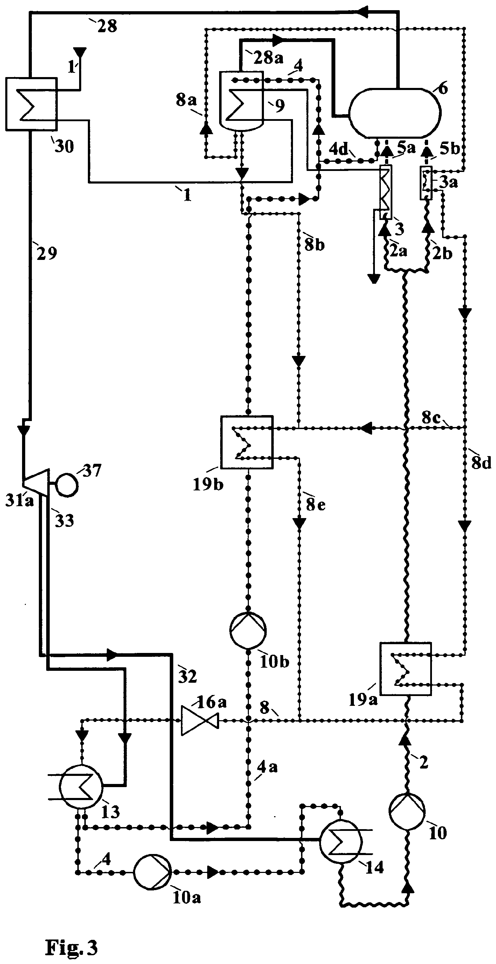

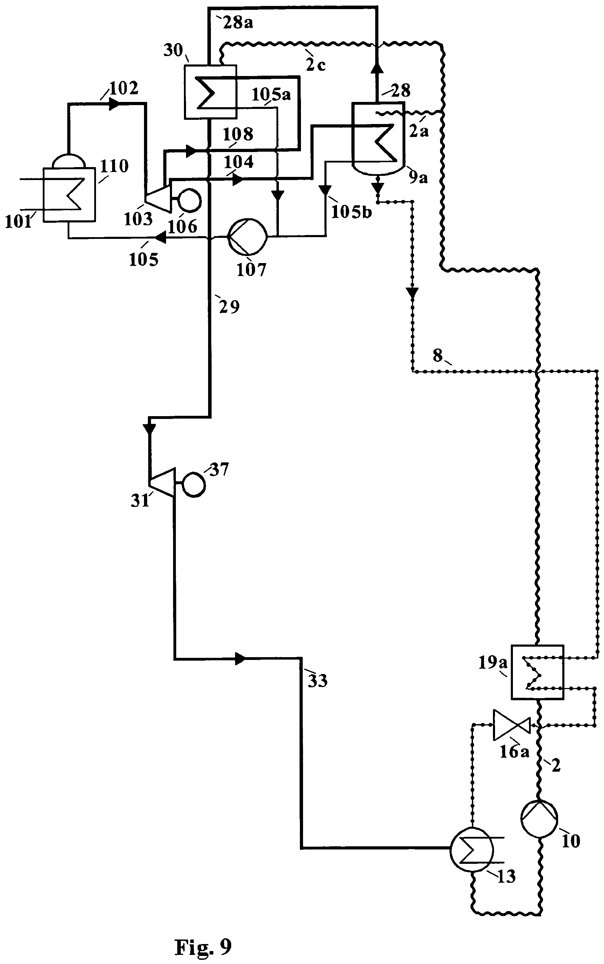

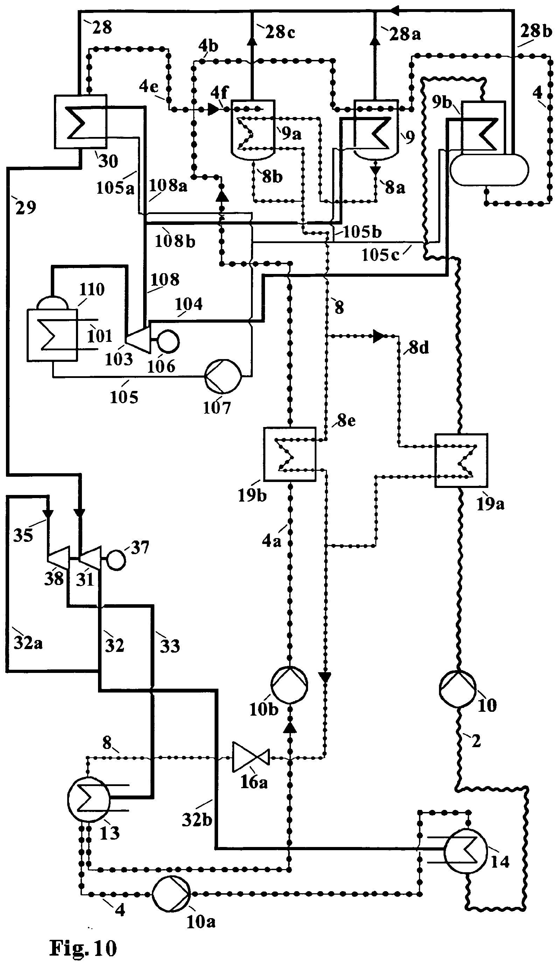

Das Verfahrensmerkmal c) ist in den Darstellungen in den Figuren 3, 4, 6, 8, 9, das Verfahrensmerkmal d) ist in den Darstellungen in den Figuren 9 und 10 enthalten. Die ersten drei Verfahrensmerkmale sind in 6 verschiedenen Kombinationen von Hochdruckaustreibern und deren Zuleitung der auszutreibenden Lösungen sowie gegebenenfalls einem Rektifikator oder einer Destillationssäule jeweils erstmalig in den Figuren 1, 2, 3, 4, 6 und 8 dargestellt und in dem zugehörigen Text beschrieben. Die Kombinationen unterscheiden sich in zwei Hauptgruppen: Hauptmerkmal der ersten Gruppe ist, dass nur Hochdruckaustreiber nach dem Blasenprinzip arbeiten und nach der Austreibung eine größere Reduktion des Wassergewichtsanteils in einem Rektifikator oder einer Destillationssäule stattfindet. Bei der vorgesehenen Teilrektifikation wird die freiwerde Wärme an zugeleitete reiche oder angereicherte Lösung übertragen (Darstellungen in den Figuren 2, 6, 8).

Hauptmerkmal der zweiten Gruppe ist, dass der höchste Temperaturbereich der externen Wärmequelle durch einen Hochdruckaustreiber ausgenutzt wird, der nach dem Rieselprinzip arbeitet und der nächst tiefere Temperaturbereich durch einen oder zwei Hochdruckaustreiber ausgenutzt wird, der oder die nach dem Blasenprinzip arbeiten (Darstellungen in den Figuren 1, 3, 4) oder nach dem Rieselprinzip mit absteigender Führung des ausgetriebenen Dampfes (9).

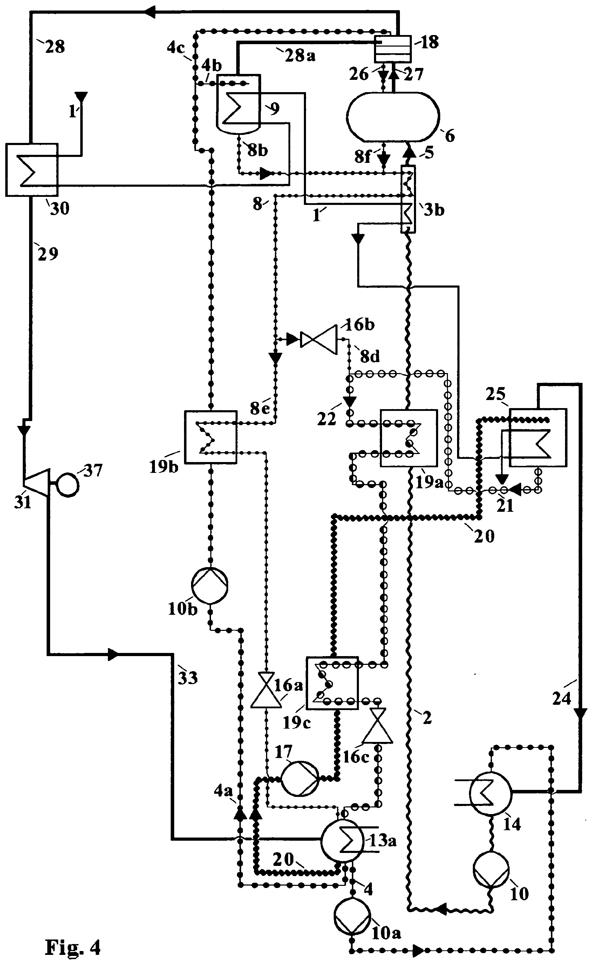

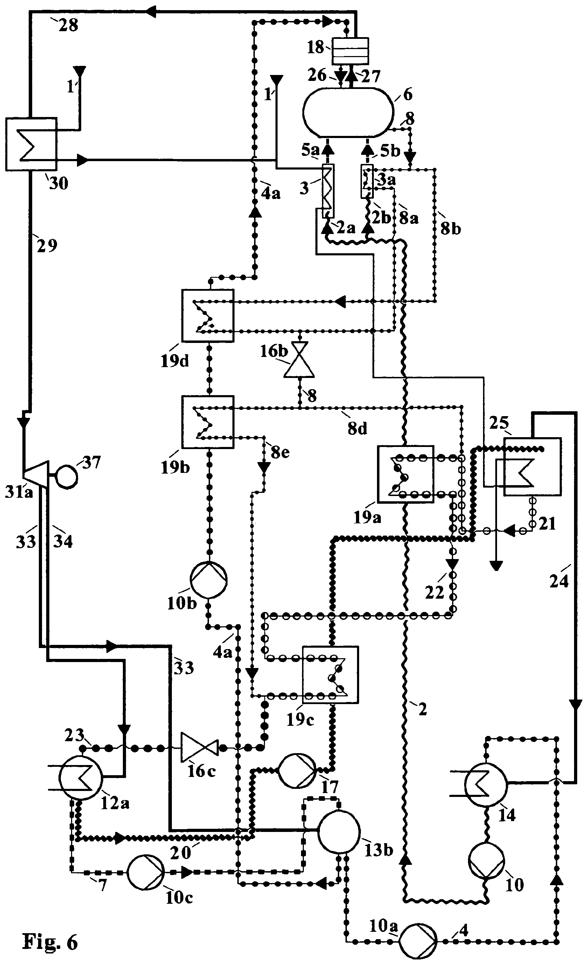

Weist die externe Wärmequelle ein großes Temperaturgefälle auf, wird die arme Lösung im Hochtemperaturbereich zumindest überwiegend zur Hochdruckaustreibung eingesetzt. Im Unterschied zu DE 10 2005 005 409 A1 erfolgt die Wärmeübertragung getrennt von der Wärmeübertragung aus der externen Wärmequelle. Anschließend wird die arme Lösung bzw. Lösungen zur Aufwärmung der reichen bzw., angereicherten Lösung verwendet. Für deren Aufwärmung bis zur Austreibertemperatur reicht die Wärmekapazität der armen Lösung nun nicht mehr aus. Hierzu wird die Wärmequelle nach deren Wärmeabgabe zur Austreibung herangezogen. Wird ein Mitteldruckaustreiber zusätzlich angeordnet, werden die armen Lösungen aus beiden Kreisläufen zur Aufwärmung reicher oder, sofern vorhanden, angereicherter Lösung herangezogen. Hierfür reicht deren Wärmekapazität außer bei sehr hohen Maximaltemperaturen der externen Wärmequelle aus. In solchen Fällen wird reiche Lösung leicht unterkühlt zur Austreibung geleitet. Für die Aufwärmung reicher Lösung eines gegebenenfalls angeordneten Zusatzkreislaufes reicht die Kapazität der armen Lösungen in der Regel nicht mehr aus. Hierzu wird Wärme aus der externen Wärmequelle herangezogen, z. B. indem die reiche ZK-Lösung in den ZK-Mitteldruckaustreiber unterkühlt eingeleitet wird. Bei Anordnung eines Mitteldruckaustreibers kann die externe Wärmequelle extrem tief ausgenutzt werde. Das Verhältnis von Mehraufwand zur Leistungssteigerung ist entsprechend der Schaltungen der Figuren 4 und 6 günstig.

Wenn eine externe Wärmequelle über eine große Temperaturspanne ausgenutzt werden kann, so ist zudem die Anordnung von drei Absorptionsstufen energetisch optimal. Durch Anordnung eines Entspannungsapparates mit Dampfentnahme und hintereinander angeordneten Hochdruckaustreiber(n) mit Gleichgewichtslinie des Dampfes zuerst zur eintretenden Lösung und nachgeschaltet zur austretenden Lösung entsprechend Figuren 4 und 10 werden die höchsten Leistungen bei sehr hohen Maximaltemperaturen und großem Temperaturgefälle der Wärmequelle erzielt. Bei mittleren und niedrigen Maximaltemperaturen werden durch Anordnung eines Entspannungsapparates mit Dampfentnahme die höchsten Anlagenleistungen erzielt.

Potentiell weist die Schaltung mit zwei hintereinander geschalteten Entspannungsapparaten einen besonderen Vorteil auf: Bekanntermaßen wird die Leistung von Stromerzeugungsanlagen, die von einer Wärmequelle niedriger Temperatur beheizt werden, erheblich von den Kühlungstemperaturen beeinflusst. Dass sie an die Umgebungstemperatur gekoppelt sind, ist an vielen potentiellen Einsatzorten anzunehmen. In vielen Klimaten schwankt die Umgebungstemperatur stark. Es ist möglich, diese Schwankungen nur oder weitgehend auf den Mitteldruckentspannungsapparat zu konzentrieren und den Hochdruckentspannungsapparat entsprechend von diesen Schwankungen freizuhalten. Weist die externe Wärmequelle zudem eine weitgehend gleichmäßige Wärmelieferung auf, so ist eine Steigerung des inneren Wirkungsgrades des Hochdruckentspannungsapparates entsprechend der Fahrweise auf einen Bestpunkt potentiell möglich.

Die Entspannung nur mit einem Entspannungsapparat ohne Dampfanzapfung auszuführen, ist bei Temperaturquellen mit verhältnismäßig geringen ausnutzbaren Temperaturspanne der Wärmequelle die beste Lösung. Kann die Wärmequelle über eine größere Temperaturspanne ausgenutzt werden, ist das Prinzip der zweimaligen Wärmezufuhr in der beschriebenen Form notwendig. Es ist nur die Anordnung von zwei Absorptionsdruckstufen möglich. Im Vergleich zu dieser Anordnung ergeben andere Anordnungen wie diejenige eines Entspannungsapparates mit einer Dampfentnahme oder diejenige von zwei hintereinander geschalteten Entspannungsapparaten höhere Anlagenleistungen.

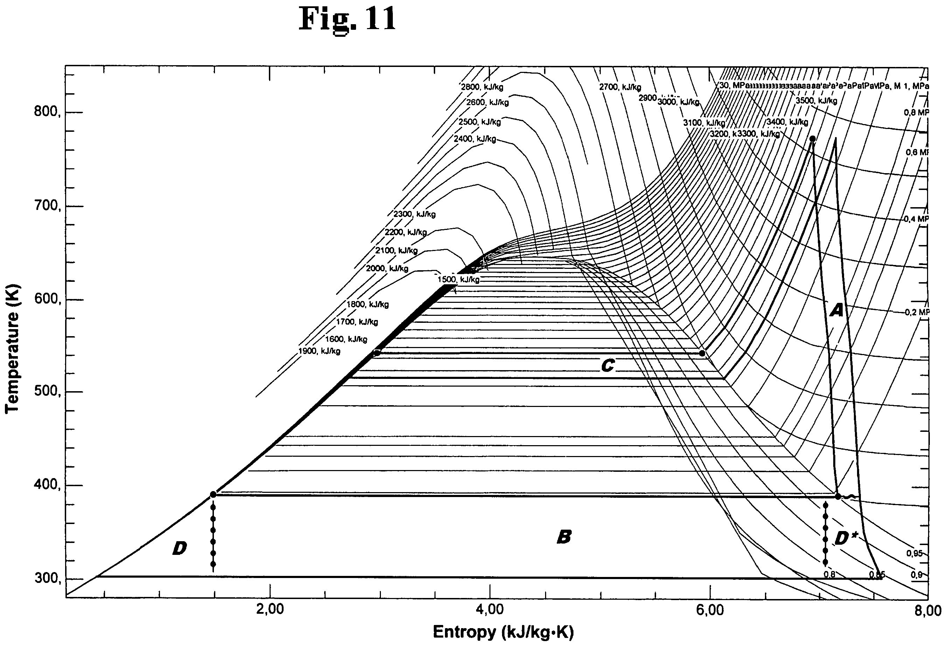

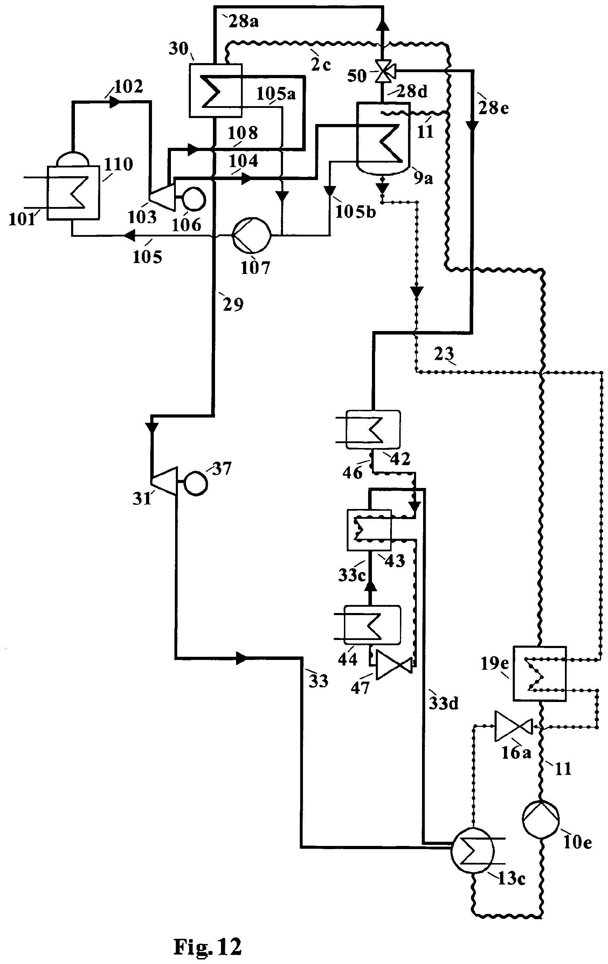

Ist eine Wärmequelle auszunutzen, deren Maximaltemperatur deutlich oberhalb der Einsatzgrenze des binären Stoffes Ammoniak/Wasser liegt, so ist folgende Anordnung vorzusehen: In einem Clausius-Rankine-Kreislauf mit dem Einstoffmedium Wasser wird Wasserdampf in einer Gegendruckturbine nur teilentspannt. Der Gegendruckdampf wird dem Sorptionskraftzyklus zugeleitet. Für diesen ist der kondensierende Wasserdampf als externe Wärmequelle angeordnet. Im folgenden ist eine solche Wärmequelle jeweils von einer Niedertemperaturwärmequelle zu unterscheiden. Eine entsprechende Wärmeübertragung ist zur Kälteerzeugung mit dem binären Stoff Ammoniak/Wasser weitverbreitet. Entsprechend der Darstellung der Figur 12 ist eine alternative oder parallele Strom- und Kälteerzeugung machbar. Mit der Anordnung entfällt eine Entspannung des Wasserdampfes in das Vakuum mittels einer Niederdruckturbine. Die Entspannung bis nahe an die Umgebungstemperatur findet im Entspannungsapparat des Sorptionskraftzyklus statt. Der wesentliche energetische Vorteil dieser Kombination bezüglich der Stromerzeugung liegt darin, dass im Sorptionskraftzyklus die Entspannung mit einer niedrigeren Entropie stattfindet: Entsprechend der in Figur 11 skizzierten Lösung kann bei gegebener Maximaltemperatur des Wasserdampfes grundsätzlich ein höherer Verdampfungsdruck angeordnet werden und damit zumindest in Kreisläufen ohne Zwischenüberhitzung ein höherer Wirkungsgrad für die beschriebene Kombination im Vergleich zu einem alleinigen Kondensationskreislauf mit dem Medium Wasser erzielt werden. In vielen Anwendungsfällen kann auf eine Zwischenüberhitzung im Wasser-Kreislauf verzichtet werden. Die beschriebene Kombination ist infolge des hohen energetischen Wirkungsgrades des beschriebenen Ammoniak-Wasser- Kreislaufes energetisch vorteilhaft.

Die Wärmeübertragung kann auch auf zwei Temperaturstufen erfolgen, indem der Gegendruckturbine ein Dampfstrom auf höherem Temperaturniveau entnommen und dem Sorptions-Kraft-Zyklus zugeleitet wird.

Hauptunterschiede der Kreislaufauslegung und Leistungsunterschiede zwischen der Erfindung und Kalina-Prozeß KCS 34 werden an Hand folgenden Beispiels erläutert. Im Vergleichsbeispiel beträgt die Maximaltemperatur der Wärmequelle 150 °C. Die Austreibung wird in beiden Kreisläufen so ausgelegt, dass der Entspannungsdampf einen Wassergewichtsanteil von 6 % aufweist. Im Vergleich wird auf die Wärmezufuhr zur Aufwärmung der Hochdruckaustreibung zugeleiteten Lösung(en) verzichtet. Es wird unterstellt, dass unterhalb des Temperaturniveaus der Hochdruckaustreibung genügend Wärme von armer Lösung und Wärmequelle bereit gestellt werden kann.

Der Kalina-Prozeß KCS 34 arbeitet mit dem gleichen Zweistoffgemisch Ammoniak und Wasser wie die Erfindung. Im Kalina-Kreislauf KCS 34 beginnt die (Hochdruck-)Austreibung aus einer reichen Lösung mit einem Ammoniakgewichtsanteil von 0,83 bei 85,6 °C. Es wird ein Zweiphasengemisch erzeugt und im Separator entsprechend einem Druck von 37,5 bar und einer Temperatur von 136,4 °C ein Dampf von der armen Lösung getrennt und ohne Überhitzung dem Entspannungsapparat zugeleitet. Der Dampf wird mit einem Druckverhältnis von 5 von 37,5 bar bis 7,5 bar und 68,7 °C entspannt und bei einer minimalen Lösungstemperatur von 21,8 °C absorbiert. Im KCS 34 wird die ammoniakarme Lösung nach der Desorption nicht zur Austreibung herangezogen, sondern nur Lösungsaufwärmung der reichen Lösung verwendet. Hierzu wird ebenfalls ein Teil der Absorptionswärme herangezogen. Ein Teil der Absorptionswärme wird genutzt, um die reiche Lösung aufzuwärmen.

Für den vorgestellten erfindungsgemäßen Kreislauf wird ein gleiches Druckverhältnis wie für den Kalina-Prozeß KCS 34 angesetzt. Es wird ein Kreislauf nach Figur 2 in die Rechnung eingestellt. Die zwei Hochdruckaustreiber arbeiten nach dem Blasenprinzip. Einer wird von der externen Wärmequelle, einer von der armen Lösung beheizt. Der ausgetriebene Dampf wird in einem Rektifikator auf einen Wassergewichtsanteil von 6 % reduziert. Die bei der Rektifikation freiwerdende Wärme wird an eine eingeleitete Lösung übertragen, wobei aus dieser ebenfalls Dampf ausgetrieben wird. Der rektifizierte Dampf wird vor der Entspannung auf 135 °C überhitzt. Der Austreiberdruck beträgt 20 bar, der Absorptionsdruck 4 bar, die minimale Lösungstemperatur 21,8 °C, wobei die theoretische Absorptionstemperatur zur Berücksichtigung der notwendigen Lösungsunterkühlung um 1,4 K höher liegt. Die Hochdruckaustreibung beginnt aus einer reichen Lösung mit einem Ammoniakgewichtsanteil von 0,5611 und 82,3 °C. Sie tritt aus dem extern beheizten Hochdruckaustreiber als ein Zweiphasengemisch mit 142 °C und aus dem intern beheizten mit 137 °C aus. Das Zweiphasengemisch wird in Dampf und arme Lösung getrennt und dem Rektifikator zugeleitet. Aus diesem tritt der Hochdruckdampf mit 116,6 °C aus Der Hochdruckdampf tritt mit 4 bar und 61,2 °C aus dem Entspannungsapparat aus. Die Wärmequelle tritt aus dem Überhitzer mit 147,9 °C aus und wird in den Hochdruckaustreibern auf 87,3 °C ausgekühlt, sie wird zur Lösungsaufwärmung weiter bis auf 75 °C ausgekühlt.

Dem Zyklus der vorliegenden Erfindung wird mehr Wärme aus der Wärmequelle zur Hochdruckaustreibung zugeführt, im Kalina-Kreislauf wird dem Hochdruckaustreiber eine höher aufgewärmte reiche Lösung zugeführt und eine erheblich geringere Menge armer Lösung abgeleitet. In der vorliegenden Erfindung wird die arme Lösung zur Hochdruckaustreibung zum Zweck der Wärmerückgewinnung herangezogen (siehe Zeile 4 und 5 in folgender Tabelle). Dadurch wird 18 % der Wärme zur Hochdruckaustreibung und Überhitzung bereitgestellt.

Unabhängig von der Temperatur weisen die Sattdämpfe beider Kreisläufe eine nahezu gleiche spezifische Wärme auf: Die spezifische Entspannungsleistung durch die Überhitzung liegt in der vorliegenden Erfindung um 3,7 % höher. Auf Grund der geringen Unterschiede wird der Vergleich auf die produzierte Dampfmenge und das Entspannungsverhältnis beschränkt. Hierbei wird unterstellt, dass im Temperaturbereich unterhalb der Hochdruckaustreibung arme Lösung, Wärmequelle und (nur im Kalina-Kreislauf) Wärmerückgewinnung aus dem entspannten Dampf genügend Wärme bereitstellen, um die reiche Lösung bis zur Siedetemperatur aufzuwärmen. Der innere Wirkungsgrad der Entspannungsapparate ist jeweils auf 85 % angesetzt.

Unter diesen Annahmen ergibt sich folgende Bilanz der Hochdruckaustreibung und der Anlagenleistung:

| | Kalina KCS 34 | Vorliegende Erfindung |
|---|---|---|
| + reiche Lösung (bei Eintritt in Hochdruckaustreiber) | 578,48 kJ/kg*24,467 kg/s = 14327 kW | 336,3 kJ/kg*40,223 kg/s = 13527 kW |
| + Wärmequelle | (629,55-380,08)kJ/kg*100kg/s = 24947 kW | (629,55-366,19)kJ/kg*100kg/s = 26336 kW |
| (+ interne Wärmeübertragung arme Lösung) | | ((530,66-283,69) kJ/kg* 22,892 kg/s = 5654 kW) |
| (+ interne Wärmeübertragung Rektifikation) | | (392,389 kJ/kg *14,181 kg/s = 5563 kW) |
| - arme Lösung (bei Austritt aus Hochdruckaustreiber) | 551,98 kJ/kg*5,473 kg/s = 3021 kW | 283,69 kJ/kg*22,892 kg/s = 6508 kW |
| Dampf | 36253 kJ/s/1879 kJ/kg =19,294 kg/s | 32483 kJ/s/1879,7 kJ/kg =17,281 kg/s |
| Leistung | (1879-1664,4) kJ/kg*19,294 kg/s = 4140,4 kW | (1930,1-1707,6) kJ/kg*17,281 kg/s = 3845 kW |

Der Kalina-Kreislauf wäre einem Sorptionskraftzyklus, der mit einem Absorber und einer Wassergewichtsanteil des Entspannungsdampfes von 96 % ausgelegt ist, energetisch vorzuziehen. Der Zyklus der vorliegenden Erfindung enthält daher vier leistungssteigernde Verfahrensmerkmale.

Das erste leistungssteigernde Verfahrensmerkmal der vorliegenden Erfindung ist die Absorption auf einer zweiten Druckstufen, um zumindest einen Teil des Dampfes weiter zu entspannen (Figur 2). Im Beispiel wird knapp die Hälfte des Dampfes bis auf 2,437 bar entspannt, wobei die Austrittstemperatur 46 °C beträgt. Die minimale Lösungstemperatur dieses hinzugefügten Absorbers beträgt ebenfalls 21,8 °C, die theoretische liegt 2,4 °C höher. Es gibt Absorptionsdruckstufen auf 4 und 2,427 bar. In der Bilanz zur Hochdruckaustreibung ändert sich nur die letzte Zeile:

| | Kalina KCS 34 | Vorliegende Erfindung |
|---|---|---|
| Leistung | (1879-1664,4)*19,294 kg/s = 4140,4 kW | (1930,1-1645,3) kJ/kg*8,353 kg/s + (1930,1-1707,6) kJ/kg*8,928 kg/s = 4366 kW |

Als zweites leistungssteigerndes Verfahrensmerkmall wird in der vorliegenden Erfindung entsprechend dem beschriebenen Prinzip der zweimaligen Wärmezufuhr mittels eines Zusatzkreislaufes eine größere Dampfmenge von Hochdruck (4 bar) auf Niederdruck (1,5 bar) entspannt. (Hochdruckaustreibung nach Figur 2, Absorption nach Figur 3 und Zusatzkreislauf nach Figur 6). Die Wärmequelle wird im Zusatzkreis-Mitteldruckaustreiber von 87,3 °C auf 58,6 °C ausgekühlt, sie wird zur Lösungsaufwärmung weiter bis auf 51,6 °C ausgekühlt. Es wird 5,425 kg/s Mitteldruckdampf auf 4 bar ausgetrieben. Der Entspannungsdampf wird auf 4 bar und teilweise weiter auf 1,5 bar entspannt. Es gibt Absorptionsdruckstufen auf 4 und 1,5 bar. In der Bilanz zur Hochdruckaustreibung ändert sich nur die letzte Zeile:

| | Kalina KCS 34 | Vorliegende Erfindung |
|---|---|---|
| Leistung | (1879-1664,4)*19,294 kg/s = 4140,4 kW | (1930,1-1588,1) kJ/kg*9,465kg/s + (1930,1-1707,6) kJ/kg*7,817 kg/s = 4976 kW |

Als drittes leistungssteigerndes Verfahrensmerkmal wird eine dritte Absorptionsstufe bei 2,664 bar eingefügt. Auf diesem Druckniveau wird der Entnahmedampf ausgekoppelt. Es wird mit einmaliger Wärmezufuhr 3,661 kg/s des Hochdruckdampfes bis auf 1,5 bar und 5,804 kg/s auf 3 bar, mit zweimaliger Wärmezufuhr 7,187 kg/s auf 1,5 bar entspannt werden. Die Summe des Hochdruckdampfes bleibt mit 17,281 kg/s unverändert (Hochdruckaustreibung nach Figur 2, Absorption und Zusatzkreislauf nach Figur 6). Die Wärmequelle wird im Zusatz-Mitteldruckaustreiber auf 58,6 °C und zur Lösungsaufwärmung weiter bis auf 51,2°C ausgekühlt.

In der Bilanz zur Hochdruckaustreibung ändert sich nur die letzte Zeile:

| | Kalina KCS 34 | Vorliegende Erfindung |
|---|---|---|
| Leistung | (1879-1664,4)*19,294 kg/s = 4140,4 kW | (1930,1-1588,1) kJ/kg*9.465 kg/s + (1930,1-1671,3) kJ/kg*7,817 kg/s = 5260 kW |

Im vierten leistungssteigernden Verfahrensmerkmal wird im Unterschied zum dritten leistungssteigernden Verfahrensmerkmal angereicherte Lösung aus dem Absorber mit der niedrigsten Druckstufe in den Rektifikator geleitet (Figur 6). Es werden damit zwei Lösungen mit unterschiedlichem Wasseranteil auf Hochdruckniveau angehoben und im Lösungswärmetauscher aufgewärmt. Der Druck des mittleren Absorbers beträgt 2,76 bar. Die Menge der reichen Lösung nimmt ab (von 40,223 kg/s auf 33,298 kg/s), die Menge der dem Absorber mit dem niedrigsten Druck zugeleiteten armen Lösung zu (22,942 kg/s auf 38,406 kg/s), wobei eine Teilmenge vor dem Hochdruckaustreiber abgezweigt und zur Lösungsaufwärmung eingesetzt wird. Auf der niedrigsten Druckstufe wird eine größere Dampfmenge, auf den beiden anderen Druckstufen eine geringere Dampfmenge absorbiert. Die Wärmequelle wird auf das gleiche Temperaturniveau wie bei der dritten Leistungssteigerung ausgenutzt.

Es ergibt sich folgende Bilanz

| | Kalina KCS 34 | Vorliegende Erfindung |
|---|---|---|
| + reiche Lösung (bei Eintritt in Hochdruckaustreiber) | 578,48 kJ/kg*24,467 kg/s = 14327 kW | 336,2 kJ/kg*33,298 kg/s = 11198 kW |
| + schwach angereicherte Lösung (bei Eintritt in den Rektifikator) | | 430,7 kJ/kg*22,195 kg/s = 9560 kW |
| + Wärmequelle (nur Hochdruckaustreiber) | +(629,55-380,08) kJ/kg*100 kg/s = +24947 kW | (629,55-366,19)kJ/kg*100kg/s = 26336 kW |
| (+ interne Wärmeübertragung arme Lösung) | | (529,76-283,66) kJ/kg* 24,651 kg/s = 6066 kW |
| (+ interne Wärmeübertragung Rektifikation) | | 391,14 kJ/kg*14,377 kg/s = 5622 kW |
| - arme Lösung (bei Austritt aus Hochdruckaustreiber) | -551,98 kJ/kg*5,473 kg/s = - 3021 kW | 283,66 kJ/kg * 24,651 kg/s = 6992 kW |
| Dampf (nach Überhitzer) | 36253 kJ/s/1879 kJ/kg =19,294 kg/s | 34982 kJ/s/1930,1 kJ/kg = 17,088 kg/s |
| Leistung | (1879-1664,4)*19,294 kg/s = 4140,4 kW | (1930,1-1588,1) kJ/kg*11,736 kg/s + (1930,1-1660,3) kJ/kg*5,352 kg/s = 5458 kW |

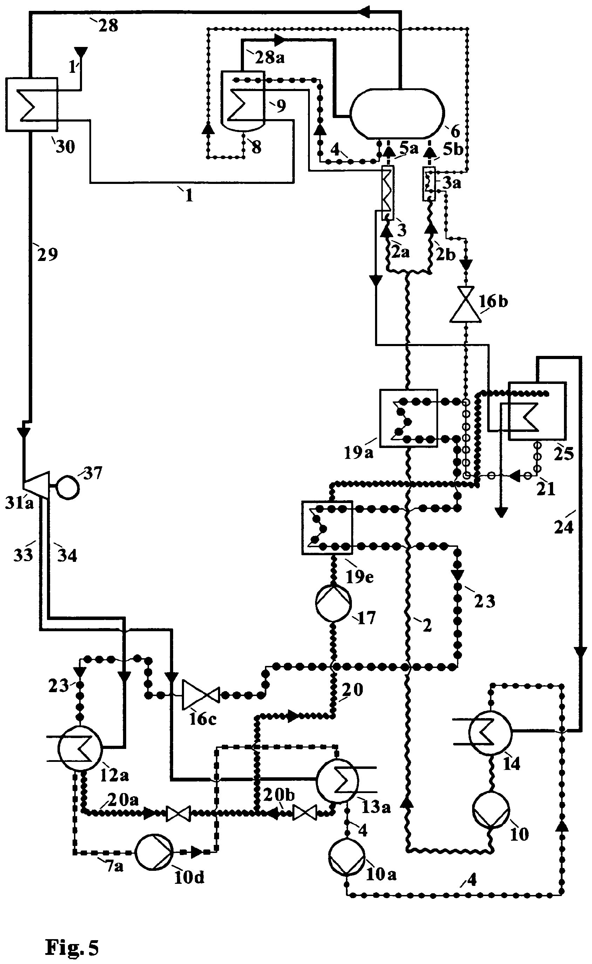

In dem fünften leistungssteigernden Verfahrensmerkmal wird die durch das vierte leistungssteigernde Verfahrensmerkmal bewirkte Reduzierung der Menge der reichen Lösung zu einer verstärkten Ausnutzung der externen Wärmequelle im Hochdruckaustreiber ausgenutzt. (Absorption und Hochdruckaustreibung nach Figur 6, Zusatzkreislauf nach Figur 5). Die Hochdruckaustreibung beginnt aus einer reichen Lösung mit einem Ammoniakgewichtsanteil von 0,6 und einer Temperatur von 76,9 °C, wobei Wärmequelle und arme Lösung bis 81,9 °C abgekühlt werden. Die ausgetriebene und überhitzte Hochdruckdampfmenge steigt auf 18,512 kg/s. Der Druck des mittleren Absorbers beträgt 3 bar. Dem Zusatz-Mitteldruckaustreiber wird eine Mischung von schwach angereicherter und angereicherter Lösung zur Austreibung zugeleitet. Deren Druck steigt auf 4,635 bar. Die Wärmequelle wird im Zusatzmitteldruckaustreiber auf 50,6 °C und zur Lösungsaufwärmung weiter bis auf 45,1 °C ausgekühlt.

Es ergibt sich folgende Bilanz

| | Kalina KCS 34 | Vorliegende Erfindung |
|---|---|---|
| + reiche Lösung (bei Eintritt in Hochdruckaustreiber) | 578,48 kJ/kg*24,467 kg/s = 14327 kW | 334,2 kJ/kg*31,077 kg/s = 10396 kW |
| + schwach angereicherte Lösung(bei Eintritt in den Rektifikator) | | 430,7 kJ/kg*22,586 kg/s = 9731 kW |
| + Wärmequelle (nur Hochdruckaustreiber) | +(629,55-380,08) kJ/kg *100kg/s = +24947 kW | (629,55-343,818)kJ/kg*100kg/s = 228573 kW |
| (+ interne Wärmeübertragung arme Lösung) | | ((534,298-259,54) kJ/kg* 20,57 kg/s = 5652 kW) |
| (+ interne Wärmeübertragung Rektifikation) | | (417,76 kJ/kg*15,523 kg/s = 6401 kW) |
| - arme Lösung (bei Austritt aus Hochdruckaustreiber) | -551,98 kJ/kg*5,473 kg/s = - 3021 kW | 259,54 kJ/kg * 35,517 kg/s = 9218 kW |
| Dampf (nach Überhitzer) | 36253 kJ/s/1879 kJ/kg =19,294 kg/s | 35792 kJ/s/1930,1 kJ/kg = 18,544 kg/s |
| Leistung | (1879-1664,4)*19,294 kg/s = 4140,4 kW | (1930,1-1588,1) kJ/kg*10,133 kg/s + (1930,1-1671,3) kJ/kg*8,339 kg/s = 5632 kW |

Bezüglich des Pumpstromaufwandes besteht zwischen Kalina-Kreislauf KCS 34 und der vorliegenden Erfindung kein merklicher Unterschied: Das Produkt aus Menge der reichen Lösung mal Druckdifferenz ist annähernd gleich.

An Hand des gewählten Beispiels einer Wärmequelle mit einer Maximaltemperatur von 150 °C wird gezeigt, dass gegenüber dem Kalina-Kreislauf mit dem der vorliegenden Erfindung maximal 36 % mehr Leistung möglich ist. Unterscheidet sich die Maximaltemperatur der Wärmequelle von der im Beispiel angesetzten 150 °C, so kann in der vorliegenden Erfindung ebenfalls auf die beschriebene energetisch optimale Zusammensetzung des Entspannungsdampfs ausgelegt werden. Das ist im Kalina-Kreislauf nicht der Fall. Der Wasseranteil im Entspannungsdampf weicht von dem optimalen Anteil von ca. 0,96 ab. Dies ist insbesondere bei höheren Maximaltemperaturen der Wärmequelle der Fall, anderseits nimmt der Leistungsvorteil der vorliegenden Erfindung, der auf der tieferen Auskühlung der Wärmequelle beruht, nur absolut zu, relativ jedoch ab.

Eine energetische Überlegenheit gegenüber dem Kalina KCS 34 ist für die vorliegende Erfindung gegeben, selbst wenn nur das erste leistungssteigernde Verfahrensmerkmal der vorliegenden Erfindung angeordnet wird, wie der Zyklus bei entsprechend ausgelegter Kraft-Wärmenutzung angewendet werden kann.

Sowohl das zweite und dritte als auch das vierte und fünfte leistungssteigernde Verfahrensmerkmal erhöhen die Wärmezufuhr an die Anlage: Hierbei ist der Wirkungsgrad der beiden letztgenannten etwa doppelt so hoch wie der beiden erstgenannten. Kann eine Wärmequelle nur begrenzt ausgekühlt werden, so ist der Fortfall des Zusatzkreislaufes - also des zweiten und dritten leistungssteigernden Verfahrensmerkmals - dann vorzuziehen, wenn zwei Dampfentnahmen aus dem Entspannungsapparat und dem mittleren und höchsten Absorptionsdruck vorgenommen werden

Schaltungen mit Zusatzkreislauf, in denen zur Hochdruckdampferzeugung nicht nur reiche Lösung, sondern auch angereicherte Lösung zugeleitet wird, sind dann energetisch vorteilhaft, wenn eine vergleichsweise geringe Menge reicher Lösung umläuft. Im Bereich der genannten zweimaligen Wärmezufuhr wird unter dieser Bedingung weniger Wärme zu Austreibung im Zusatz-Mitteldruckaustreiber benötigt, entsprechend mehr Wärme steht zu Hochdruckaustreibung zur Verfügung und eine größere Menge an Entspannungsdampf wird produziert. Noch größer ist der diesbezügliche Vorteil zu Kreisläufe, in denen nahezu reiner Ammoniakdampf erzeugt wird: Deren ausgetriebenen Dämpfe weisen eine geringere Enthalpie auf und damit höheren Umlaufwerte, gleichbedeutend höhere Mengen reicher Lösung.

Die bezügliche Leistungsminderung beträgt ca. 4 % in einem Kreislauf, der die fünf leistungssteigernden Verfahrensmerkmale grundsätzlich enthält, aber auf die Entspannung überhitzten nahezu reinen Ammoniakdampf ausgelegt ist. Weitere ca. 5 % Leistungsminderung sind auf geringere Enthalpiedifferenzen im Entspannungsvorgang zurückzuführen.

Im folgenden wird die Nutzung von Wasserdampf in einem Sorptionskraftzyklus oder in einer (Wasserdampf-)Niederdruckturbine verglichen. Der Wasserdampf hat eine Temperatur von 150° C und einen Druck von 1,98 bar. Das Speisewasser wird auf 150° C aufgewärmt..

| | Niederdruckturbine | Vorliegende Erfindung |
|---|---|---|
| + reiche Lösung (bei Eintritt in Hochdruckaustreiber) | | 424,81 kJ/kg*107,876 kg/s = 45827 kW |
| Speisewasser | 503,36 kJ/kg*11,623kg/s = 5851 kW | |
| + Wärmequelle | (2769,2-503,36) kJ/kg* 11,623kg/s = 26336 kW | (2769,2-503,36)kJ/kg*11,623kg/s = 26336 kW |
| (+ interne Wärmeübertragung arme Lösung) | | ((546,88-472,69) kJ/kg* 75,498 kg/s = 5601kW) |
| (+ interne Wärmeübertragung Rektifikation) | | 0 |
| - arme Lösung (bei Austritt aus Hochdruckaustreiber) | | 483,46 kJ/kg*94,239kg/s = 45561 kW |
| Dampf | 10,808 kg/s | 26601kJ/s/ 1951,1kJ/kg = 13,634 kg/s |
| Leistung | (2769,2-2289,6) kJ/kg* 10,123kg/s+ (2769,2-2551,7) kJ/kg* 0,233 kJ/kg+(2769,2-2453,1) kJ/kg*0,452 kg/s = 5048,6 kW | (1956,1-1595,2) kJ/kg*13,634 kg/s = 4920,4 kW |

Die Vergleichsrechnung zeigt, dass bei dieser Temperatur die Niederdruckturbine wenige Prozent höhere Leistung abgibt. Diese ist auch auf den angesetzten höheren inneren Wirkungsgrad der Wasserdampfturbine zu Beginn der Entspannung in der Niederdruckturbine (89%) im Vergleich zum Entspannungsapparat des Sorptionskraftzyklus (85%) begründet.

Bei dieser Nutzung einer Wärmequelle mit konstanter Temperatur kann der Sorptionskraftzyklus mit wenigen Apparaten errichtet und der Lösungskreislauf analog zum bekannten Sorptionskreislauf zur Kälteerzeugung ausgeführt werden.

Für die Wärmeübertragung von der armen Lösung zur Austreibung ist in der vorliegenden Erfindung mittels einem einzigen Apparat statt zu den in DE 10 2005 005 409 A1 vorgesehen mehreren Lösungsrückführungen eine technisch erprobte Lösung angeordnet. Bei Anordnung eines Zusatz-Mitteldruckkreislaufes ist in DE 10 2005 005 409 A1 eine Lösungsrückführung durch dessen Austreiber vorgesehen. In der vorliegenden Erfindung entfällt eine solche Rückführung.

Soweit in der vorliegenden Erfindung ein Überhitzer für den Entspannungsdampf angeordnet ist, liegt dessen Eintrittstemperatur deutlich höher als bei Kreisläufen, die eine Überhitzung eines nahezu reinen Ammoniakdampfes vorsehen und die Austrittstemperatur kann ohne wesentliche thermodynamische Nachteile in einem größeren Abstand zur Maximaltemperatur der Wärmequelle beendet werden. Der Bauaufwand für den Überhitzer fällt entsprechend kleiner aus.

Ohne Leistungsnachteile kann der niedrigste Absorptionsdruck oberhalb des Umgebungsdruckes angeordnet werden, womit eingedrungene Luft aus dem Lösungskreislauf nicht entfernt werden muss und gleichzeitig der Bereich hoher Unterkühlungstemperaturen im Absorptionsprozess gemieden wird.

Da keine Wärme aus einem angeordneten Rektifikator zur Aufwärmung der reichen Lösung übertragen wird, wird die arme Lösung in den meisten Auslegungsfällen stark unterkühlt in den Absorber mit dem niedrigsten Temperaturniveau eintreten. Gleichfalls tritt die Lösung in die folgenden Absorber stark unterkühlt ein. Zu Beginn des Absorptionsprozesses wird die Lösung jeweils aufgewärmt und die anfallende Sorptionswärme nicht nach außen an das Kühlmedium übertragen. Dies senkt den diesbezüglichen spezifischen Bauaufwand eines in der Regel notwendigen Rückkühlturmes um 10 bis 15 % im Vergleich zu Anlagen der Sorptionstechnik.

Bei größeren Anlagen werden nach dem Stand der Technik Absorber eingesetzt, die nach dem Rieselprinzip arbeiten. Bei diesen nimmt der Wärmeübergang mit der Rieselstärke zu. Im Falle einer Anordnung eines Hauptkreislaufes und eines Zusatzkreislaufes wird in der ersten oder den ersten beiden Absorptionsstufen eine größere Rieselmenge und eine größere Dampfmenge im Vergleich zu einem Kreislauf ohne Zusatzkreislauf absorbiert. Die größere Rieselmenge begünstigt eine Apparateanordnung mit hohen Riesellängen und damit erhöhten Rieselstärken wie Turmabsorber oder die von mehreren übereinander angeordnet liegenden Rieselabsorbern.

Mittels der Anordnung eines Mitteldruckabsorbers der unteren Druckstufe ohne Wärmeabfuhr können gegebenenfalls die Baukosten zusätzlich gesenkt werden. Die Entgasungsbreite eines solchen eingefügten Absorbers ist relativ gering. Diese Schaltungsanordnung kann bevorzugt bei nicht sehr hohen Maximaltemperaturen der externen Wärmequelle angewandt werden, da dann keine sehr große Entgasungsbreite der Summe aller drei Absorber geboten ist.

Der leistungssteigernde Effekt der Dampfentnahme ist in der vorliegenden Erfindung deutlich höher als derjenige zu einer Stufe der Speisewasseraufwärmung einer Wasserdampfturbine. Mehrere Entnahmen sind in der vorliegenden Erfindung wenig sinnvoll.

Kann der Dampf durch eine zweite Wärmequelle beheizt und noch höher überhitzt werden, so ist es zweckmäßig parallel zu der steigenden Dampftemperatur den Enddruck wieder abzusenken bis zu dem maximal vertretbaren Druck von 1,2 bar. Diese Vorgehensweise ist bei niedrigeren Maximaltemperatur einer ersten externen Wärmequelle mit großer Wärmekapazität und einer zweiten Wärmequelle mit höherer Maximaltemperatur und geringer Wärmekapazität sehr attraktiv. In solchen Fällen wird die Überhitzung des Dampfes von der zweiten Wärmequelle vorgenommen. Die spezifische Leistung pro kg Dampf steigt erheblich und damit die Anlagenleistung (z. B. um fast ein Viertel, wenn die Dampftemperatur um ca. 30 Kelvin höher als die erste Wärmequelle liegt). Die Kombination mit der vorher beschriebenen Dampfentnahme führt in vielen Anwendungsfällen zu einer Anlagensteigerung.

Im folgenden werden bevorzugte Ausführungsformen der Erfindung sowie Ausführungsformen, die nicht Teil der Erfindung sind, an Hand von Zeichnungen erläutert. Die Erfindung ist ausschließlich durch den angehängten unabhängigen Anspruch 1 definiert. Die Figuren 1 bis 10 zeigen im Einzelnen jeweils Sorptionskraftzyklen:
Fig. 1: mit einem Riesel- und zwei Blasen-Hochdruckaustreibern, 1 Absorber und einem Entspannungsapparat,
Fig. 2: mit zwei Blasen-Hochdruckaustreibern, 1 Absorber und einem Entspannungsapparat
Fig. 3: mit einem Riesel- und zwei Blasen-Hochdruckaustreibern, 2 Absorbern und einem Entspannungsapparat mit einer Dampfentnahme,
Fig. 4: mit einem Riesel- und einem Blasen-Hochdruckaustreiber, 2 Absorbern, einem Entspannungsapparat und Zusatzkreislauf,
Fig. 5: mit einem Riesel- und zwei Blasen-Hochdruckaustreibern, 3 Absorbern, einem Entspannungsapparat mit einer Dampfentnahme und Zusatzkreislauf,
Fig. 6: mit zwei Blasen-Hochdruckaustreibern, 3 Absorbern, einem Entspannungsapparat mit einer Dampfentnahme und Zusatzkreislauf,

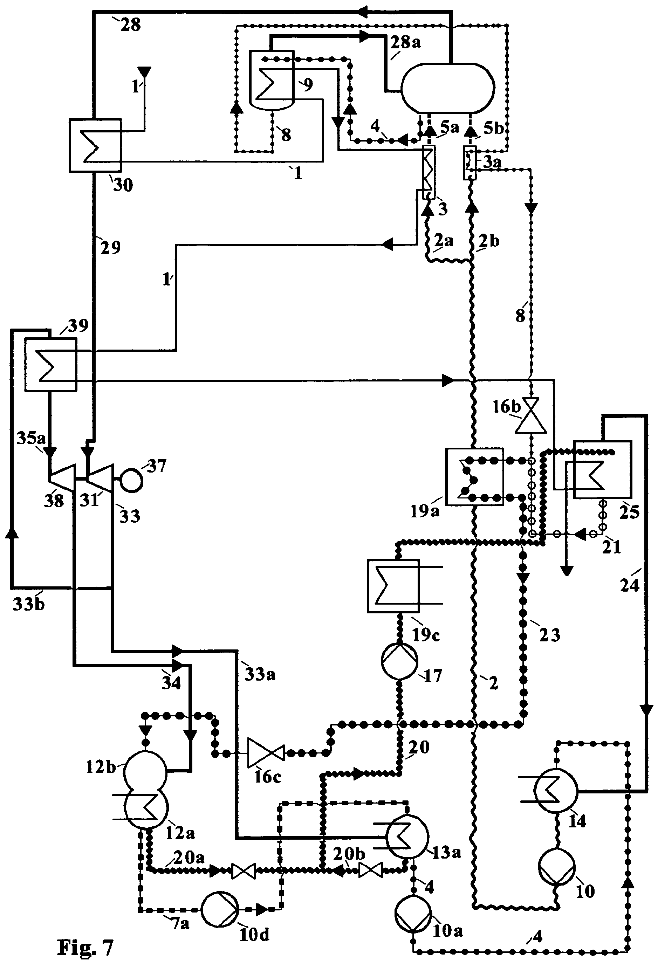

Fig. 7: mit einem Riesel- und zwei Blasen-Hochdruckaustreibern, 3 Absorbern, zwei Entspannungsapparaten, einem Zwischenüberhitzer und Zusatzkreislauf,

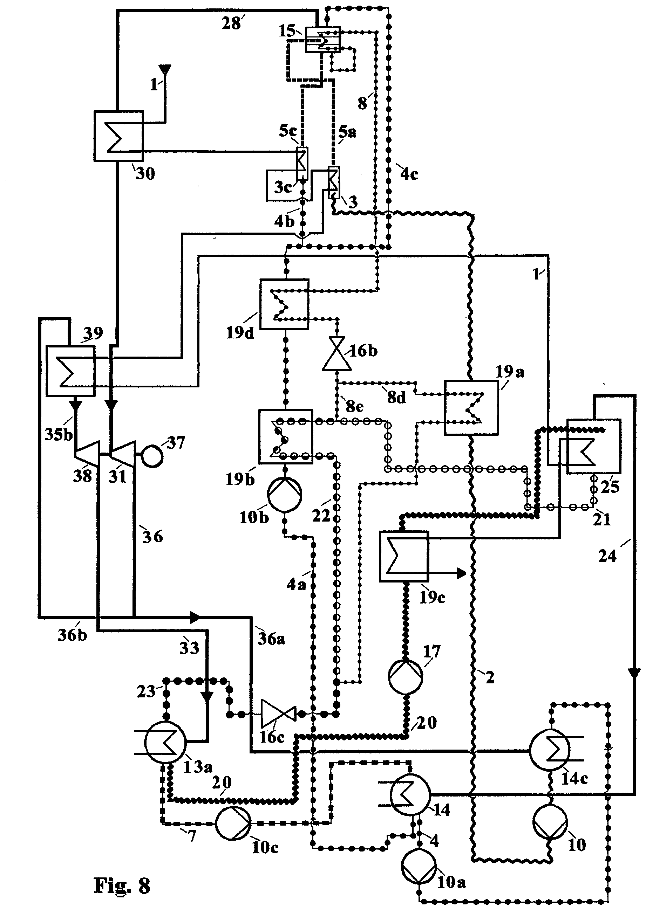

Fig. 8: mit zwei Blasen-Hochdruckaustreibern einer Destillationssäule, 3 Absorbern, zwei Entspannungsapparaten, einem Zwischenüberhitzer und Zusatzkreislauf,
Fig. 9: mit Gegendruckdampf als externe Wärmequelle,
Fig. 10: mit Gegendruckdampf als externe Wärmequelle und drei Riesel-Hochdruckaustreibern,
Fig. 11: zum Sorptionskraftzyklus vorgeschaltete Gegendruckturbine im Vergleich zur Kondensationsturbine im T,s-Diagramm und
Fig. 12: entspricht Fig. 9 mit Gegendruckdampf als externe Wärmequelle mit parallel geschalteter Kälteanlage.

In der Fig.1 ist ein Absorptionskraftzyklus dargestellt - der im Folgenden als Hauptkreislauf ("HK") bezeichnet wird - und es wird die Steuerung der Zusammensetzung des Hochdruckdampfes vor der Entspannung erläutert. Zur Steuerung wird eine spezifische Gestaltung der Hochdruckaustreibung getroffen. Diese wird in einigen der folgenden Figuren mittels abweichenden Apparatekombinationen ausgeführt. Der Kreislauf wird mit dem bekannten binären Zweistoffpaar Ammoniak als Arbeitsmittel und Wasser als Sorptionsmittel betrieben.

Entspannter Mitteldruckdampf (32) wird von dem Hochdruckentspannungsapparat (31) einem unter nahezu demselben Druck stehenden Mitteldruckabsorber (14) zugeleitet. Das Druckniveau wird hier mit Mitteldruck bezeichnet. Im Mitteldruckabsorber (14) wird der Mitteldruckdampf (32) unter Wärmeabgabe von der armen Lösung (8) (arm an Arbeitsmittel) absorbiert. Die abzuführende Wärme wird an ein Kühlmedium übertragen. Hierfür wird bei dem Zweistoffgemisch Wasser und Ammoniak in der Regel Kühlwasser verwendet. Der Kühlkreislauf ist hier und in den folgenden Figuren nicht dargestellt. Die arme Lösung wird von einem ersten Hochdruckaustreiber (9) über einen ersten Lösungswärmetauscher (19a) zugeleitet. Vor der Absorption wird die arme Lösung (8) mittels der ersten Drossel (16a) von Hochdruckniveau auf Absorberdruck abgesenkt.

Durch die Absorption entsteht eine reiche Lösung (2). Die reiche Lösung (2) wird mittels einer ersten Lösungspumpe (10) auf das Druckniveau der Hochdruckaustreiber gebracht. Die reiche Lösung (2) wird über den Weg eines ersten Lösungswärmetauschers (19a) zu den zweiten und dritten Hochdruckaustreibern (3, 3a) geleitet.

In der höchsten Temperaturstufe ist ein erster Hochdruckaustreiber (9) angeordnet, der entsprechend dem bekannten Rieselaustreibungsprinzip ausgelegt ist, wobei in bekannter Weise ausdampfende Lösung und ausgetriebener Dampf im Gegenstrom geführt werden und ein erster Teilstrom Hochdruckdampf (28a) von Ammoniak und Wasser erzeugt wird und wobei die zugeführte Lösung nicht vollständig verdampft wird, sondern eine arme Lösung (8) aus dem heißen Teil des Hochdruckaustreibers (9) entnommen wird. Dem ersten Hochdruckaustreiber (9) wird ein Hauptstrom (4) angereicherte Lösung von einem Separator (6) zur Austreibung zugeleitet. Der erste Hochdruckaustreiber (9) wird von einem ersten Teilstrom (1a) der externen Wärmequelle beheizt. Dieser wird von dem Vollstrom der externen Wärmequelle (1) abgetrennt. Nach dem ersten Hochdruckaustreiber (9) werden beide Teilströme (1 a, 1 b) der externen Wärmequelle wieder vereint und einem zweiten Hochdruckaustreiber (3) zugeleitet. Die Menge des ersten Teilstroms (1a) der externen Wärmequelle wird so bemessen, dass im ersten Hochdruckaustreiber (9) der Temperaturabstand zu Beginn und am Ende der Austreibung zwischen dem ersten Teilstrom (1a) der externen Wärmequelle und dem Hauptstrom (4) angereicherter Lösung gering wird.

In der nächsthöchsten Temperaturstufe sind ein zweiter (3) und dritter Hochdruckaustreiber (3a) angeordnet, die entsprechend dem bekannten Blasenaustreibungsprinzip ausgelegt sind, wobei in bekannter Weise ausdampfende Lösung und ausgetriebener Dampf im Parallelstrom geführt werden und jeweils ein Zweiphasengemisch (5a, 5b) von Ammoniak und Wasser erzeugt wird. Die Führung der indirekt Wärme abgebenden Medien wird im Gegenstrom zu den ausdampfenden Teilströmen reicher Lösungen (2a, 2b) vorgenommen.

Der zweite Hochdruckaustreiber (3) wird von der externen Wärmequelle (1), der dritte Hochdruckaustreiber (3a) von der armen Lösung (8) beheizt. Dem zweiten Hochdruckaustreiber (3) wird ein erster Teilstrom reicher Lösung (2a), dem dritten Hochdruckaustreiber (3a) wird ein erster Teilstrom reicher Lösung (2b) zur Austreibung zugeleitet. Diese zwei Teilströme werden durch die Aufteilung der reichen Lösung (2) nach dem ersten Lösungswärmetauscher (19a) in mehrere Teilströme erzeugt. Die Bemessung der Teilströme (2a, 2b) geschieht entsprechend des wirtschaftlich verwertbaren Wärmeinhalts der den beiden Hochdruckaustreibern (3, 3a) zugeleiteten Heizmedien (Wärmequellen).

Der erste Teilstrom des Zweiphasengemisches (5a) wird vom zweiten Hochdruckaustreiber (3), der zweite Teilstrom des Zweiphasengemisches (5b) wird vom dritten Hochdruckaustreiber (3a) jeweils in den Separator (6) geleitet und in diesem in einen Hauptstrom (4) angereicherte Lösung und in einen zweiten Teilstrom Hochdruckdampf (28b) getrennt.

Der zweite (3) und dritte Hochdruckaustreiber (3a) werden so groß dimensioniert, dass der Temperaturabstand zwischen austreibender externer Wärmequelle (1) bzw. armer Lösung (8) und eintretender Teilströme (2a, 2b) reicher Lösung gering wird. Die Menge der reichen Lösung (2) wird so bemessen, dass der Hochdruckdampf (28) auf einen energetisch günstigen Wassergewichtsanteil eingestellt wird, vorzugsweise von ca. 6 %.

Dieser zweite Teilstrom (28b) Hochdruckdampf und der separierte Hauptstrom (4) angereicherte Lösung besitzen die gleiche Gleichgewichtslinie und von ihm wird auch die Gleichgewichtslinie des ersten Teilstroms (28a) Hochdruckdampf festgelegt, so dass beide Teilströme Hochdruckdampf (28a, 28b) grundsätzlich auf den gleichen Wassergewichtsanteil eingestellt werden.

Die beiden Teilströme (28a, 28b) werden vereint als Hochdruckdampf (28) einem Überhitzer (30) zugeleitet. Im Überhitzer wird der Hochdruckdampf (28) zumindest geringfügig überhitzt oder soweit überhitzt, dass der Dampfanteil am Ende der Entspannung oberhalb einer Tropfenschlaggrenze im Entspannungsapparat bleibt.

Vom Überhitzer wird der überhitzte Hochdruckdampf (29) einem Hochdruckentspannungsapparat (31) zugeleitet und dort unter Abgabe mechanischer Arbeit entspannt. Diese wird mittels Generator (37) in Strom umgewandelt. Im Hochdruckentspannungsapparat (31) wird zuerst überhitzter Dampf, dann nach Überschreiten des Sattdampfpunktes, Nassdampf entspannt.

Die externe Wärmequelle (1) wird zur indirekten Wärmeabgabe durch den Überhitzer (30) geleitet, danach wie beschrieben in zwei Teilströme geteilt. Nach Wärmeabgabe im ersten Hochdruckaustreiber (9) wird die wiedervereinte externe Wärmequelle (1) durch den zweiten Hochdruckaustreiber (3) geleitet.

Die aus dem ersten Hochdruckaustreiber (9) abgezogene arme Lösung (8) wird zur Wärmeabgabe zunächst durch den dritten Hochdruckaustreiber (3a), dann durch den ersten Lösungswärmetauscher (19a) geleitet. In diesem wird die reiche Lösung (2) im Gegenstrom erwärmt, wobei deren Temperatur noch unterhalb deren Siedetemperatur bleibt.

Es werden in den folgenden Figuren grundsätzlich nur die Veränderungen der Kreislaufschaltungen gegenüber bereits dargestellten beschrieben.

In der Figur 2 entfällt der erste Hochdruckaustreiber (9). Die beiden Hochdruckaustreiber (3, 3a) nach dem Prinzip der Blasenaustreibung werden so ausgelegt, dass die Austrittstemperatur der Zweiphasengemische (5a, 5b) nahe an die Eintrittstemperatur der wärmeabgebenden Medien (1, 8) liegt.

Aus dem Separator (6) tritt ein Hochdruckdampf mit einem höheren Wassergewichtsanteil (27) aus, der höher als das energetische Optimum ist. Die Einstellung auf das energetische Optimum findet in einem Rektifikator (18) statt, in dessen Boden der Hochdruckdampf mit einem höheren Wasseranteil (27) eingeleitet wird. Der Rektifikator (18) ist auf eine Teilrektifikation ausgelegt.

Zu dieser Teilrektifikation wird ein zweiter Teilstrom reicher Lösung (2c) in den oberen kalten Teil des Rektifikators (18) eingeleitet. Dieser Teilstrom (2c) wird nach dem ersten Wärmetauscher (19a) von der reichen Lösung (2) abgetrennt und ist damit bereits zumindest annähernd auf Siedetemperatur vorgewärmt. Im Rektifikator (18) findet ein Stoff- und Wärmeaustausch zwischen dem eingeleiteten zweiten Teilstrom reicher Lösung (2c) und dem von unten zugeleiteten Hochdruckdampf (27) statt, der - wie bekannt - bewirkt, dass ein Teil dieses Dampfes kondensiert. Der kondensierte Dampf wird - wie bekannt - als Rücklauflösung aus dem Rektifikator (18) abgezogen. Die freiwerdende Rektifikationswärme bewirkt, abweichend zur Betriebsweise eines einzigen Kreislaufes, bei dem Arbeitsmittelflüssigkeit zugeführt und verdampft wird, dass auch aus dem zweiten Teilstrom reicher Lösung (2c) Arbeitsmitteldampf ausgetrieben und die Lösung dieses Teilstromes erwärmt wird. Der zweite Teilstrom reicher Lösung (2c) wird zur Aufnahme der Rektifikationswärme dimensioniert. Diese arme Lösung bildet zusammen mit dem Rektifikationsrücklauf den verstärkten Rücklauf (26), der am Boden des Rektifikators (18) abgezogen und in den Separator (6) eingeleitet wird.

Die aus dem Separator (6) abgezogene arme Lösung (8) wird zur Wärmeabgabe wie in der Figur 1 zunächst durch den dritten Hochdruckaustreiber (3a), dann durch den ersten Lösungswärmetauscher (19a) geleitet.

Am Kopf des Rektifikators tritt Hochdruckdampf (28) aus, der auf einen für die Leistung des Entspannungsapparates günstigen Wassergewichtsanteil - vorzugsweise auf 6 Prozent - über die Menge des zugeleiteten zweiten Teilstroms reicher Lösung (2c) eingestellt wird. Der Hochdruckdampf (28) wird vom Rektifikator (18) einem Überhitzer (30) zugeleitet.

Die externe Wärmequelle (1) wird zur indirekten Wärmeabgabe nacheinander durch den Überhitzer (30) und den zweiten Hochdruckaustreiber (3) und einem dritten Wärmetauscher (19d) geführt, so dass die reiche Lösung bis auf Austreibertemperatur aufgewärmt wird.

Zu dem Mitteldruckabsorber (14) ist in Figur 3 ein Niederdruckabsorber (13) zur Absorption von Niederdruckdampf (33) eingefügt. Aus dem Niederdruckabsorber (13) wird ein Hauptstrom (4) angereicherter Lösung entnommen und mittels zweiter Lösungspumpe (10a) auf Mitteldruckniveau angehoben und dem Mitteldruckabsorber (14) zugeleitet. Die arme Lösung (8) wird in der ersten Drossel (16a) auf Niederdruck abgesenkt und dem Niederdruckabsorber (13) zur Absorption des Niederdruckdampfes zugeleitet.

Der Hochdruckentspannungsapparat (31a) mit Entnahme wird auf Entspannung eines Teildampfstromes vom Hochdruckniveau über das Mitteldruckniveau hinaus bis auf Niederdruckniveau ausgelegt. Niederdruckdampf (33) wird vom Hochdruckentspannungsapparat mit Entnahme (31 a) dem Niederdruckabsorber (13) zugeleitet. Mitteldruckdampf (32) wird dem Hochdruckentspannungsapparat (31 a) auf Mitteldruckniveau entnommen und dem Mitteldruckabsorber (14) zugeleitet.

Zusätzlich zum Hauptstrom (4) angereicherter Lösung wird dem Niederdruckabsorber ein erster Teilstrom angereicherter Lösung (4a) entnommen. Dieser wird mittels dritter Lösungspumpe (10b) auf Hochdruckniveau gebracht und dann in dem zweiten Lösungswärmetauscher (19b) aufgewärmt. Der erste Teilstrom (4a) angereicherter Lösung wird vereint mit dem Hauptstrom (4) angereicherter Lösung als Vollstrom angereicherter Lösung (4d) dem ersten Hochdruckaustreiber (9) zugeleitet.

Dem ersten Hochdruckaustreiber (9) wird ein erster (8a) und ein zweiten Teilstrom (8b) armer Lösung entnommen. Der erste Teilstrom (8a) armer Lösung wird dem dritten Hochdruckaustreiber (3a) als Heizmedium zugeleitet. Nach dem dritten Hochdruckaustreiber (3a) wird vom ersten Teilstrom (8a) armer Lösung ein dritter Teilstrom (8c) armer Lösung abgetrennt. Der verbleibende vierte Teilstrom (8d) armer Lösung wird durch den ersten Lösungswärmetauscher (19a) zur Wärmeabgabe geleitet. Der zweite Teilstrom (8b) armer Lösung wird mit dem dritten Teilstrom (8c) armer Lösung zum fünften Teilstrom (8e) armer Lösung vereint.

Im zweiten Lösungswärmetauscher (19b) wird die Aufwärmung des ersten Teilstroms (4a) angereicherter Lösung auf Siedetemperatur im Gegenstrom zum fünften Teilstrom (8e) armer Lösung durchgeführt. Die Menge dieses fünften Teilstroms (8e) armer Lösung ist entsprechend zu dimensionieren, wobei das Mengenverhältnis des zweiten Teilstroms (8b) und des dritten Teilstroms (8c) zueinander so zu bestimmen ist, dass die Temperatur des fünften Teilstroms (8e) armer Lösung geringfügig oberhalb der Siedetemperatur des ersten Teilstroms (4a) angereicherter Lösung liegt. Nach der Wärmeabgabe im ersten (19a) bzw. zweiten Lösungswärmetauschers (19b) werden vierter (8d) und fünfter (8e) Teilstrom armer Lösung wieder vereint zur armen Lösung (8).

Zur Feinabstimmung der Wassergewichtsanteile wird der erste Teilstrom Hochdruckdampf (28a) ebenfalls in den Separator (6) eingeleitet. Der Hochdruckdampf (28) wird vom ersten Hochdruckaustreiber (9) einem Überhitzer (30) zugeleitet. Im Überhitzer wird der Hochdruckdampf (28) erheblich, gegebenenfalls bis auf einen wirtschaftlich vertretbaren Abstand zur Maximaltemperatur der externen Wärmequelle (1), überhitzt.

In der Figur 4 ist eine weitere Lösung zur Hochdruckaustreibung dargestellt sowie ein Zusatzkreislauf ("ZK") zu dem zwischen Hochdruckaustreibung und Absorption betriebenen Kreislauf eingefügt.

Der Zusatzkreislauf wird zwischen Niederdruck- und Mitteldruckniveau betrieben. Es wird ein ZK-Mitteldruckaustreiber (25) eingefügt und der auf Mitteldruck arbeitende Absorber zu einem HK/ZK-Niederdruckabsorber (13a) vergrößert. Diesem wird auch die reiche ZK-Lösung (20) entnommen, wobei der Hauptstrom (4) und der erste Teilstrom (4a) angereicherter Lösung des Hauptkreislaufes einen gleich hohen Wasseranteil aufweisen. Die reiche ZK-Lösung (20) wird mittels ZK-Lösungspumpe (17) auf Mitteldruckniveau angehoben und über einen ersten ZK-Lösungswärmetauscher (19c) in den ZK-Mitteldruckaustreiber (25) zur Austreibung eingeleitet. Der ZK-Mitteldruckaustreiber ist als Rieselaustreiber dargestellt.

Im ZK-Mitteldruckaustreiber (25) wird ZK-Mitteldruckdampf (24) und arme ZK-Lösung (21) gebildet. Die arme ZK-Lösung (21) wird mit dem vierten Teilstrom armer Lösung (8d) des Hauptkreislaufes vereint. Dieser wird vorher mittels zweiter Drossel (16b) des Hauptkreislaufes auf Mitteldruck abgesenkt. Die so gebildete Teilstrom armer HK/ZK-Lösung (22) wird zur Wärmeabgabe durch den ersten Lösungswärmetauscher (19a) geleitet: In diesem wird im Gegenstrom zur reichen Lösung (2) des Hauptkreislaufes aufgewärmt. Anschließend wird der Teilstrom armer HK/ZK-Lösung (22) durch einen ersten ZK-Lösungswärmetauscher (19c) geleitet und weiter abgekühlt. Dann wird der Teilstrom armer HK/ZK-Lösung (22) mittels HK/ZK-Drossel (16c) auf Niederdruck gebracht und in den HK/ZK-Niederdruckabsorber (13a) zur Absorption eingeleitet.

Haupt- und ZK-Kreislauf arbeiten wie folgt zusammen: Der ZK-Mitteldruckdampf (24) wird dem Mitteldruckabsorber (14) des Hauptkreislaufes zur Absorption zugeleitet, eine Zuleitung von Dampf aus dem Hauptkreislauf findet nicht statt. Der Druck des ZK-Mitteldruckaustreibers (25) und des Mitteldruckabsorbers (14) ist auf einander abgestimmt festzulegen. Im Unterschied zu der in der Figur 3 dargestellten Schaltung wird der gesamte Dampf im Hochdruckentspannungsapparat (31) auf Niederdruck entspannt und dem HK/ZK-Niederdruckabsorber (13a) eine vergrößerte Menge Niederdruckdampf (33) zugeleitet. Umlaufende Lösungsmengen, Wärmezufuhr und Größe der Apparate sind im Haupt- und ZK-Kreislauf so abzustimmen, dass im Mitteldruckabsorber (14) die vorzugebende Anreicherung zur reichen Lösung (2) eintritt.

ZK-Mitteldruckdampf (24) hat einen geringeren Wasseranteil als der Dampf der aus dem Hauptkreislauf ohne die Installation des Zusatzkreislaufes dem Mitteldruckabsorber (14) zur Absorption zugeführt werden müsste. Da Haupt- und Zusatzkreislauf im gemeinsamen HK/ZK-Niederdruckabsorber (13a) verknüpft sind, ist mittels abgeführten Lösungsmengen (4, 4a, 21) ein Ausgleich der Wasseranteile für jeden Kreislauf herstellbar.

Im Unterschied zu den Darstellungen in den Figuren 1 bis 3 wird die reiche Lösung (2) ungeteilt vom Mitteldruckabsorber (14) über den ersten Lösungswärmetauscher (19a) einen vierten Hochdruckaustreiber (3b) zugeleitet und in ihm mittels Gegenstromstromführung von wärmeliefernden Medien und ausdampfender Lösung ein Zweiphasengemisch (5) erzeugt. Hierbei wird zuerst Wärme von der externen Wärmequelle (1) und dann von der armen Lösung (8) zugeführt. Das Zweiphasengemisch (5) wird im Separator (6) zugeleitet und dort in einen dritten Teilstrom (8c) armer Lösung und einen Hochdruckdampf mit höherem Wassergewichtsanteil (27) getrennt.

Die Menge der reichen Lösung (2) wird so gering bemessen, dass im vierten Hochdruckaustreiber (3b) der Temperaturabstand am Ende der Austreibung zwischen externer Wärmequelle (1) und eintretender reicher Lösung (2) gering wird. Der Hochdruckdampf mit höherem Wassergewichtsanteil (27) wird vom Separator (6) zu einem Rektifikator (18) geleitet und zur Teilrektifikation in dessen Boden eingeleitet.

Der erste Teilstrom angereicherter Lösung (4a) wird nach dem zweiten Lösungswärmetauscher (19a) geteilt. Ein zweiter Teilstrom angereicherte Lösung (4b) wird dem ersten Hochdruckaustreiber (9) zugeleitet. Der dritte Teilstrom angereicherter Lösung (4c) wird in den Kopf des Rektifikators (18) eingeleitet.

Der erste Teilstrom Hochdruckdampf (28a) wird in den oberen Teil des Rektifikators (18) eingeleitet. Der erste Teilstrom angereicherter Lösung (4) wird nach dem zweiten Lösungswärmetauscher (19b) in zwei Teilströme (4b, 4c) geteilt. Ein zweiter Teilstrom angereicherte Lösung (4b) wird dem ersten Hochdruckaustreiber (9) zugeleitet, der wie beschrieben nach dem Rieselprinzip arbeitet. Der dritte Teilstrom angereicherte Lösung (4c) wird in den Kopf des Rektifikators (18) eingeleitet.

Der im ersten Hochdruckaustreiber (9) erzeugte erste Teilstrom Hochdruckdampf (28a) wird in den oberen Teil des Rektifikators (18) eingeleitet. Die Menge der angereicherten Lösung (4b) wird mindestens so groß festgelegt, dass der Temperaturabstand zwischen Wärme abgebendem Medium (1) und eintretenden Lösungen (4b) im ersten Hochdruckaustreiber (9) gering wird.

Vom Rektifikator (18) wird der Hochdruckdampf (28) dem Überhitzer (30) zugeleitet. Aus dem ersten Hochdruckaustreiber (9) wird nur der zweite Teilstrom armer Lösung (8b) entnommen und mit dem der aus dem Separator (6) ablaufende sechste Teilstrom armer Lösung (8f) zur armen Lösung (8) vereint und diese zur Wärmeabgabe dem vierten Hochdruckaustreiber (3b) zugeleitet.

Der vierte (8d) und der fünfte (8e) Teilstrom armer Lösung wird durch Teilung der armen Lösung (8) nach dessen Wärmeabgabe im vierten Hochdruckaustreiber (3b) gebildet. Der fünfte (8e) Teilstrom armer Lösung wird durch den zweiten Lösungswärmetauscher (19b) geleitet und danach mittels erster Drossel (16a) auf Niederdruck abgesenkt und dem HK/ZK-Niederdruckabsorber (13a) zugeleitet. Bei sehr hohen Maximaltemperaturen der Wärmequelle entfällt die Teilung der armen Lösung und die Vereinigung eines vierten Teilstroms armer Lösung (8d) mit der armen ZK-Lösung (21), sodass die Wärmeabgabe im zweiten Lösungswärmetauscher (19b) durch arme Lösung (8) und im ersten Lösungswärmetauscher (19a) durch arme ZK-Lösung erfolgt. Ebenso kann der ZK-Lösungswärmetauscher entfallen.

Die Absorption im HK/ZK-Niederdruckabsorber (13a) ist so auszulegen, dass die angereicherte Lösung mindestens den Ammoniakanteil wie eine Lösung besitzt, die im Gleichgewicht zum Hochdruckdampf (28) stünde, so dass die in Figur 2 beschriebene Übertragung der Rektifikationswärme umsetzbar ist. In der Schaltung der Figur 4 wird jedoch die Rektifikationswärme durch die Zuleitung angereicherter Lösung statt reicher Lösung vollständig im oberen Temperaturbereich genutzt, der zur Dampferzeugung mit nur einmaliger Wärmezufuhr gekennzeichnet ist. Da ein Teil der Wärme des in den Rektifikator eingeleiteten Hochdruckdampfes mit höherem Wassergewichtsanteil (27) an den ebenfalls eingeleiteten ersten Teilstrom Hochdruckdampf (28a) übertragen wird, ist die verbleibende Rektifikationswärme verhältnismäßig gering.

Die externe Wärmequelle (1) wird zur Wärmeabgabe nacheinander durch Überhitzer (30), ersten Hochdruckaustreiber (9), kälteren Teil des zweien Hochdruckaustreibers (3) und ZK-Mitteldruckaustreiber (25) geleitet.

Entsprechend der Festlegung des ersten Hochdruckaustreibers (9) auf das Rieselprinzip wird die Gleichgewichtslinie des austretenden ersten Teilstroms Hochdruckdampf (28a) durch die eintretende angereicherte Lösung bestimmt. Über deren Zusammensetzung kann der erste Teilstrom Hochdruckdampf (28a) auf einen gleich hohen oder auf einen niedrigeren Wassergewichtsanteil als der energetisch optimale eingestellt werden. Im letzteren Fall wird der Wassergewichtsanteil des ersten Teilstroms Hochdruckdampf (28a) im Rektifikator erhöht, wobei die Menge des zur Rektifikation eingeleiteten dritten Teilstroms angereicherte Lösung (4c) reduziert wird. Die Temperatur der externen Wärme beim Austritt aus dem ersten Hochdruckaustreiber (9) und damit auch beim Eintritt in den vierten Hochdruckaustreiber (3b) sinkt. Die arme Lösung (8) kann im vierten Hochdruckaustreiber (3b) tiefer ausgekühlt werden. Entsprechend der Festlegung des vierten Hochdruckaustreibers (3b) auf das Blasenaustreibungsprinzip sowie die hintereinandergeschaltete Wärmeübertragung von armer Lösung (8) und externer Wärmequelle (1) liegt der Wassergewichtsanteil höher als der energetisch optimale oder kann zumindest so eingestellt werden. Er wird im Rektifikator herabgesetzt. Es besteht somit eine begrenzte Bandbreite für die Einstellung des Wassergewichtsanteils des ersten Teilstroms Hochdruckdampf (28a) ohne dass der Wassergewichtsanteil des Hochdruckdampfes (28) unterhalb des energetisch optimalen absinkt. Um den Wassergewichtsanteil im ersten Teilstrom Hochdruckdampf (28a) niedriger einzustellen als den energetisch optimalen, wird der Wassergewichtsanteil des zugeleiteten Hauptstroms (4) angereicherter Lösung entsprechend abgesenkt. Hierdurch verringert sich grundsätzlich die Entgasungsbreite des Mitteldruckabsorbers (14). Es verschiebt sich die Wärmezufuhr zwischen einmaliger und zweimaliger Wärmezufuhr zu Gunsten der ersten. Diese Maßnahme ist für die Auslegung des Entspannungsapparates ohne Anzapfung in Bezug auf die Anlagenleistung günstig, auch wenn der Druck des Niederdruckabsorbers und damit der Enddruck der Entspannung steigt. Der Bauaufwand für den zugefügten Zusatzkreislauf wird reduziert.

In der Figur 5 ist zu dem Mitteldruckabsorber (14) und dem HK/ZK-Niederdruckabsorber (13a) ein HK/ZK-Niedrigstdruckabsorber (12a) zur Absorption von Niedrigstdruckdampf (34) eingefügt. Aus dem HK/ZK-Niedrigstdruckabsorber (12a) wird schwach angereicherte HK/ZK-Lösung (7a) entnommen und mittels HK/ZK-Lösungspumpe (10d) auf Niederdruckniveau angehoben und dem HK/ZK-Niederdruckabsorber (13a) zugeleitet. Die arme HK/ZK-Lösung (23) wird in der HK/ZK-Drossel (16c) auf Niedrigstdruck abgesenkt und dem HK/ZK-Niedrigstdruckabsorber (12a) zur Absorption des Niedrigstdruckdampfes (34) zugeleitet. Der zwischen Mitteldruck und Niedrigstdruck betriebene Kreislauf wird als Zusatzkreislauf bezeichnet.

Der Hochdruckentspannungsapparat (31a) mit Entnahme wird auf Entspannung eines Teildampfstromes vom Hochdruckniveau über das Niederdruckniveau hinaus bis auf Niedrigstdruckniveau ausgelegt. Niedrigstdruckdampf (34) wird vom Hochdruckentspannungsapparat (31 a) dem HK/ZK-Niedrigstdruckabsorber (12a) zugeleitet. Niederdruckdampf wird auf Niederdruckniveau entnommen und dem HK/ZK-Niederdruckabsorber (13a) zugeleitet.

Die reiche ZK-Lösung (20) wird aus zwei Teilströmen gebildet. Der erste Teilstrom reicher ZK-Lösung (20a) wird dem HK/ZK-Niedrigstdruckabsorber (12a), der zweite Teilstrom reicher ZK-Lösung (20b) wird dem HK/ZK-Niederdruckabsorber (13a) entnommen. Deren Mengenverhältnis zueinander kann zur Anpassung an die Kühlwassertemperatur geregelt werden: Steigen diese gegenüber dem Auslegungspunkt, so wird der Absorptionsdruck des Mitteldruckaustreibers (25) und des Mitteldruckabsorbers (14) angehoben, die Menge des zweiten Teilstroms reicher ZK-Lösung (20b) erhöht, die Menge des ersten Teilstroms reicher ZK-Lösung (20a) verringert, so dass die Absorptionsendtemperatur im Mitteldruckabsorber (14) gleich bleibt. Durch diese Regelung bleibt die gesamte Entgasungsbreite der Anlage bei Hochdruckaustreibung und Absorption gleich.

Die arme Lösung (8) wird ungeteilt mittels zweiter Drossel (16b) von Hochdruck auf das Mitteldruckniveau der armen ZK-Lösung abgesenkt. Die armen Lösungen von Haupt- und Zusatzkreislauf werden zur armen HK/ZK-Lösung (23) vereint. Diese Lösung wird nacheinander zur Wärmeabgabe durch den ersten Lösungswärmetauscher (19a) und ZK-Lösungswärmetauscher (19c) geleitet und mittels HK/ZK-Drossel (16c) auf Niedrigstdruck abgesenkt. Anschließend wird die arme HK/ZK-Lösung (23) dem HK/ZK-Niedrigstdruckabsorber (12a) zur Absorption zugeleitet.

In der Figur 5 ist eine Zuleitung angereicherter Lösung vom HK/ZK-Niederdruckabsorber (13a) zum ersten Hochdruckaustreiber (9) nicht angeordnet. Die damit erreichte Vereinfachung ist in dieser Schaltung nicht mit erheblicher Minderung der Anlagenleistung verbunden.

In der in Figur 6 dargestellten Schaltung ist eine solche Zuleitung angereicherter Lösung angeordnet. Der erste Hochdruckaustreiber (9) entfällt in dieser Schaltung. Dadurch wird dem zweiten Hochdruckaustreiber (3) von der externen Wärmequelle (1) Wärme in einem höheren Temperaturniveau übertragen. Wie in der Schaltung der Figur 2 wird dem zweiten (3) und dem dritten (3a) Hochdruckaustreiber jeweils ein Teilstrom (2a, 2b) reicher Lösung zur Austreibung zugeleitet. Die Menge der beiden Teilströme reicher Lösung (2a, 2b) wird so gering bemessen, dass im zweiten und dritten Hochdruckaustreiber (3, 3a) der Temperaturabstand zu Beginn und am Ende der Austreibung zwischen externer Wärmequelle (1) und eintretender reicher Lösung (2a, 2b) bzw. Zweiphasengemisch (5a, 5b) gering wird. Im Hochdruckdampf mit höheren Wassergewichtsanteil (27) liegt dieser deutlich höher als in der Schaltung der Figur 4, entsprechend wird bei der Rektifikation eine deutlich größere Wärmemenge umgesetzt. Diese wird wie in der Figur 4 beschrieben an einen ersten Teilstrom (4a) angereicherter Lösung übertragen, wobei deren Menge erheblich größer zu dimensionieren ist.

In der Figur 6 wird die Überhitzung durch eine zweite externe Wärmequelle (100) höherer Temperatur vorgenommen. Die externe Wärmequelle (1) wird zur erstmaligen Wärmeübertragung dem zweiten Hochdruckaustreiber (3) zugeleitet.

Abweichend zur Figur 5 wird die arme Lösung (8) nach dem Separator (6) in zwei Teilströme (8a, 8b) geteilt. Der erste Teilstrom armer Lösung (8a) wird zur Wärmeabgabe durch den dritten Hochdruckaustreiber (3a), der zweite Teilstrom armer Lösung (8b) durch einen dritten Lösungswärmetauscher (19d) geleitet und anschließend wieder vereint. Die vereinte arme Lösung (8) wird mittels zweiter Drossel (16b) von Hochdruck auf das Mitteldruckniveau der armen ZK-Lösung (21) abgesenkt. Durch Teilung werden der vierte (8d) und der fünfte (8e) Teilstrom armer Lösung gebildet. Der vierte Teilstrom armer Lösung (8d) wird wie in der Figur 4 beschrieben mit der armen ZK-Lösung (21) vereint. Der so gebildete Teilstrom armer HK/ZK-Lösung (23) wird wie in der Figur 4 durch zwei Lösungswärmetauscher (19a, 19c) geleitet und mit dem fünften (8e) Teilstrom zur armen HK/ZK-Lösung (23) vereint. Der fünfte (8e) Teilstrom armer Lösung ist zuvor wie in Figur 4 beschrieben durch den zweiten Lösungswärmetauscher (19b) geleitet worden. Die arme HK/ZK-Lösung (23) wird wie in Figur 5 beschrieben über die HK/ZK-Drossel (16c) dem HK/ZK-Niedrigstdruckabsorber (12a) zugeleitet.

Der erste Teilstrom (4a) reicher Lösung wird nach Aufwärmung im zweiten Lösungswärmetauscher (19b) im vierten Lösungswärmetauscher (19d) im Gegenstrom zum zweiten Teilstrom armer Lösung weiter aufgewärmt.

Der Niederdruckabsorber ohne Wärmeabfuhr an den Kühlkreislauf wird als Trockenabsorber (13b) ausgeführt. Die zugeführte schwach angereicherte Lösung ist nach der Druckerhöhung durch die vierte HK-Lösungspumpe (10c) auf dem Niederdruckniveau unterkühlt. Die im Trockenabsorber frei werdende Absorptionswärme führt zu einer Temperaturerhöhung der sich anreichernden Lösung. Nähert sich deren Temperatur deren theoretischen Absorptionstemperatur, so hört die Absorption auf. Die dem Trockenabsorber (13b) zuzuleitende Menge des Niederdruckdampfes (32) ist insoweit begrenzt, dass die sich bei seiner Absorption einstellende Maximaltemperatur unterhalb der theoretischen Absorptionstemperatur des Trockenabsorbers (13b) bleibt.

In der Figur 7 wird in Anlehnung an die Schaltung der Figur 5 eine Verfahrensausführung dargestellt, die Entspannung statt mit einem Hochdruckentspannungsapparat (31a) mit einer Entnahme mit zwei hintereinander geschalteten Apparaten (31, 38) beinhaltet: Im Hochdruckentspannungsapparat (31) wird von Hochdruck bis Niederdruck entspannt. Der austretende Niederdruckdampf (33) wird geteilt. Ein erster Teilstrom (33a) Niederdruckdampf wird gegenüber der Schaltung der Figur 5 dem HK/ZK-Niederdruckdruckabsorber (13a) zur Absorption zugeleitet. Der zweite Teilstrom (33b) Niederdruckdampf wird einem Zwischenüberhitzer (39) zugeleitet und geringfügig überhitzt. Im Zwischenüberhitzer (39) werden auch oder überwiegend Flüssigkeitstropfen wieder verdampft. Der austretende geringfügig überhitzte Niederdruckdampf (35a) wird einem Niederdruckentspannungsapparat (38) zugeleitet und in ihm auf Niedrigstdruck entspannt. Der austretende Niedrigstdruckdampf (34) wird einem HK/ZK-Niedrigstdruckabsorber (12a) mit vorgeschaltetem HK/ZK-Niederdrucktrockenabsorber (12b) zur Absorption zugeleitet.

Im ersten Lösungswärmetauscher (19a) wird der Teilstrom armer HK/ZK-Lösung (22) bis nahe an die Austrittstemperatur der reichen Lösung (2) heruntergekühlt. Der Teilstrom armer HK/ZK-Lösung (22) tritt damit deutlich unterkühlt in die Niedrigstabsorption ein. Um eine Gefährdung der Kühlrohre durch möglicherweise zu erwartende Implosionsschläge zu vermeiden, wird ein HK/ZK-Niederdrucktrockenabsorber (12b) - ein Apparat ohne Kühlrohre (z. B. ein Sprühabsorber) - angeordnet, in dem die Lösung bis nahe an die theoretische Absorptionstemperatur erwärmt wird. Der ZK-Mitteldruckdampf (24) wird dem Mitteldruckabsorber (14) zur Absorption zugeleitet.

Die in dieser Verfahrensvariante angeordnete Zuführung der Dämpfe von den Entspannungsapparaten zu den Absorbern des mittleren und niedrigsten Druckniveaus ist für mittlere und niedrige Maximaltemperaturen der Wärmequelle und damit mittlere Eingangsdrücke zu Entspannungsbeginn in Kombination von Radialturbinen besonders geeignet. Diese Verfahrensvariante kann auch ohne Überhitzer (30) ausgeführt werden.

In der Figur 8 wird im Hochdruckentspannungsapparat (31) von Hochdruck nur bis zum oberen Mitteldruck entspannt. Der austretende obere Mitteldruckdampf (36) wird geteilt. Ein erster Teilstrom (36a) des oberen Mitteldruckdampfes wird einem Absorber (14c) des oberen Mitteldrucks zur Absorption zugeleitet. Der zweite Teilstrom (36b) des oberen Mitteldruckdampfes wird, wie zur Figur 7 grundsätzlich beschrieben, dem Zwischenüberhitzer (39) zugeleitet und dort in geringfügig überhitzten oberen Mitteldruckdampf (35b) überführt. Er wird dem Niederdruckentspannungsapparat (38) zugeleitet und in ihm auf Niederdruck entspannt. Der austretende Niederdruckdampf (33) wird dem HK/ZK-Niederdruckabsorber (13a) zur Absorption zugeleitet. Der ZK-Niederdruckdampf (24) wird dem Mitteldruckabsorber (14) zur Absorption zugeleitet.

Die in dieser Verfahrensvariante angeordnete Zuführung der Dämpfe von den Entspannungsapparaten zu den Absorbern mit dem höchsten und niedrigsten Druckniveau ist für hohe Maximaltemperaturen der Wärmequelle und damit hohe Eingangsdrücke zu Entspannungsbeginn in Kombination von Radialturbinen besonders geeignet. Zur Austreibung sind zwei Austreiber nach dem Blasenprinzip angeordnet. Wie in den Schaltungen der Figuren 1, 3 und 4 wird die Hochdruckaustreibung nach zwei Temperaturstufen differenziert. In der oberen Temperaturstufe beheizt die externe Wärmequelle (1) einen fünften Hochdruckaustreiber (3c). Ihm wird der zweite Teilstrom angereicherter Lösung (4b) zugeleitet. Aus dem fünften Hochdruckaustreiber (3c) tritt ein erster Teilstrom Zweiphasengemisch (5a) von armer Lösung und Dampf aus, wobei der Dampfanteil annähernd im Gleichgewichtspunkt zur Maximaltemperatur der externen Wärmequelle (1) steht. Die externe Wärmequelle (1) beheizt anschließend einen zweiten Hochdruckaustreiber (3). Ihm wird die reiche Lösung (2) zugeleitet. Aus dem zweiten Hochdruckaustreiber (3) tritt ein erster Teilstrom Zweiphasengemisch (5a) von armer Lösung und Dampf aus, wobei der Dampfanteil annähernd im Gleichgewichtspunkt zur angereicherten Lösung steht.

Der erste Teilstrom Zweiphasengemisch (5a) und der dritte Teilstrom Zweiphasengemisch (5c) werden einer Destillationssäule (15) zugeleitet, wobei in deren Boden der dritte Teilstrom Zweiphasengemisch (5c) und in deren mittleren Teil der erste Teilstrom Zweiphasengemisch (5a) eingeleitet werden. Die arme Lösung (8) wird durch die Destillationssäule (15) zur indirekten Wärmeabgabe rückgeführt, während eine solche Wärmenutzung in einer Rektifikationssäule (18) nicht vorgesehen ist. Ein von der armen Lösung (8) beheizter Hochdruckaustreiber entfällt ebenso wie die Installation eines Separators. In den Kopf der Destillationssäule (15) wird der dritte Teilstrom angereicherter Lösung (4c) eingeleitet. In der Destillationssäule findet eine Trennung der eingeleiteten Zweiphasengemische in arme Lösung (8) und Hochdruckdampf (28), eine Teilrektifikation der abgetrennten Dämpfe und Austreibung aus dem eingeleiteten dritten Teilstrom angereicherter Lösung (4c) sowie eine Aufwärmung der nicht verdampften armen Lösung statt. Hierbei werden durch Rektifikation freiwerdende Wärme und die von der armen Lösung (8) übertragene Wärme genutzt. Die Menge des dritten Teilstroms angereicherter Lösung (4c) wird so bemessen, dass durch Teilrektifikation der austretende Hochdruckdampf (28) ein für die Leistung des Gesamtanlage günstigen Wassergewichtsanteil von ca. 6 % aufweist.

Der austretende Hochdruckdampf (28) wird von der Destillationssäule (15) zum Überhitzer (30) geleitet. Die externe Wärmequelle (1) wird nacheinander durch den Überhitzer (30), den fünften Hochdruckaustreiber (3c), zweiten Hochdruckaustreiber (3), den ZK-Niederdruckaustreiber (25b) und ZK-Lösungswärmetauscher (19c) geleitet.

Die Absorption wird in drei Druckstufen mit folgenden zusätzlichen Abweichungen zur Figur 7 vorgenommen: Die arme HK/ZK-Lösung (23) wird dem HK/ZK-Niederdruckabsorber (13a) zur Absorption zugeleitet. Die reiche ZK-Lösung (20) wird nur dem HK/ZK-Niederdruckabsorber (13a) entnommen.

Im Unterschied zur Figur 4 wird der Teilstrom armer HK/ZK-Lösung (22) durch den zweiten Lösungswärmetauscher (19b), der fünfte Teilstrom (8e) armer Lösung durch den ersten Lösungswärmetauscher (19a) geleitet. Im Unterschied zur Figur 6 wird durch den vierten Lösungswärmetauscher (19d) die arme Lösung (8) zur Aufwärmung des ersten Teilstroms angereicherter Lösung (4a) geleitet. Dieser wird anschließend in den zweiten (4b) und dritten (4c) Teilstrom angereicherter Lösung geteilt.

In Fig. 9 ist dem Sorptionskraftzyklus in der Darstellung der Figur 2 ein Clausius-Rankine-Kreislauf mit dem Einstoff Wasser vorgeschaltet. Dieser ist nur in seiner einfachsten Ausführung dargestellt. Solche Wärmequellen nutzen Hochtemperatur-Wärmequellen unterschiedlichster Art und Kapazität. In den meisten Anwendungsfällen wird der aus der Wärmequelle erzeugte überhitzte Wasserdampf in mehrstufigen Turbinen bis nahe Umgebungsdruck entspannt. Ist ein Wärmeabnehmer für Prozessdampf vorhanden wird dieser Wärmebedarf gedeckt indem der Entspannungsprozess vor Eintritt in die Niederdruckturbine abgebrochen wird. Die Mitteldruckturbine wird entsprechend der benötigten Prozesstemperatur im passenden Gegendruck gefahren. Sorptionskälteanlagen werden häufig aus einer solchen Wärmequelle beheizt. Besteht Bedarf für zwei Prozesstemperaturniveaus, kann die höhere Temperatur durch Entnahme von Dampf aus der Turbine auf einem höheren Druckniveau gedeckt werden..

Eine Hochtemperatur-Wärmequelle (101) beheizt einen Dampferzeuger (110). Der erzeugte Wasser-Dampf (102) wird in einer Gegendruckturbine (103) teilentspannt. Die mechanische Energie wird in einem Generator (106) in elektrische Energie umgewandelt. Der Gegendruckturbine (103) wird Gegendruckdampf (104) und Anzapfdampf (108) entnommen. Der Gegendruckdampf (104) wird dem ersten Hochdruckaustreiber (9) und der Anzapfdampf (108) dem Überhitzer (30) zur Wärmeabgabe zugeleitet. Das nach erfolgter Wärmeabgabe gebildete Kondensat (105) wird dem Dampferzeuger zugeleitet und, unterstützt durch eine Speisewasserpumpe (107), wieder auf Austreiberdruck gebracht.

In der Figur 10 sind drei Hochdruckaustreiber (9, 9a, 9b) angeordnet, die nach dem Rieselprinzip arbeiten. Im Unterschied zur Darstellung der Figur 1 wird dem ersten Hochdruckaustreiber (9) nicht nur der Hauptstrom angereicherter Lösung (4), sondern auch ein zweiter Teilstrom angereicherter Lösung (4b) zur Austreibung zugeleitet. Die ablaufende arme Lösung wird als erster Teilstrom armer Lösung (8a) einem sechsten Hochdruckaustreiber (9a) zur Beheizung zugeleitet. In diesem wird das Rieselprinzip entsprechend der Beschreibung des ersten Hochdruckaustreibers (9) ausgeführt, wobei der ausgetriebene dritte Teilstrom Hochdruckdampf (28c) am Kopf austritt. Er weist einen Wassergewichtsanteil entsprechend der Gleichgewichtslinie zum eingeleiteten fünften Teilstrom angereicherter Lösung (4f) auf. Der am Boden des sechsten Hochdruckaustreibers (9a) austretende zweite Teilstrom armer Lösung wird in dieser Darstellung mit dem ersten Teilstrom armer Lösung (8a) erst nach dessen Wärmeabgabe im Hochtemperaturbereich zur armen Lösung (8) vereint.

Die Aufteilung des ersten Teilstroms angereicherter Lösung (4a) in drei Teilströme (4b, 4e, 4f) erfolgt nach der Wärmeaufnahme im zweiten Lösungswärmetauscher (19b).

Im Unterschied zur Darstellung der Figur 1 beheizt in der zweithöchsten Temperaturstufe die externe Wärmequelle einen sechsten Hochdruckaustreiber (9a). Diesem wird die reiche Lösung (2) zur Austreibung zugeleitet. Im sechsten Hochdruckaustreiber (9a) ist das Rieselprinzip so angeordnet, dass ausdampfende Lösung und ausgetriebener Dampf gleichgerichtet geführt werden. Auch diese Arbeitsweise ist bekannt. Am Boden dieses Austreibers werden Lösung und Dampf getrennt, wobei der Wasseranteil des zweiten Teilstroms des Hochdruckdampfes (28b) im Gleichgewicht zum ablaufenden Hauptstrom angereicherter Lösung (4) steht. Die dergestaltige Anordnung der drei Hochdruckaustreiber (9, 9a, 9b) bewirkt, dass der Wasseranteil der drei Teilströme Hochdruckdampf (28a, 28b, 28c) zumindest annähernd gleich hoch ist.

Wie in der Darstellung der Figur 9 wird für den Sorptionskraftzyklus Wasserdampf aus einer Gegendruckturbine (103) als externe Wärmequelle genutzt. Im Unterschied zur Darstellung der Figur 9 wird dem ersten Hochdruckaustreiber (9) auf gleichem Temperaturniveau wie dem Überhitzer (30) Wärme zugeführt. Hierzu wird der Entnahmedampf (108) geteilt und ein erster Teilstrom Entnahmedampf (108a) dem Überhitzer (30) und ein zweiter Teilstrom Entnahmedampf (108b) dem ersten Hochdruckaustreiber (9) zugeleitet. Auf dem zweithöchsten Temperaturniveau wird einen sechsten Hochdruckaustreiber (9a) angeordnet, der im Unterschied zum entsprechenden Hochdruckaustreiber der Figur 1 nach dem Rieselprinzip arbeitet. Diesem wird die reiche Lösung (2) zur Austreibung zugeleitet. Im sechsten Hochdruckaustreiber (9a) ist das Rieselprinzip so angeordnet, dass ausdampfende Lösung und ausgetriebener Dampf gleichgerichtet geführt werden. Auch diese Arbeitsweise ist bekannt. Am Boden dieses Austreibers werden Lösung und Dampf getrennt, wobei der Wasseranteil des zweiten Teilstroms des Hochdruckdampfes (28b) im Gleichgewicht zum ablaufenden Hauptstrom angereicherter Lösung (4) steht. Die dergestaltige Anordnung der drei Hochdruckaustreiber (9, 9a, 9b) bewirkt, dass der Wasseranteil der drei Teilströme Hochdruckdampf (28a, 28b, 28c) zumindest annähernd gleich hoch ist.

Wie bereits in der Figur 9 dargestellt, ist als weiterer Verfahrensschritt die Einleitung von Lösung in den Überhitzer (30) hinzugefügt. In der Figur 9 ist dies ein zweiter Teilstrom reicher Lösung (2c), in der Figur 10 ein vierter Teilstrom angereicherter Lösung (4e). Diese werden im Überhitzer (30) verdampft und zusammen mit dem Hochdruckdampf (28) überhitzt. Dem Überhitzer (30) wird verstärkt Wärme zugeführt. Die zugeleiteten Lösungen werden in dem jeweiligen Lösungswärmetauscher (19a bzw. 19b) aufgewärmt. Mit diesem Verfahrensschritt wird der Wasseranteil des überhitzten Hochdruckdampfs (29) gegenüber dem Hochdruckdampf (28) erhöht. Mit diesem Verfahrensschritt kann ein für die Anlagenleistung optimaler Wasseranteil des zu entspannenden Dampfes eingestellt werden, wobei diese Einstellung gegenüber den bisher dargestellten Verfahrensschritten in manchen Anwendungsfällen einfacher zu bewerkstelligen ist. Insbesondere entfällt folgender Zielkonflikt: Die optimale Aufteilung der Entgasungsbreite auf mehrere Austreiber und die optimale Aufteilung auf mehrere Absorber ist nicht gleich, die Aufteilung ist jedoch über die umlaufenden Lösungen aneinander gebunden. Ebenso wird der Gegensatz von möglichst niedrigem Wassergewichtsanteil für den in Figur 9 dargestellten Absorptionskreislauf ("AK") zur Erzeugung von Kälte und deutlich höherem Wassergewichtsanteil für den Sorptionskraftzyklus aufgehoben. Alle drei Teilströme angereicherter Lösung (4b, 4e 4f) werden durch Auftrennung des ersten Teilstroms angereicherter Lösung (4a) nach dessen Aufwärmung im zweiten Lösungswärmetauscher (19b) vorgenommen.

In der Figur 11 wird im T,s-Diagramm für Wasser eine Schaltung eines Kondensationskreislaufes mit einem Gegendruckkreislauf verglichen. Als ein wesentliches Auslegungskriterium ist die höchste Dampftemperatur (hier 500 °C) angesetzt. Dies hat zur Folge, dass die Entspannung im Kondensationskreislauf mit einer höheren Entropiezahl als im Gegendruckkreislauf durchgeführt werden muss. Der Gegendruckkreislauf kann mit einem höheren Verdampfungsdruck (hier 55 bar statt 35 bar) ausgelegt werden. Der Unterschied bezüglich Wirkungsgrad und Anlagenleistung kann anhand der Flächengröße A und C sowie B beurteilt werden. In einer Kombination von Wasserdampf - Gegendruckkreislauf und Sorptionskraftzyklus wird die Fläche B durch Übertragung der Kondensationswärme an den Sorptionskraftzyklus nahezu gleichwertig in Leistung umgesetzt. In der Graphik ist der Effekt der Speisewasseraufwärmung bis zur Gegendrucktemperatur durch die Flächen D und D* dargestellt. Da die Flächengröße C deutlich größer ist als die Fläche A (hier doppelt so groß), weist die Kombination einen besseren Wirkungsgrad als der Kondensationskreislauf auf.
In der Figur 12 wird ein Absorptionskreislauf ("AK") zur Erzeugung von Kälte auf tiefem Temperaturniveau ausgelegt. Hierzu wird der in Figur 9 dargestellte Hauptkreislauf um einen Absorptionskreislauf erweitert. Dieser ist parallel zur Krafterzeugung geschaltet. Der erste Hochdruckaustreiber(9) wird zu einem HK/AK-Austreiber (9a), der erste Lösungswärmetauscher (19a) zu einem Lösungswärmetauscher (19e), der Niederdruckabsorber (13) zu einem HK/AK-Niederdruckabsorber (13c) erweitert. Entsprechend der gemeinsamen Kreislaufteile wird vom HK/AK-Niederdruckabsorber (13c) - unterstützt von der HK/AK-Lösungspumpe (10e) - zum HK/AK-Austreiber (9a) reiche HK/AH-Lösung (11) und vom HK/AK-Austreiber (9a) arme HK/AK-Lösung (23) geleitet. Der im HK/AK-Austreiber (9a) ausgetriebene HK/AK-Hochdruckdampf (28e) wird mittels eines Dreiwegeventils (50) in einen ersten Teilstrom Hochdruckdampf (28a) und AK- Hochdruckdampf (28b) geteilt. Der erste Teilstrom Hochdruckdampf (28a) wird dem Überhitzer (30) und der AK- Hochdruckdampf (28b) einem AK-Kondensator (42) zugeleitet und dort unter Wärmeabgabe verflüssigt. Die nahezu reine AK- Ammoniakflüssigkeit (46) wird einem AK-Flüssigkeitsnachkühler (43) zugeleitet und im Gegenstrom zum AK-Ammoniakniederdruckdampf (33c) abgekühlt, anschließend mittels AK-Drossel (47) auf Niederdruck abgesenkt und dann einem AK-Verdampfer (44) zugeleitet. Im AK-Verdampfer (44) verdampft die AK-Ammoniakflüssigkeit (46) unter Wärmeaufnahme bei einem Temperaturniveau deutlich unterhalb des Umgebungsniveaus. Der AK-Ammoniakniederdruckdampf (33c) wird durch den AK-Flüssigkeitsnachkühler (43) geleitet und dann als überhitzter AK- Ammoniakniederdruckdampf (33d) dem HK/AK-Niederdruckabsorber (13c) zur Absorption zugeleitet.

**Bezugszeichenliste**

| | | | |
|---|---|---|---|
| HK | Hauptkreislauf | 6 | Separator |
| ZK | Zusatzkreislauf | 7 | schwach angereicherte Lösung |
| AK | Absorptionskreislauf | 7a | schwach angereicherte HK/ZK-Lösung |
| 1 | Wärmequelle | 8 | arme HK-Lösung |
| 1a | erster Teilstrom der Wärmequelle | 8a | erster Teilstrom armer Lösung |
| 1b | zweite Teilstrom der Wärmequelle | 8b | zweiter Teilstrom armer Lösung |
| 2 | reiche Lösung | 8c | dritter Teilstrom armer Lösung |
| 2a | Hauptstrom reicher Lösung | 8d | vierter Teilstrom armer Lösung |
| 2b | erster Teilstrom reicher Lösung | 8e | fünfter Teilstrom armer Lösung |
| 2c | zweiter Teilstrom reicher Lösung | 8f | sechster Teilstrom armer Lösung |
| 2e | vierter Teilstrom reicher Lösung | 9 | erster Hochdruckaustreiber |
| 3 | zweiter Hochdruckaustreiber | 9a | siebter Hochdruckaustreiber |
| 3a | dritter Hochdruckaustreiber | 10 | erste Lösungspumpe |
| 3b | vierter Hochdruckaustreiber | 10a | zweite Lösungspumpe |
| 3c | fünfter Hochdruckaustreiber | 10b | dritte Lösungspumpe |
| 4 | Hauptstrom angereicherter Lösung | 10c | vierte Lösungspumpe |
| 4a | erster Teilstrom angereicherter Lösung | 10d | HK/ZK-Lösungspumpe |
| 4b | zweiter Teilstrom angereicherter Lösung | 10e | HK/AK-Lösungspumpe |
| 4c | dritter Teilstrom angereicherter Lösung | 11 | reiche HK/AK-Lösung |
| 4d | Vollstrom angereicherter Lösung | 12a | HK/ZK-Niedrigstdruckabsorber |
| 4e | vierter Teilstrom angereicherter Lösung | 12b | HK/ZK-Niederdrucktrockenabsorber |
| 4f | fünfter Teilstrom angereicherter Lösung | 13 | Niederdruckabsorber |
| 5 | Zweiphasengemisch | 13a | HK/ZK-Niederdruckabsorber |
| 5a | erster Teilstrom Zweiphasengemisch | 13b | Trockenabsorber |
| 5b | zweiter Teilstrom Zweiphasengemisch | 13c | HK/AK-Niederdruckabsorber |
| 5c | dritter Teilstrom Zweiphasengemisch | 14 | Mitteldruckabsorber |
| 14c | Absorber des oberen Mitteldrucks | 28c | dritter Teilstrom Hochdruckdampf |
| 15 | Destillationssäule | 28e | HK/AK-Hochdruckdampf |
| 16a | erste Drossel | 29 | überhitzter Hochdruckdampf |
| 16b | zweite Drossel | 30 | Überhitzer |
| 16c | HK/ZK-Drossel | 31 | Hochdruckentspannungsapparat |
| 16d | HK/AK-Drossel | 31a | Hochdruckentspannungsapparat mit Entnahme |
| 17 | ZK-Lösungspumpe | | |
| 18 | Rektifikator | 32 | Mitteldruckdampf |
| 19a | erster Lösungswärmetauscher | 32a | erster Teilstrom Mitteldruckdampf |
| 19b | zweiten Lösungswärmetauscher | 32b | zweiter Teilstrom Mitteldruckdampf |
| 19c | ZK-Lösungswärmetauscher | 33 | Niederdruckdampf |
| 19d | dritter Lösungswärmetauscher | 33a | erster Teilstrom Niederdruckdampf |
| 19e | AK-Lösungswärmetauscher | 33b | zweiter Teilstrom Niederdruckdampf |
| 20 | reiche ZK-Lösung | 33d | überhitzter AK-Ammoniakniederdruckdampf |
| 20a | erster Teilstrom reicher ZK-Lösung | 34 | Niedrigstdruckdampf |
| 20b | zweiter Teilstrom reicher ZK-Lösung | 35 | überhitzter Mitteldruckdampf |
| 20c | reiche AK-Lösung | 35a | überhitzter Niederdruckdampf |
| 21 | arme ZK-Lösung | 35b | überhitzter oberer Mitteldruckdampf |
| 22 | HK/ZK-Lösung | 36 | oberer Mitteldruckdampf |
| 23 | arme HK/ZK-Lösung | 36a | erster Teilstrom des oberen Mitteldruckdampfes |
| 24 | ZK-Mitteldruckdampf | | |
| 25 | ZK-Mitteldruckaustreiber | 36b | zweiter Teilstrom des oberen Mitteldruckdampfes |
| 26 | verstärkter Rücklauf | | |
| 27 | Hochdruckdampf mit höherem Wassergewichtsanteil | 37 | Generator |
| | | 38 | Niederdruckentspannungsapparat |
| 28 | Hochdruckdampf | 39 | Zwischenüberhitzer |
| 28a | erster Teilstrom Hochdruckdampf | 42 | AK-Kondensator |
| 28b | zweiter Teilstrom Hochdruckdampf | 43 | AK-Flüssigkeitsnachkühler |
| 44 | AK-Verdampfer | 105a | erster Teilstrom Kondensat |
| 46 | AK-Ammoniakflüssigkeit | 105b | zweiter Teilstrom Kondensat |
| 47 | AK-Drossel | 105c | dritter Teilstrom Kondensat |
| 50 | Dreiwegeventil | 106 | zweiter Generator |
| 101 | Hochtemperatur-Wärmequelle | 107 | Speisewasserpumpe |
| 102 | Wasser-Dampf | 108 | Anzapfdampf |
| 103 | Gegendruckturbine | 108a | erster Teilstrom Anzapfdampf |
| 104 | Gegendruckdampf | 108b | zweiter Teilstrom Anzapfdampf |
| 105 | Kondensat | 110 | Dampferzeuger |

## Patentansprüche

1. Arbeitsverfahren eines Sorptionskraftzyklus für ein Zweistoffgemisch aus Ammoniak und Wasser, mit Hauptkomponenten eines im folgenden als Hauptkreislauf bezeichneten Zyklus:
- mindestens ein Hochdruckaustreiber (3, 3a, 3 b, 3 c, 9) zur Austreibung eines Hochdruckdampfes (28) aus Ammoniak und Wasser aus einer zugeleiteten reichen Lösung (2, 2a, 2b),
- ein Überhitzer (30) zur Überhitzung eines Hochdruckdampfes (28) aus Ammoniak und Wasser,
- ein Arbeit leistenden Hochdruckentspannungsapparat (31) zur Entspannung des Hochdruckdampfes (28),
- mindestens ein Absorber (12a, 13, 14, 14a, 14b) zur Absorption des entspannten Dampfes,
- mindestens ein ersten Lösungswärmetauscher (19a) zur Wärmeübertragung von armer Lösung (8) an die reiche Lösung (2),
- mindestens eine Wärmequelle,
**dadurch gekennzeichnet, dass**
- die arme Lösung (8) einem auf dem niedrigsten Druckniveau arbeitenden Absorber (12a, 12b, 13, 13a, 14) zur Absorption zugeleitet wird, und die arme Lösung (8) auf dieses Druckniveau mit Hilfe mindestens einer Drossel (16a) abgesenkt wird,
- die reiche Lösung (2) von einem auf dem höchsten Druckniveau arbeitenden Absorber (14, 14a, 14b) mittels erster Lösungspumpe (10) auf das Hochdruckniveau angehoben wird,
- und die reiche Lösung (2) mindestens einem Hochdruckaustreiber (3, 3b, 9) zur Austreibung zugeleitet wird,
- Hochdruckdampf (28) zumindest in einem zweiten Abschnitt der Entspannung unter Teilkondensation entspannt wird,
- wobei der Taupunkt bei einem Druck von 9,5 bis 15 bar - vorzugsweise 13,5 bar - überschritten wird und zumindest ein Teil des Hochdruckdampfes (28) bis auf einen Enddruck von 1,1 bis 4 bar - vorzugsweise 1,5 bis 2 bar - entspannt wird,
- und der zu entspannende Hochdruckdampf (28) auf einen Wassergewichtsanteil von 3 bis 10 Prozent - vorzugsweise 6 % - eingestellt wird,
- und dass der Wassergewichtsanteil im Hochdruckdampf (28) und gegebenenfalls dessen Überhitzungstemperatur so gelegt wird, dass der Dampfanteil am Ende der Entspannung oberhalb einer Tropfenschlaggrenze im Hochdruckentspannungsapparat (31) bleibt,
- wobei der Wassergewichtsanteil mindestens mit einem der folgenden Verfahrensschritten eingestellt wird:
- mindestens in einem Hochdruckaustreiber (9) wird Hochdruckdampf im Gleichgewichtspunkt zur eintretenden Lösung und in mindestens einem Hochdruckaustreiber (3, 9b) Hochdruckdampf im Gleichgewichtspunkt zur austretenden Lösung erzeugt,
- der Wassergewichtsanteil des Hochdruckdampfes wird in einem Rektifikator (18) festgelegt, wobei der Rektifikator auf eine Teilrektifikation ausgelegt ist,
- der Wassergewichtsanteil des Hochdruckdampfes wird durch Zuleitung und Verdampfung von Lösung in den Überhitzer (10, 11) eingestellt.

2. Arbeitsverfahren nach Anspruch 1, **dadurch gekennzeichnet, dass** folgende Apparate zusätzlich eingefügt sind:
• eine zweite Lösungspumpe (10a), und zu einem Mitteldruckabsorber (14) ein Niederdruckabsorber (13) zur Absorption von Niederdruckdampf (33),
und dass zusätzlich folgende spezifische Verfahrensschritte eingefügt sind:
• das Druckniveau des Niederdruckabsorbers (13) niedriger eingestellt ist als dasjenige des Mitteldruckabsorbers (14),
• und aus dem Niederdruckabsorber (13) ein Hauptstrom angereicherte Lösung (4) mittels zweiter Lösungspumpe (10a) auf das Mitteldruckniveau des Mitteldruckabsorbers (14) angehoben und diesem zur Absorption zugeleitet wird, und der im Niederdruckabsorber (13) zu absorbierende Niederdruckdampf (33) im Hochdruckentspannungsapparat (31, 31 a) auf annähernd gleiches Druckniveau entspannt und dem Niederdruckabsorber (13) zur Absorption zugeleitet wird.

3. Arbeitsverfahren nach Anspruch 2, **dadurch gekennzeichnet, dass** folgende Apparate zusätzlich eingefügt sind:
eine dritte Lösungspumpe (10b),
ein zweiter Lösungswärmetauscher (19b),
und dass zusätzlich folgende spezifische Verfahrensschritte eingefügt sind:
• dass nach dem Niederdruckabsorber (13) die ablaufende angereicherte Lösung in den Hauptsrom (4) angereicherte Lösung und einen ersten Teilstrom (4a) angereicherter Lösung geteilt wird,
• dass ein erster Teilstrom (4a) angereicherter Lösung mittels dritter Lösungspumpe (10b) auf Hochdruckniveau angehoben wird, und
dass der erste Teilstrom (4a) angereicherter Lösung über den Weg des zweiten Lösungswärmetauschers (19b) zur Austreibung geleitet wird,
• dass die arme Lösung (8) nach der Wärmeabgabe zur Hochdruckdampferzeugung in einen vierten (8d) und fünften Teilstrom (8e) armer Lösung geteilt wird, und aus der armen Lösung (8) vor der Wärmeabgabe in den Lösungswärmetauscher (19a, 19b) ein vierter (8d) und ein fünfter Teilstrom (8e) armer Lösung gebildet wird,
• dass der erste Teilstrom (4a) angereicherter Lösung im zweiten Lösungswärmetauscher (19b) im Gegenstrom von einem fünften Teilstrom (8e) armer Lösung aufgewärmt wird,
• dass die reiche Lösung (2) im ersten Lösungswärmetauscher (19a) im Gegenstrom von einem vierten Teilstrom (8d) armer Lösung aufgewärmt wird,
• und dass der vierte Teilstrom (8d) armer Lösung und der fünfte Teilstrom (8e) armer Lösung nach der Durchleitung durch die Lösungswärmetauscher (19a, 19b) wieder zur armen Lösung (8) vereint werden.

4. Arbeitsverfahren nach einem der Ansprüche 1 bis 3, **dadurch gekennzeichnet, dass** Apparate zur Austreibung in folgender Ausführung eingefügt und mit folgenden spezifischen Verfahrensschritten eingesetzt werden:
• es wird ein Clausius-Rankine-Kreislauf mit dem Einstoffmedium Wasser eingefügt,
• wobei diesem Wärme auf einem deutlich höheren Temperaturniveau als dem Sorptionskraftzyklus zugeführt wird und die zugeführte Wärme zur Erzeugung mechanischer Arbeit genutzt wird,
• wobei dessen Entspannungsapparat als Gegendruckturbine (110) mit Dampfanzapfung oder Dampfentnahme ausgelegt und die Entspannung des Wasserdampfes als Gegendruck vorteilhaft oberhalb von 100 °C beendet wird,
• wobei Entnahmedampf (108) und Gegendruckdampf (104) dem Sorptionskraftzyklus zugeleitet werden und durch Kondensation des Wasserdampfes im Sorptionskraftzyklus als Wärmequelle genutzt werden,
• wobei der Entnahmedampf (108) eine höhere Temperatur als der Gegendruckdampf (104) hat,
• und nach erfolgter Wärmeübertragung das gebildete Wasserkondensat in den Clausius-Rankine-Kreislauf zurückgeführt wird.

5. Arbeitsverfahren nach einem der Ansprüche 1 bis 3, **dadurch gekennzeichnet, dass** die Wärmequelle folgende Eigenschaften aufweist und dass weitere Apparate zur Hochdruckaustreibung in folgender Ausführung eingefügt und weitere spezifische Verfahrensschritte eingesetzt werden:
• eine Niedertemperaturwärmequelle mit Temperaturgefälle genutzt wird,
• eingefügt ein zweiter Hochdruckaustreiber (3) mit Wärmeübertragung durch eine Wand nach dem Prinzip eines Blasenaustreibers und mit Gegenstromführung der Niedertemperaturwärmequelle (1) zum ausdampfenden Hauptstrom reicher Lösung, wodurch die Gleichgewichtslinie für einen austretenden ersten Teilstrom (5a) des Zweiphasengemischs zu Beginn der Wärmeaufnahme von der Niedertemperaturwärmequelle (1) bestimmt ist,
• eingefügt ein dritter Hochdruckaustreiber (3a) mit Wärmeübertragung durch eine Wand nach dem Prinzip eines Blasenaustreibers mit Gegenstromführung der Wärme abgebenden armen Lösung (8) zum ausdampfenden ersten Teilstrom (2b) reicher Lösung, wodurch die Gleichgewichtslinie für einen austretenden zweiten Teilstrom (5b) des Zweiphasengemischs zu Beginn der Wärmeaufnahme von der armen Lösung (8) bestimmt ist,
• eingefügt ein Separator (6),
• wobei der erste Zweiphasengemisch-Teilstrom (5a) vom zweiten Hochdruckaustreiber (3) und der zweite Zweiphasengemisch-Teilstrom (5b) vom dritten Hochdruckaustreiber (3a) zum Separator (6) geleitet wird und in diesen eingeleitet wird,
• wobei im Separator (6) die Zweiphasengemisch-Teilströme (5a, 5b) in einen Hochdruckdampf mit höherem Wasseranteil (27) und in einen Strom armer Lösung getrennt werden,
weiter ist ein auf Teilrektifikation ausgelegter Rektifikator (18) eingefügt,
• womit ein zweiter Teilstrom (2c) reicher Lösung in den Kopf des Rektifikators (18) eingeleitet wird, und der eingeleitete Hochdruckdampf (28) durch Wärmeaustausch und Massenaustausch mit dem zweiten Teilstrom (2c) reicher Lösung im Rektifikator (18) teilweise kondensiert wird und Rücklaufflüssigkeit des Hauptkreislaufes gebildet wird,
und abweichend zur Betriebsweise, bei der Ammoniakflüssigkeit zugeführt und verdampft wird, nunmehr zumindest auch aus einem zweiten Teilstrom (2c) reicher Lösung Arbeitsmitteldampf ausgetrieben und die Lösung dieses zweiten Teilstroms (2c) reicher Lösung erwärmt wird,
• wobei die Menge des zweiten Teilstroms (2c) reicher Lösung so bemessen wird, dass mittels Teilrektifikation der austretende Hochdruckdampf (28) auf einen Wassergewichtsanteil von 3 bis 8 Prozent - vorzugsweise auf 6 % - eingestellt wird,
• ein aus dem Boden des Rektifikators ablaufender verstärkter Rücklauf (26) in den Separator (6) eingeleitet wird,
• und dieser verstärkte Rücklauf zusammen mit der durch Separation abgeschiedenen Lösung als arme Lösung (8) aus dem Separator (6) austritt,
• und der Strom der Niedertemperaturwärmequelle (1) zur Wärmeübertragung zuerst durch einen Überhitzer (30), danach durch den zweiten Hochdruckaustreiber (3) geleitet wird.

6. Arbeitsverfahren nach Anspruch 1 bis 3, **dadurch gekennzeichnet, dass** die Wärmequelle folgende Eigenschaften aufweist und dass Apparate zur Hochdruckaustreibung in folgender Ausführung eingefügt und mit folgenden spezifischen Verfahrensschritten eingesetzt werden:
• eine Niedertemperaturwärmequelle (1) mit Temperaturgefälle genutzt wird,
• eingefügt ein zweiter Hochdruckaustreiber (3) mit Wärmeübertragung durch eine Wand nach dem Prinzip eines Blasenaustreibers mit Gegenstromführung von der Wärme abgebenden Niedertemperaturwärmequelle (1) zum ausdampfendem Hauptstrom reicher Lösung (2a), wodurch die Gleichgewichtslinie für einen austretenden ersten Zweiphasengemisch-Teilstrom (5a) zu Beginn der Wärmeaufnahme von der Niedertemperaturwärmequelle (1) bestimmt ist,
• eingefügt ein dritter Hochdruckaustreiber (3a) mit Wärmeübertragung durch eine Wand nach dem Prinzip eines Blasenaustreibers mit Gegenstromführung der Wärme abgebenden armen Lösung (8) zum ausdampfenden ersten Teilstrom (2b) reicher Lösung, wodurch die Gleichgewichtslinie für einen austretenden zweiten Zweiphasengemisch-Teilstrom (5b) zu Beginn der Wärmeaufnahme von der armen Lösung (8) bestimmt ist,
• eingefügt ein Separator (6),
• wobei der erste Zweiphasengemisch-Teilstrom (5a) vom zweiten Hochdruckaustreiber (3) und der zweite Zweiphasengemisch-Teilstrom (5b) vom dritten Hochdruckaustreiber (3a) zum Separator (6) geleitet wird und in diesen eingeleitet wird,
• wobei im Separator (6) die Zweiphasengemisch-Teilströme (5a, 5b) in einen Hochdruckdampf mit höherem Wasseranteil (27) und in einen Strom armer Lösung getrennt werden,
• eingefügt ein auf Teilrektifikation ausgelegter Rektifikator (18),
• wobei ein erster Teilstrom (4a) angereicherter Lösung in den Kopf des Rektifikators (18) eingeleitet wird, der eingeleitete Hochdruckdampf mit höherem Wasseranteil (27) durch Wärmeaustausch und Massenaustausch mit dem ersten Teilstrom (4a) angereicherter Lösung im Rektifikator (18) teilweise kondensiert und Rücklaufflüssigkeit des Hauptkreislaufes gebildet wird,
• und abweichend zur Betriebsweise bei dem Ammoniakflüssigkeit dem Rektifikator zugeführt und verdampft wird, nunmehr zumindest auch aus dem ersten Teilstrom (4a) angereicherter Lösung Arbeitsmitteldampf ausgetrieben und die Lösung dieses ersten Teilstroms (4a) angereicherter Lösung erwärmt wird,
• wobei die Menge des ersten Teilstroms (4a) angereicherter Lösung so bemessen wird, dass mittels Teilrektifikation der austretende Hochdruckdampf (28) auf einen Wassergewichtsanteil von 3 bis 8 Prozent - vorzugsweise auf 6 % - eingestellt wird,
• ein aus dem Boden des Rektifikators ablaufender verstärkter Rücklauf (26) in den Separator (6) eingeleitet wird, und der verstärkte Rücklauf zusammen mit der durch Separation abgeschiedenen Lösung als arme Lösung (8) aus dem Separator (6) austritt,
• und der Strom der Niedertemperaturwärmequelle (1) zur Wärmeübertragung zuerst durch einen Überhitzer (30), danach durch den zweiten Hochdruckaustreiber (3) geleitet wird.

7. Arbeitsverfahren nach einem der Ansprüche 1 oder 2, **dadurch gekennzeichnet, dass** die Wärmequelle folgende Eigenschaften aufweist und dass Apparate zur Austreibung in folgender Ausführung eingefügt und mit folgende spezifische Verfahrensschritten eingesetzt werden:
• eine Niedertemperaturwärmequelle (1) mit Temperaturgefälle genutzt wird,
• eingefügt ein zweiter Hochdruckaustreiber (3) mit Wärmeübertragung durch eine Wand nach dem Prinzip eines Blasenaustreibers mit Gegenstromführung von der Wärme abgebenden Niedertemperaturwärmequelle (1) zum ausdampfendem Hauptstrom reicher Lösung (2a), wodurch die Gleichgewichtslinie für einen austretenden ersten Zweiphasengemisch-Teilstrom (5a) zu Beginn der Wärmeaufnahme von der Niedertemperaturwärmequelle (1) bestimmt ist,
• eingefügt ein dritter Hochdruckaustreiber (3a) mit Wärmeübertragung durch eine Wand nach dem Prinzip eines Blasenaustreibers mit Gegenstromführung der Wärme abgebenden armen Lösung (8) zum ausdampfenden ersten Teilstrom (2b) reicher Lösung wodurch die Gleichgewichtslinie für einen austretenden zweiten Zweiphasengemisch-Teilstrom (5b) zu Beginn der Wärmeaufnahme armen Lösung (8) bestimmt ist,
• wobei die Mengen beider Teilströme reicher Lösung (2a, 2b) so gering ausgelegt wird, dass der Temperaturabstand zwischen der Lösung und dem Strom der Niedertemperaturwärmequelle (1) zu Beginn und Ende seiner Wärmeübertragung auf 4 bis 10 Kelvin - vorzugsweise auf 5 Kelvin - eingestellt ist,
• wobei die Aufteilung der reichen Lösung (2) in zwei Teilströme (2a, 2b) nach dem ersten Lösungswärmetauscher (19a) erfolgt,
• eingefügt ein Separator (6),
• wobei der erste Zweiphasengemisch-Teilstrom (5a) vom zweiten Hochdruckaustreiber (3) und der zweite Zweiphasengemisch-Teilstrom (5b) vom dritten Hochdruckaustreiber (3a) zum Separator (6) geleitet und in diesen eingeleitet wird,
• wobei im Separator (6) die Zweiphasengemisch-Teilströme (5a, 5b) in Hochdruckdampf (28) und einen Hauptstrom angereicherter Lösung (4) getrennt werden,
• eingefügt ein erster Hochdruckaustreiber (9) mit Wärmeübertragung durch eine Wand nach dem Prinzip eines Rieselaustreibers mit Parallelstromführung eines Wärme abgebenden ersten Teilstroms (1a) einer Niedertemperaturwärmequelle zum aus dem Hauptstrom angereicherter Lösung (4) ausgetriebenen Dampf,
• der Hauptstrom angereicherter Lösung (4) vom Separator zu dem eingefügten ersten Hochdruckaustreiber (9) zur Austreibung geleitet wird,
• wobei die Mengen des ersten Teilstroms (1a) Niedertemperaturwärmequelle so gering ausgelegt wird, dass im eingefügten ersten Hochdruckaustreiber (9) der Temperaturabstand zur Lösung zu Beginn und Ende seiner Wärmeübertragung auf 4 bis 10 Kelvin - vorzugsweise auf 5 Kelvin - eingestellt ist,
• die aus dem eingefügten ersten Hochdruckaustreiber (9) auslaufende arme Lösung (8) zum eingefügten dritten Hochdruckaustreiber (3a) zur Austreibung und danach durch den ersten Lösungswärmetauscher (19a) geleitet wird,
• und der Strom der Niedertemperaturwärmequelle (1) zur Wärmeübertragung zuerst durch einen Überhitzer (30) geleitet, danach in einen ersten (1a) und einen zweiten Teilstrom (1b) geteilt, der erste Teilstrom (1a) der Niedertemperaturwärmequelle durch den eingefügten ersten Hochdruckaustreiber (9) geleitet, danach der erste Teilstrom (1a) der Niedertemperaturwärmequelle mit dem zweiten Teilstrom (1 b) der Niedertemperaturwärmequelle wieder vereint und durch den eingefügten zweiten Hochdruckaustreiber (3) geleitet wird,
• der erste Teilstrom Hochdruckdampf (28a) vom eingefügten ersten Hochdruckaustreiber (9) und der zweite Teilstrom Hochdruckdampf (28b) vom Separator (6) zum Überhitzer geleitet werden.

8. Arbeitsverfahren nach einem der Ansprüche 1 bis 3, **dadurch gekennzeichnet, dass** die Wärmequelle folgende Eigenschaften aufweist und dass Apparate zur Austreibung in folgender Ausführung eingefügt und mit folgenden spezifischen Verfahrensschritten eingesetzt werden:
• eine Niedertemperaturwärmequelle mit Temperaturgefälle genutzt wird,
• eingefügt ein zweiter Hochdruckaustreiber (3) mit Wärmeübertragung durch eine Wand nach dem Prinzip eines Blasenaustreibers mit Gegenstromführung von der Wärme abgebenden Niedertemperaturwärmequelle (1) zum ausdampfendem Hauptstrom reicher Lösung (2a), wodurch die Gleichgewichtslinie für einen austretenden ersten Zweiphasengemisch-Teilstrom (5a) zu Beginn der Wärmeaufnahme von der Niedertemperaturwärmequelle (1) bestimmt ist,
• eingefügt ein dritter Hochdruckaustreiber (3a) mit Wärmeübertragung durch eine Wand nach dem Prinzip eines Blasenaustreibers mit Gegenstromführung der Wärme abgebenden armen Lösung (8) zum ausdampfenden zweiten Teilstrom (2b) reicher Lösung wodurch die Gleichgewichtslinie für einen austretenden zweiten Teilstrom (5b) des Zweiphasengemischs zu Beginn der Wärmeaufnahme armen Lösung (8) bestimmt ist,
• wobei die Mengen beider Teilströme reicher Lösung (2a, 2b) so gering ausgelegt werden, dass der Temperaturabstand zwischen dieser reichen Lösung (2a, 2b) und dem Strom Niedertemperaturwärmequelle (1) zu Beginn und Ende seiner Wärmeübertragung auf 4 bis 10 Kelvin - vorzugsweise auf 5 Kelvin - eingestellt ist,
• wobei die Aufteilung der reichen Lösung (2) in zwei Teilströme (2a, 2b) nach dem ersten Lösungswärmetauscher (19a) erfolgt,
• eingefügt ein Separator (6),
• wobei der erste Zweiphasengemisch-Teilstrom (5a) vom eingefügten zweiten Hochdruckaustreiber (3) und der zweite Zweiphasengemisch-Teilstrom (5b) vom eingefügten dritten Hochdruckaustreiber (3a) zum Separator (6) geleitet und in diesen eingeleitet wird,
• wobei im Separator (6) die Zweiphasengemisch-Teilströme (5a, 5b) in Hochdruckdampf (28) und einen Hauptstrom angereicherter Lösung (4) getrennt werden,
• eingefügt ein erster Hochdruckaustreiber (9) mit Wärmeübertragung durch eine Wand nach dem Prinzip eines Rieselaustreiber mit Parallelstromführung des Wärme abgebenden ersten Teilstroms (1a) der Niedertemperaturwärmequelle zum aus dem Hauptstrom angereicherter Lösung (4) ausgetriebenen Dampf,
• der Hauptstrom angereicherter Lösung (4) vom Separator zum eingefügten ersten Hochdruckaustreiber (9) zur Austreibung geleitet wird,
• dem eingefügten ersten Hochdruckaustreiber (9) erster Teilstrom angereicherter Lösung (4a) zur Austreibung zugeleitet wird,
• wobei die Mengen des ersten Teilstroms angereicherter Lösung (4a) so gering ausgelegt werden, dass im eingefügten ersten Hochdruckaustreiber (9) der Temperaturabstand zu den zugeleiteten Lösungen (4, 4a) zu Beginn und Ende seiner Wärmeübertragung auf 4 bis 10 Kelvin - vorzugsweise auf 5 Kelvin - eingestellt ist,
• aus dem eingefügten ersten Hochdruckaustreiber (9) ein erster Teilstrom (8a) und ein zweiter Teilstrom armer Lösung (8b) entnommen wird,
• der erste Teilstrom armer Lösung (8a) zum eingefügten dritten Hochdruckaustreiber (3a) zur Austreibung geleitet wird und danach in einen dritten (8c) und vierten Teilstrom armer Lösung (8d) geteilt,
• der zweite Teilstrom armer Lösung (8b) mit dem dritten Teilstrom armer Lösung (8c) zum fünften Teilstrom armer Lösung (8e) vereint wird,
• und der Strom der Niedertemperaturwärmequelle (1) zur Wärmeübertragung zuerst durch einen Überhitzer (30), danach durch den eingefügten ersten Hochdruckaustreiber (9) geleitet, und durch den eingefügten zweiten Hochdruckaustreiber (3) geleitet wird.

9. Arbeitsverfahren nach Anspruch 3, **dadurch gekennzeichnet, dass** die Wärmequelle folgende Eigenschaften aufweist und weitere Apparate zur Hochdruckaustreibung in folgender Ausführung eingefügt und weitere spezifische Verfahrensschritte eingesetzt werden:
• eine Niedertemperaturwärmequelle mit Temperaturgefälle genutzt wird,
• eingefügt ein fünfter Hochdruckaustreiber (3c) mit Wärmeübertragung durch eine Wand nach dem Prinzip eines Blasenaustreibers mit Gegenstromführung des Stroms der Wärme abgebenden Niedertemperaturwärmequelle (1) zum ausdampfenden zweiten Teilstrom reicher Lösung (4b) die Gleichgewichtslinie für einen austretenden dritten Zweiphasengemisch-Teilstrom (5c) zu Beginn der Wärmeaufnahme vom Strom der Niedertemperaturwärmequelle (1) bestimmt ist,
• eingefügt ein zweiter Hochdruckaustreiber (3) mit Wärmeübertragung durch eine Wand nach dem Prinzip eines Blasenaustreibers mit Gegenstromführung des Stroms der Wärme abgebenden Niedertemperaturwärmequelle (1) zur ausdampfenden reichen Lösung (2), wodurch die Gleichgewichtslinie für einen austretenden ersten Zweiphasengemisch-Teilstroms (5a) zu Beginn der Wärmeaufnahme vom Strom der Niedertemperaturwärmequelle (1) bestimmt ist,
• wobei die Menge der reichen Lösung (2) so gering ausgelegt wird, dass der Temperaturabstand zwischen der Lösung und der Niedertemperaturwärmequelle (1) zu Beginn und Ende seiner Wärmeübertragung auf 3 bis 10 Kelvin - vorzugsweise von 5 Kelvin - eingestellt ist,
• eingefügt eine Destillationssäule (15) mit Führung der indirekt Wärme übertragenden armen Lösung (8) von unten nach oben,
• wobei der dritte Zweiphasengemisch-Teilstrom (5c) von dem eingefügten fünften Hochdruckaustreiber (3c) zu der Destillationssäule (15) geleitet und in deren Boden eingeleitet wird,
• der erste Teilstrom (5a) des Zweiphasengemischs von dem eingefügten zweiten Hochdruckaustreiber (3) zu der Destillationssäule (15) geleitet und in deren mittleren Bereich eingeleitet wird,
• ein dritter Teilstrom (4c) angereicherter reicher Lösung in den Kopf der Destillationssäule (15) eingeleitet wird,
• die arme Lösung (8) aus dem Boden der Destillationssäule (15) abgezogen und zur indirekten Wärmeabgabe rückgeführt wird,
• die eingeleiteten beiden Zweiphasengemisch-Teilströme (5a, 5c) in ihre Phasen separiert und durch Wärmeaustausch und Massenaustausch mit dem dritten Teilstrom (4c) angereicherter Lösung teilweise kondensiert werden,
• und aus dem dritten Teilstrom (4c) angereicherter Lösung zusätzlich zu der Austreibung durch die rückgeführte arme Lösung (8) Arbeitsmitteldampf ausgetrieben und die Lösung dieses dritten Teilstroms (4c) angereicherter Lösung erwärmt wird,
• die Menge des dritten Teilstroms (4c) angereicherter Lösung so bemessen wird, dass durch Teilrektifikation und Austreibung der Wassergewichtsanteil des aus der Destillationssäule (15) austretenden Hochdruckdampfs (28) auf einen Anteil von 3 bis 8 Prozent - vorzugsweise auf 6 % - eingestellt wird,
• die Aufteilung des ersten Teilstroms (4a) der angereicherten Lösung in zwei Teilströme (4a, 4b) nach dem zweiten Lösungswärmetauscher (19b) erfolgt,
• und der Strom der Niedertemperaturwärmequelle (1) zur Wärmeübertragung zuerst durch einen Überhitzer (30), danach durch den eingefügten fünften Hochdruckaustreiber (3c) und dann durch den eingefügten zweiten Hochdruckaustreiber (3) geleitet wird.

10. Arbeitsverfahren nach einem der Ansprüche 1 bis 4, **dadurch gekennzeichnet, dass** die Wärmequelle folgende Eigenschaften aufweist und dass Apparate zur Austreibung in folgender Ausführung eingefügt und mit folgenden spezifischen Verfahrensschritten eingesetzt werden:
• als Wärmequelle wird kondensierender Gegendruckdampf (104) genutzt,
• eingefügt ein erster Hochdruckaustreiber (9) mit Wärmeübertragung durch eine Wand nach dem Prinzip eines Rieselaustreibers mit Parallelstromführung des Wärme abgebenden kondensierenden Gegendruckdampfs (104) zum aus dem Hauptstrom reicher Lösung (2a) ausgetriebenen Dampf, wodurch die Gleichgewichtslinie für den ersten Teilstrom Hochdruckdampf (28a) zu Ende der Wärmeaufnahme bestimmt ist,
• der die reiche Lösung (2) vom ersten Lösungswärmetauscher (19a) zum ersten Hochdruckaustreiber (9) zur Austreibung geleitet wird,
• die aus erstem Hochdruckaustreiber (9) ablaufende erste armer Lösung (8) zum durch den ersten Lösungswärmetauscher (19a) geleitet wird,
• der Hochdruckdampf (28) vom ersten Hochdruckaustreiber (9) zum Überhitzer (30) geleitet wird,
• ein vierter Teilstrom reicher Lösung (2e) in den Überhitzer zur Verdampfung und Überhitzung eingeleitet wird, sodass der Ammoniakanteil des überhitzten Hochdruckdampfes (29) im Vergleich zum in den Überhitzer eingeleiteten Hochdruckdampf (28) erhöht wird,
• wobei die Abtrennung des zum Überhitzer zugeleiteten Lösungsteilstroms (2e) nach der Lösungsaufwärmung (19b) erfolgt.
• wobei dem ersten Hochdruckaustreiber (9) Wärme von der externen Wärmequelle (1, 104) aus deren höchsten oder zweithöchsten Temperaturbereich übertragen wird,
• wobei dem Überhitzer (30) Wärme von der externen Wärmequelle (1, 104) aus deren höchsten Temperaturbereich übertragen wird.

11. Arbeitsverfahren nach einem der Ansprüche 1 bis 4, **dadurch gekennzeichnet, dass** die Wärmequelle folgende Eigenschaften aufweist und dass Apparate zur Austreibung in folgender Ausführung eingefügt und mit folgenden spezifischen Verfahrensschritten eingesetzt werden:
• eine Niedertemperaturwärmequelle (1) mit Temperaturgefälle oder kondensierender Entnahmedampf (108) bzw. kondensierender Gegendruckdampf (104) genutzt wird,
• eingefügt ein sechster Hochdruckaustreiber (9b) mit Wärmeübertragung durch eine Wand nach dem Prinzip eines Rieselaustreibers mit Gegenstromführung von einer Wärme abgebenden Niedertemperaturwärmequelle (1) oder von kondensierender Entnahmedampf (108) zur ausdampfenden reichen Lösung (2), wodurch die Gleichgewichtslinie für einen austretenden zweiten Teilstrom (28b) zu Beginn der Wärmeaufnahme von der Niedertemperaturwärmequelle (1) bzw. kondensierender Gegendruckdampf (104) bestimmt ist,
• wobei aus dem unteren Teil des sechster Hochdruckaustreibers (9b) ein zweiter Teilstrom Hochdruckdampf (28b) und ein Hauptstrom angereicherter Lösung (4) getrennt entnommen werden,
• eingefügt ein erster Hochdruckaustreiber (9) mit Wärmeübertragung durch eine Wand nach dem Prinzip eines Rieselaustreibers mit Parallelstromführung einer Wärme abgebenden Niedertemperaturwärmequelle (1) oder von kondensierender Entnahmedampf (108) zum aus der angereicherten Lösung (4, 4b) ausgetriebenen Dampf, wodurch die Gleichgewichtslinie für den ersten Teilstrom Hochdruckdampf (28a) zu Ende der Wärmeaufnahme bestimmt ist,
• und ein zweiter Teilstrom angereicherter Lösung (4b) zum ersten Hochdruckaustreiber (9) zur Austreibung geleitet wird,
• eingefügt ein siebter Hochdruckaustreiber (9a) mit Wärmeübertragung durch eine Wand nach dem Prinzip eines Rieselaustreibers mit Parallelstromführung der Wärme abgebenden erster Teilstrom armen Lösung (8a) zum aus dem vierten Teilstrom angereicherter Lösung (4f) ausgetriebenen Dampf, wodurch die Gleichgewichtslinie für den dritten Teilstrom Hochdruckdampf (28c) zu Ende der Wärmeaufnahme bestimmt ist,
• wobei dem ersten Hochdruckaustreiber (9) und dem Überhitzer (30) Wärme von der Niedertemperaturwärmequelle (1) aus deren höchsten Temperaturbereich oder kondensierender Gegendruckdampf (108) übertragen wird,
• wobei das Temperaturniveau der Wärmezufuhr an den erste Hochdruckaustreiber (9) und den Überhitzer (30) höher liegt als der Wärmezufuhr an den sechsten Hochdruckaustreiber (9a),
• der aus erstem Hochdruckaustreiber (9) auslaufende erste Teilstrom armer Lösung (8a) zum siebten Hochdruckaustreiber (9a) zur Austreibung und danach mit dem aus dem siebten Hochdruckaustreiber (9a) zur armen Lösung (8) vereint wird,
• der erste Teilstrom Hochdruckdampf (28a) vom ersten Hochdruckaustreiber (9) und der zweite Teilstrom Hochdruckdampf (28b) vom sechsten Hochdruckaustreiber (9b) und der dritte Teilstrom Hochdruckdampf (28c) vom siebten Hochdruckaustreiber (9a) zum Überhitzer (30) geleitet werden,
• der aus dem siebten Hochdruckaustreiber (9a) auslaufende zweite Teilstrom armer Lösung (8b) mit dem ersten Teilstrom armer Lösung (8a) vor dem zweiten Lösungswärmetauscher (19b) zur armen Lösung (8) vereint wird,
• ein fünfter Teilstrom angereicherter Lösung (4e) in den Überhitzer zur Verdampfung und Überhitzung eingeleitet wird, sodass der Ammoniakanteil des überhitzen Hochdruckdampfes (29) im Vergleich zum in den Überhitzer eingeleiteten Hochdruckdampf (28) erhöht wird,
• wobei die Aufteilung des ersten Teilstroms angereicherter Lösung (4a) in drei Teilströme (4b, 4e, 4f) nach dem zweiten Lösungswärmetauscher (19b) erfolgt.

12. Arbeitsverfahren nach einem der Ansprüche 5 bis 11, **dadurch gekennzeichnet, dass** der Arbeit leistende Hochdruckentspannungsapparat als Hochdruckentspannungsapparat (31a) mit Dampfentnahme derart ausgelegt ist, dass er auf Entspannung eines Teildampfstromes vom Hochdruckniveau bis auf Niederdruck und einer ersten Dampfentnahmen bei Mitteldruck ausgelegt ist, und ein aus dem Hochdruckentspannungsapparat (31a) mit Dampfentnahme entnommener Mitteldruckdampf (32) einem Niederdruckabsorber (13, 13a) zur Absorption zugeleitet wird.

13. Arbeitsverfahren nach einem der Ansprüche 5 bis 9, **dadurch gekennzeichnet, dass** zu dem Hauptkreislauf ein Zusatzkreislauf für eine reiche Zusatzlösung (20) und für eine arme Zusatz-Lösung (21) mit folgenden Apparaten und spezifischen Verfahrensschritten zusätzlich eingefügt wird:
• eingefügt ein Zusatz-Mitteldruckaustreiber (25) mit Parallelstromführung des Stroms einer Wärme abgebenden externen Wärmequelle (1) zur aus der reichen Zusatz-Lösung (20) ausgetriebenen Dampf, wodurch die Gleichgewichtslinie für den austretenden Mitteldruckdampf (24) nach Abschluss der Wärmeaufnahme von der externen Wärmequelle (1) bestimmt ist,
• ein erster Zusatz-Lösungswärmetauscher (19c),
• eine Zusatz-Lösungspumpe (17),
• zu einem Mitteldruckabsorber (14) und zu einem Niederdruckabsorber (13) ein Hauptkreis/Zusatz-Niedrigstdruckabsorber (12a) zur Absorption von Niedrigstdruckdampf (34) mittels der armen Lösung (8) und der armen Zusatz-Lösung (21) zusätzlich eingefügt,
• und dass für den Hauptkreis/Zusatz-Niedrigstdruckabsorber (12a) ein niedrigeres Druckniveau als im Niederdruckabsorber (13) festgelegt ist,
• wobei die aus dem eingefügten Niedrigstdruckabsorber entnommene Lösung als schwach angereicherte Lösung (7) mittels einer dritten Lösungspumpe (10c) auf das Niederdruckniveau des Niederdruckabsorbers (13) angehoben und diesem zur Absorption zugeleitet wird,
• wobei der im eingefügten Niedrigstdruckabsorber zu absorbierende Niedrigstdruckdampf (34) auf annähernd gleiches Druckniveau entspannt und dem Niedrigstdruckabsorber zur Absorption zugeleitet wird,
• der Hochdruckentspannungsapparat (31 b) auf Entspannung eines Teildampfstromes vom Hochdruckniveau bis auf Niedrigstdruck und einer Dampfentnahmen bei Niederdruck ausgelegt ist.
• wobei der zweite Zusatzkreislauf zwischen Mitteldruck und Niedrigstdruck betrieben wird und für den eingefügten Zusatz-Mitteldruckaustreiber (25) ein niedrigerer Druck als für jeden der anderen Hochdruckaustreiber (3, 3a, 3b, 3c, 9) bestimmt wird,
• eine Wärmezufuhr aus dem Strom der externen Wärmequelle (1) an den eingefügten Zusatz-Mitteldruckaustreiber (25) erfolgt, wobei das Temperaturniveau der Wärmezufuhr niedriger als dasjenige zur Hochdruckaustreibung und einer eventuell eingefügten Zwischenüberhitzung festgelegt ist,
• der Zusatz-Mitteldruckdampf (24) vom eingefügten Zusatz-Mitteldruckaustreiber (25) zu dem Mitteldruckabsorber (14) geleitet wird,
• die reiche Zusatz-Lösung (20) mit einer Zusatz-Lösungspumpe (17) auf das Druckniveau des eingefügten Zusatz-Mitteldruckaustreiber (25) angehoben wird,
• die reiche Zusatz-Lösung (20) zum eingefügten Zusatz-Mitteldruckaustreiber (25) geleitet und eingeleitet wird,
• die arme Zusatz-Lösung (21) mit dem vierten Teilstrom (8d) armer Lösung vereint wird, und dieser Teilstrom armer Haupt/Zusatz-Lösung (22) durch mindestens einen Lösungswärmetauscher (19a, 19c, 19d) zur Wärmeabgabe geleitet wird, und mit einer Hauptkreis/Zusatz-Drossel (16c) auf Niedrigstdruck abgesenkt wird und dem Hauptkreis/Zusatz-Niedrigstdruckabsorber (12a) zur Absorption geleitet wird,
• wobei Zusatz-Dampf (24) durch Zuleitung an den Mitteldruckabsorber (14) vom Zusatzkreislauf in den Hauptkreislauf und ein Teil des Niedrigstdruckdampfes (34) durch Zuleitung an den Hauptkreis/Zusatz-Niedrigstdruckabsorber (12a) in den Zusatzkreislauf übergeht, wobei ein Ausgleich der unterschiedlichen Wassergewichtsanteile der beiden von einem Teilkreislauf in den anderen übergeleiteten Dämpfe (24 bzw. 33) im von Lösungen beider Kreisläufe durchströmten Hauptkreis/Zusatz-Niedrigstdruckabsorber (12a) stattfindet,
• wobei entsprechend dem Prinzip der zweimaligen Wärmezufuhr die Menge des im eingefügten Zusatz-Mitteldruckaustreiber (25) ausgetriebenen Zusatz-Dampfes (24) die Zuwachsmenge der bei der Hochdruckaustreibung austreibbaren und auf Niedrigstdruck absorbierbaren Dampfmenge bestimmt wird.

14. Arbeitsverfahren nach einem der Ansprüche 5 bis 11, oder 13, **dadurch gekennzeichnet, dass** mit einem zusätzlich im Hauptkreislauf eingefügten Niederdruckentspannungsapparat (38) die Entspannung zweistufig ausgeführt wird,
• wobei im Hochdruckentspannungsapparat (31) vom Hochdruckniveau mindestens bis Mitteldruckniveau, maximal bis auf das Druckniveau eines Absorbers entspannt wird, dessen Druckniveau höher liegt als dasjenige des Absorbers mit dem niedrigsten Druckniveau,
• wobei der im Hochdruckentspannungsapparat (31) entspannte Dampf (32, 33, 36) in einen ersten Dampf-Teilstrom (32a, 33a) geteilt wird, der einem unter gleichem oder nahezu gleichem Druck stehenden Absorber (13, 13a, 14) zugeleitet wird und in einen zweiten Dampf-Teilstrom (32b, 33b) geteilt wird, der dem Niederdruckentspannungsapparat (38)) zugeleitet wird und
• entspannter Dampf (33, 34) von dem Niederdruckentspannungsapparat (38) zu dem Absorber mit dem niedrigsten Druck zur Absorption (12a, 13, 13a) zugeleitet wird.

15. Arbeitsverfahren nach einen der Ansprüche 10 oder 11, **dadurch gekennzeichnet, dass** zur Kälteerzeugung zu dem Hauptkreislauf ein Absorptionskreislauf für eine reiche Absorptionskreis-Lösung und für eine arme Absorptionskreis-Lösung folgende Apparate und spezifische Verfahrensschritte zusätzlich eingefügt sind:
• ein Absorptionskreis-Kondensator (42),
• ein Absorptionskreis-Flüssigkeitsnachkühler (43),
• ein Absorptionskreis-Verdampfer (44),
• eine Absorptionskreis-Drossel (47),
• eine Hauptkreis/Absorptionskreis-Lösungspumpe (10e),
• der erste Hochdruckaustreiber (9) zur Austreibung auch des AK-Hochdruckdampfes (28e) erweitert wird zu einem Hauptkreis/Absorptionskreis-Hochdruckaustreiber (9a),
• der Niederdruckabsorber (13) zur Absorption auch der armen Absorptionskreis-Lösung zu einem Hauptkreis/Absorptionskreis-Niederdruckabsorber (13c) erweitert wird,
• wobei Hauptkreislauf und der Absorptionskreislauf zwischen Hochdruck und Niederdruck betrieben werden,
• die reiche Lösung (2) um die reiche Absorptionskreis-Lösung zur reichen Hauptkreis/Absorptionskreis-Lösung (11) vergrößert wird,
• die reiche Hauptkreis/Absorptionskreis-Lösung (11) mittels Hauptkreis/Absorptionskreis-Lösungspumpe (10e) von Niederdruck auf Hochdruckniveau angehoben wird,
• die reiche Hauptkreis/Absorptionskreis-Lösung (11) zur Wärmeaufnahme durch einen Hauptkreis/Absorptionskreis-Lösungswärmetauscher (19e) geleitet wird,
• und danach von der Hauptkreis/Absorptionskreis-Lösung (11) der zweite Teilstrom reicher Lösung (2c) abgetrennt wird,
• und danach die reiche Hauptkreis/Absorptionskreis-Lösung (11) zum Hauptkreis/Absorptionskreis-Hochdruckaustreiber (9a) geleitet und in diesen eingeleitet wird,
• die arme Lösung (8) um die arme Absorptionskreis-Lösung zur armen Hauptkreis/Absorptionskreis-Lösung (23) erweitert wird,
• die arme Hauptkreis/Absorptionskreis-Lösung (23) durch den Hauptkreis/Absorptionskreis-Lösungswärmetauscher (19e) zur Wärmeabgabe geleitet wird,
• und mit der Hauptkreis/Absorptionskreis-Drossel (16d) auf Niederdruck abgesenkt wird und zum Hauptkreis/Absorptionskreis-Niederdruckabsorber (13c) zur Absorption geleitet wird,
• der Hochdruckdampf (28) mittels zweitem Dreiwegeventil (50) in zwei Teilströme geteilt wird,
• ein erster Teilstrom Hochdruckdampf (28a) dem Überhitzer (30), ein zweiter Teilstrom Hochdruckdampf (28b) dem Absorptionskreis-Kondensator (42) zur Kondensation zugeleitet wird,
• der zweite Teilstrom Hochdruckdampf (28b) im Absorptionskreis-Kondensator (42) unter Wärmeabgabe an ein Kühlmedium zu einer nahezu reinen Absorptionskreis-Ammoniakflüssigkeit (46) verflüssigt wird,
• die Absorptionskreis-Ammoniakflüssigkeit (46) zur Wärmeabgabe durch einen Absorptionskreis-Flüssigkeitsnachkühler (43) geleitet und dann mittels Absorptionskreis-Drossel (47) vom oberen Mitteldruck auf Niederdruck abgesenkt wird und dann die Absorptionskreis-Ammoniakflüssigkeit (46) zu dem Absorptionskreis-Verdampfer (44) geleitet wird,
• die Absorptionskreis-Ammoniakflüssigkeit (46) im Absorptionskreis-Verdampfer (44) unter Wärmeaufnahme aus einem Kälteträger zu Absorptionskreis-Ammoniakniederdruckdampf (33c) verdampft wird,
• der Absorptionskreis-Ammoniakniederdruckdampf (33c) zur Wärmeaufnahme durch den Absorptionskreis-Flüssigkeitsnachkühler (43) geleitet wird,
• der überhitzte Absorptionskreis-Ammoniakniederdruckdampf (33d) vom Absorptionskreis-Flüssigkeitsnachkühler (43) zur Absorption zum Hauptkreis/Absorptionskreis-Niederdruckabsorber (13c) geleitet wird,
• der Hochdruckentspannungsapparat (31) auf Entspannung vom Hochdruckniveau bis auf Niederdruck ausgelegt ist,
• der Niederdruckdampf (33) vom Hochdruckentspannungsapparat (31) zur Absorption zum Hauptkreis/Absorptionskreis-Niederdruckabsorber (13c) geleitet wird.

## Claims

1. A working procedure of a sorption power cycle for a binary mixture of ammonia and water, with main components of a cycle referred to in the following as the main cycle:
- at least one high-pressure desorber (3, 3a, 3b, 3c, 9) to desorb high-pressure vapour (28) of ammonia and water from a strong solution (2, 2a, 2b) that is fed in,
- a superheater (30) to superheat a high-pressure vapour (28) of ammonia and water,
- a working high-pressure relief apparatus (31) to relieve the high-pressure vapour (28),
- at least one absorber (12a, 13, 14, 14a, 14b) to absorb the relieved vapour,
- at least a first solution heat exchanger (19a) to transfer heat from the weak solution (8) to the strong solution (2),
- at least one heat source,
**characterised in that**
- the weak solution (8) is fed to an absorber (12a, 12b, 13, 13a, 14) working at the lowest pressure level for absorption, and the weak solution (8) is lowered to this pressure level with the aid of at least one throttle valve (16a),
- the strong solution (2) is raised to the high pressure level by an absorber (14, 14a, 14b) working at the highest pressure level by means of a first solution pump (10),
- and the strong solution (2) is fed to at least one high-pressure desorber (3, 3b, 9) to be desorbed,
- high-pressure vapour (28) is relieved at least in a second section of the relief with partial condensation,
- the dew point being exceeded at a pressure of 9.5 to 15 bar - preferably 13.5 bar - and at least some of the high-pressure vapour (28) being relieved to a final pressure of 1.1 to 4 bar - preferably 1.5 to 2 bar,
- and the high-pressure vapour (28) to be relieved being set at a water content by weight of 3 to 10 percent - preferably 6%,
- and that the water content by weight in the high-pressure vapour (28) and optionally its superheating pressure is such that the vapour content at the end of the relief remains above a drop impact limit in the high-pressure relief apparatus (31),
- the water content by weight being set by at least one of the following procedural steps:
- in at least one high-pressure desorber (9) high-pressure vapour is produced at the equilibrium point for the incoming solution, and in at least one high-pressure desorber (3, 9a) high pressure vapour is produced at the equilibrium point for the outgoing solution,
- the water content by weight of the high-pressure vapour is established in a rectifier (18), the rectifier being designed for partial rectification,
- the water content by weight of the high-pressure vapour being set by feeding and evaporating solution into the superheater (10, 11).

2. The working procedure according to Claim 1, **characterised in that** the following apparatuses are additionally added:
• a second solution pump (10a) and to an intermediate-pressure absorber (14) a low-pressure absorber (13) to absorb low-pressure vapour (33),
and that the following specific procedural steps are additionally added:
• the pressure level of the low-pressure absorber (13) is set to be lower than that of the intermediate-pressure absorber (14),
• and from the low-pressure absorber (13) a main stream of enriched solution (4) is raised to the intermediate-pressure level of the intermediate-pressure absorber (14) by means of the second solution pump (10a) and is fed to said intermediate-pressure absorber for absorption, and the low-pressure vapour (33) to be absorbed in the low-pressure absorber (13) is relieved to nearly the same pressure level in the high-pressure relief apparatus (31, 31a) and is fed to the low-pressure absorber (13) for absorption.

3. The working procedure according to Claim 2, **characterised in that** the following apparatuses are additionally added:
a third solution pump (10b),
a second solution heat exchanger (19b),
and that the following specific procedural steps are additionally added:
• that after the low-pressure absorber (13) the enriched solution that is running off is divided into the main stream (4) of enriched solution and a first partial stream (4a) of enriched solution,
• that a first partial stream (4a) of enriched solution is raised to the high-pressure level by means of the third solution pump (10b), and that the first partial stream (4a) of enriched solution is conducted over the path of the second solution heat exchanger (19b) for desorption,
• that after heat has been emitted to produce high-pressure vapour, the weak solution (8) is divided into a fourth (8d) and a fifth partial stream (8e) of weak solution, and a fourth (8d) and a fifth partial stream (8e) of weak solution is formed from the weak solution (8) before heat is emitted into the solution heat exchanger (19a, 19b),
• that the first partial stream (4a) of enriched solution is heated up in the second solution heat exchanger (19b) in the countercurrent of a fifth partial stream (8e) of weak solution,
• that the strong solution (2) is heated up in the first solution heat exchanger (19a) in the countercurrent of a fourth partial stream (8d) of weak solution,
• and that the fourth partial stream (8d) of weak solution and the fifth partial stream (8e) of weak solution are re-united to form weak solution (8) after having been conducted through the solution heat exchanger (19a, 19b).

4. The working procedure according to any of Claims 1 to 3, **characterised in that** apparatuses for desorbing are added to the following embodiment and are used with the following specific procedural steps:
• a Clausius Rankine cycle with the one-substance medium of water is added,
• heat being delivered to the latter that is at a clearly higher temperature level than that delivered to the sorption power cycle, and the heat that is supplied being used to produce mechanical work,
• the relief apparatus of the latter being designed as a counter-pressure turbine (110) with vapour tapping or vapour extraction and the relief of the water vapour as counter-pressure advantageously ending at above 100°C,
• extraction vapour (108) and counter-pressure vapour (104) being fed to the sorption power cycle and being used as a heat source by condensing the water vapour in the sorption power cycle,
• the extraction vapour (108) being at a higher temperature than the counter-pressure vapour (104),
• and the water condensation that has formed after the heat transfer has taken place being conducted back into the Clausius Rankine cycle.

5. The working procedure according to any of Claims 1 to 3, **characterised in that** the heat source has the following properties, and that additional apparatuses for high-pressure desorption are added to the following embodiment, and additional specific procedural steps are used:
• a low-temperature heat source with a temperature gradient is used,
• a second high-pressure desorber (3) is added with heat transfer through a wall according to the principle of a bubble desorber and with countercurrent conducting of the low-temperature heat source (1) to the evaporating main stream of a strong solution, by means of which the equilibrium line for an outgoing first partial stream (5a) of the two-phase mixture is determined by the low-temperature heat source (1) at the start of the heat absorption,
• a third high-pressure desorber (3a) is added with heat transfer through a wall according to the principle of a bubble desorber with countercurrent conducting of the weak solution (8) that emits heat to the evaporating first partial stream (2b) of strong solution, by means of which the equilibrium line for an outgoing second partial stream (5b) of the two-phase mixture is determined at the start of the heat absorption from the weak solution (8),
• a separator (6) is added,
• the first partial stream (5a) of two-phase mixture being conducted from the second high-pressure desorber (3) and the second partial stream (5b) of two-phase mixture being conducted from the third high-pressure desorber (3a) to the separator (6) and being fed into the latter,
• the partial streams (5a, 5b) of two-phase mixture being separated into high-pressure vapour with a larger percentage of water (27) and into a stream of weak solution within the separator (6),
a rectifier (18) designed for partial rectification is also added,
• with which a second partial stream (2c) of strong solution is conducted into the head of the rectifier (18), and the high-pressure vapour (28) that is fed in by heat exchange and mass exchange is partially condensed with the second partial stream (2c) of strong solution in the rectifier (18) and the reflux liquid of the main cycle is formed,
and unlike the mode of operation in which ammonia liquid is supplied and evaporated, sorbat vapour is now also desorbed at least from a second partial stream (2c) of strong solution, and the solution of this second partial stream (2c) of strong solution is heated,
• the amount of second partial stream (2c) of strong solution being such that the high-pressure vapour (28) passing out by means of partial rectification is set at a water percentage by weight of 3 to 8 percent - preferably at 6 %,
• a strengthened reflux (26) running out of the bottom of the rectifier being fed into the separator (6),
• and this strengthened reflux passing out of the separator (6) together with the solution separated by separation as a weak solution (8),
• and the stream of the low-temperature heat source (1) being conducted first of all through a superheater (30), and then through the second high-pressure desorber (3) in order to transfer heat.

6. The working procedure according to Claims 1 to 3, **characterised in that** the heat source has the following properties and that apparatuses for high-pressure desorption are added to the following embodiment and are used with the following specific procedural steps:
• a low-temperature heat source (1) with a temperature gradient is used,
• a second high-pressure desorber (3) is added with heat transfer through a wall according to the principle of a bubble desorber with countercurrent conducting from the low-temperature heat source (1) emitting heat to the evaporating main stream of strong solution (2a), by means of which the equilibrium line for an outgoing first partial stream (5a) of two-phase mixture is determined by the low-temperature heat source (1) at the start of the heat absorption,
• a third high-pressure desorber (3a) is added with heat transfer through a wall according to the principle of a bubble desorber with countercurrent conducting of the weak solution (8) that emits heat to the evaporating first partial stream (2b) of strong solution, by means of which the equilibrium line for an outgoing second partial stream (5b) of two-phase mixture is determined at the start of the heat absorption from the weak solution (8),
• a separator (6) is added,
• the first partial stream (5a) of two-phase mixture being conducted from the second high-pressure desorber (3) and the second partial stream (5b) of two-phase mixture being conducted from the third high-pressure desorber (3a) to the separator (6) and being fed into the latter,
• the partial streams (5a, 5b) of two-phase mixture being separated into high-pressure vapour with a larger percentage of water (27) and into a stream of weak solution within the separator (6),
• a rectifier (18) designed for partial rectification being added,
• a first partial stream (4a) of enriched solution being fed into the head of the rectifier (18), the high pressure vapour that is fed in with the higher percentage of water (27) being partially condensed by heat exchange and mass exchange with the first partial stream (4a) of enriched solution in the rectifier (18) and reflux liquid of the main cycle being formed,
• and unlike the mode of operation in which ammonia liquid is supplied to the rectifier and evaporated, sorbat vapour is now also desorbed at least from the first partial stream (4a) of enriched solution, and the solution of this first partial stream (4a) of enriched solution is heated,
• the amount of the first partial stream (4a) of enriched solution being such that the high-pressure vapour (28) passing out by means of partial rectification is set at a water percentage by weight of 3 to 8 percent - preferably at 6 %,
• a strengthened reflux (26) running out of the bottom of the rectifier being fed into the separator (6), and the strengthened reflux passing out of the separator (6) together with the solution separated by separation as a weak solution (8),
• and the stream of the low-temperature heat source (1) being conducted first of all through a superheater (30), and then through the second high-pressure desorber (3) in order to transfer heat.

7. The working procedure according to either of Claims 1 or 2, **characterised in that** the heat source has the following properties and that apparatuses for desorbing are added to the following embodiment and are used with the following specific procedural steps:
• a low-temperature heat source (1) with a temperature gradient is used,
• a second high-pressure desorber (3) is added with heat transfer through a wall according to the principle of a bubble desorber with countercurrent conducting from the low-temperature heat source (1) emitting heat to the evaporating main stream of strong solution (2a), by means of which the equilibrium line for an outgoing first partial stream (5a) of two-phase mixture is determined at the start of the heat absorption from the low-temperature heat source (1),
• a third high-pressure desorber (3a) is added with heat transfer through a wall according to the principle of a bubble desorber with countercurrent conducting of the weak solution (8) that emits heat to the evaporating first partial stream (2b) of strong solution, by means of which the equilibrium line for an outgoing second partial stream (5b) of two-phase mixture is determined at the start of the heat absorption from the weak solution (8),
• the amounts of the two partial streams of strong solution (2a, 2b) being designed to be so small that the temperature difference between the solution and the stream of the low temperature heat source (1) is set at the start and at the end of its heat transfer to 4 to 10 Kelvin - preferably to 5 Kelvin,
• the division of the strong solution (2) into two partial streams (2a, 2b) taking place after the first solution heat exchanger (19a),
• a separator (6) is added,
• the first partial stream (5a) of two-phase mixture being conducted from the second high-pressure desorber (3) and the second partial stream (5b) of two-phase mixture being conducted from the third high-pressure desorber (3a) to the separator (6) and being fed into the latter,
• the partial streams (5a, 5b) of two-phase mixture being separated into high-pressure vapour (28) and into a main stream of enriched solution (4) within the separator (6),
• a first high-pressure desorber (9) being added with heat transfer through a wall according to the principle of a trickle desorber with parallel stream conducting of a first partial stream (1a) of a low-temperature heat source emitting heat to the vapour desorbed from the main stream of enriched solution (4),
• the main stream of enriched solution (4) being conducted from the separator to the first high-pressure desorber (9) that is added for desorption,
• the amounts of the first partial stream (1a) of the low-temperature heat source being designed to be so small that the temperature difference in the first high-pressure desorber (9) that is added in comparison to the solution being set at the start and at the end of its heat transfer to 4 to 10 Kelvin - preferably to 5 Kelvin,
• the weak solution (8) running out of the first high-pressure desorber (9) that is added being conducted to the third high-pressure desorber (3a) that is added for desorption, and then through the first solution heat exchanger (19a),
• and for the transfer of heat, the stream of the low-temperature heat source (1) being conducted first of all through a superheater (30), then being divided into a first (1a) and a second partial stream (1b), the first partial stream (1a) of the low-temperature heat source being conducted through the first high-pressure desorber (9) that is added, then the first partial stream (1a) of the low-temperature heat source being re-united with the second partial stream (1b) of the low-temperature heat source and being conducted through the second high-pressure desorber (3) that is added,
• the first partial stream of high-pressure vapour (28a) being conducted from the first high-pressure desorber (9) that is added and the second partial stream of high-pressure vapour (28b) being conducted from the separator (6) to the superheater.

8. The working procedure according to any of Claims 1 to 3, **characterised in that** the heat source has the following properties and that apparatuses for desorption are added to the following embodiment and are used with the following specific procedural steps:
• a low-temperature heat source with a temperature gradient is used,
• a second high-pressure desorber (3) is added with heat transfer through a wall according to the principle of a bubble desorber with countercurrent conducting from the low-temperature heat source (1) emitting heat to the evaporating main stream of strong solution (2a), by means of which the equilibrium line for an outgoing first partial stream (5a) of two-phase mixture is determined at the start of the heat absorption from the low-temperature heat source (1),
• a third high-pressure desorber (3a) is added with heat transfer through a wall according to the principle of a bubble desorber with countercurrent conducting of the weak solution (8) that emits heat to the evaporating second partial stream (2b) of strong solution, by means of which the equilibrium line for an outgoing second partial stream (5b) of the two-phase mixture is determined at the start of the heat absorption from the weak solution (8),
• the amounts of the two partial streams of strong solution (2a, 2b) being designed to be so small that the temperature difference between this strong solution (2a, 2b) and the stream of the low temperature heat source (1) is set at the start and at the end of its heat transfer to 4 to 10 Kelvin - preferably to 5 Kelvin,
• the division of the strong solution (2) into two partial streams (2a, 2b) taking place after the first solution heat exchanger (19a),
• a separator (6) being added,
• the first two-phase mixture partial stream (5a) being conducted from the second high-pressure desorber (3) that is added and the second two-phase mixture partial stream (5b) being conducted from the third high-pressure desorber (3a) that is added to the separator (6) and being fed into the latter,
• the partial streams (5a, 5b) of two-phase mixture being separated into high-pressure vapour (28) and into a main stream of enriched solution (4) within the separator (6),
• a first high-pressure desorber (9) being added with heat transfer through a wall according to the principle of a trickle desorber with parallel stream conducting of the first partial stream (1a) of the low-temperature heat source emitting heat to the vapour desorbed from the main stream of enriched solution (4),
• the main stream of enriched solution (4) being conducted from the separator to the first high-pressure desorber (9) that is added for desorption,
• the first partial stream of enriched solution (4a) being fed to the first high pressure desorber (9) that is added for desorption,
• the amounts of the first partial stream of enriched solution (4a) being designed to be so small that the temperature difference in the first high-pressure desorber (9) that is added in comparison to the solutions (4a, 4a) that are fed in is set at the start and at the end of its heat transfer to 4 to 10 Kelvin - preferably to 5 Kelvin,
• a first partial stream (8a) and a second partial stream of weak solution (8b) being extracted from the first high-pressure desorber (9) that is added,
• the first partial stream of weak solution (8a) being conducted to the third high-pressure desorber (3a) that is added for desorption, and then being divided into a third (8c) and a fourth partial stream of weak solution (8d),
• the second partial stream of weak solution (8b) being united with the third partial stream of weak solution (8c) to form the fifth partial stream of weak solution (8e),
• and the stream of the low-temperature heat source (1) being conducted first of all through a superheater (30), then through the first high-pressure desorber (9) that has been added for the heat transfer, and being conducted through the second high-pressure desorber (3) that has been added.

9. The working procedure according to Claim 3, **characterised in that** the heat source has the following properties and further apparatuses for high-pressure desorption are added to the following embodiment and further specific procedural steps are used:
• a low-temperature heat source with a temperature gradient is used,
• a fifth high-pressure desorber (3c) is added with heat transfer through a wall according to the principle of a bubble desorber with countercurrent conducting of the stream of the low-temperature heat source (1) emitting heat to the evaporating second partial stream of strong solution (4b), the equilibrium line for an outgoing third partial stream (5c) of two-phase mixture being determined at the start of the heat absorption from the stream of the low-temperature heat source (1),
• a second high-pressure desorber (3) is added with heat transfer through a wall according to the principle of a bubble desorber with countercurrent conducting of the stream of the low-temperature heat source (1) emitting heat to the evaporating strong solution (2), by means of which the equilibrium line for an outgoing first partial stream (5a) of two-phase mixture is determined at the start of the heat absorption from the stream of the low-temperature heat source (1),
• the amount of strong solution (2) being designed to be so small that the temperature difference between the solution and the low temperature heat source (1) is set at the start and at the end of its heat transfer to 3 to 10 Kelvin - preferably to 5 Kelvin,
• a distillation column (15) is added with conducting of the weak solution (8) transferring heat indirectly from the bottom to the top,
• the third two-phase mixture partial stream (5a) being conducted from the fifth high-pressure desorber (3) that is added to the distillation column (15) and being fed into the bottom of the latter,
• the first partial stream (5a) of the two-phase mixture being conducted from the second high-pressure desorber (3) that is added to the distillation column (15) and being fed into its central region,
• a third partial stream (4c) of enriched strong solution being fed into the head of the distillation column (15),
• the weak solution (8) being removed from the bottom of the distillation column (15) and being recirculated for indirect heat emission,
• the two partial streams (5a, 5c) of two-phase mixture that are fed in being separated into their phases and being partially condensed by heat exchange and mass exchange with the third partial stream (4c) of enriched solution,
• and sorbat vapour being desorbed from the third partial stream (4c) of enriched solution in addition to the desorption through the recirculated weak solution (8) and the solution of this third partial stream (4c) of enriched solution being heated,
• the amount of the third partial stream (4c) of enriched solution being such that by partial rectification and desorption the water percentage by weight of the high-pressure vapour (28) passing out of the distillation column (15) is set to a percentage of 3 to 8 percent - preferably to 6 %,
• the division of the first partial stream (4a) of enriched solution into two partial streams (4a, 4b) taking place after the second solution heat exchanger (19b),
• and for the transfer of heat the stream of the low-temperature heat source (1) being conducted first of all through a superheater (30), and then through the fifth high-pressure desorber (3c) that is added, then through the second high-pressure desorber (3) that is added.

10. The working procedure according to any of Claims 1 to 4, **characterised in that** the heat source has the following properties and that apparatuses for desorption are added to the following embodiment and are used with the following specific procedural steps:
• condensing counter-pressure vapour (104) is used as a heat source,
• a first high-pressure desorber (9) is added with heat transfer through a wall according to the principle of a trickle desorber with parallel stream conducting of the condensing counter-pressure vapour (104) emitting heat to the vapour desorbed from the main stream of strong solution (2a), by means of which the equilibrium line for the first partial stream of high-pressure vapour (28a) is determined at the end of the heat absorption,
• the strong solution (2) is conducted from the first solution heat exchanger (19a) to the first high-pressure desorber (9) for desorption,
• the first weak solution (8) running out of the first high-pressure desorber (9) is conducted to/through the first solution heat exchanger (19a),
• the high-pressure vapour (28) is conducted from the first high-pressure desorber (9) to the superheater (30),
• a fourth partial stream of strong solution (2e) is fed into the superheater for evaporation and superheating so that the ammonia content of the superheated high-pressure vapour (29) is increased in comparison to the high-pressure vapour (28) fed into the superheater,
• the separation of the partial stream of solution (2e) fed to the superheater taking place after the solution has been heated up (19b),
• heat from the external heat source (1, 104) being transferred from the highest or second highest temperature range of the latter to the first high-pressure desorber (9),
• heat from the external heat source (1, 104) being transferred from the highest temperature range of the latter to the superheater (30).

11. The working procedure according to any of Claims 1 to 4, **characterised in that** the heat source has the following properties and that apparatuses for desorption are added to the following embodiment and are used with the following specific procedural steps:
• a low-temperature heat source (1) with a temperature gradient or condensing extraction vapour (108) or condensing counter-pressure vapour (104) is used,
• a sixth high-pressure desorber (9b) is added with heat transfer through a wall according to the principle of a trickle desorber with countercurrent conducting from a low-temperature heat source (1) emitting heat or from condensing extraction vapour (108) to the evaporating strong solution (2), by means of which the equilibrium line for an outgoing second partial stream (28b) is determined at the start of the heat absorption from the low-temperature heat source (1) or condensing counter-pressure vapour (104),
• a second partial stream of high-pressure vapour (28b) and a main stream of enriched solution (4) being extracted separately from the lower part of the sixth high-pressure desorber (9b),
• a first high-pressure desorber (9) being added with heat transfer through a wall according to the principle of a trickle desorber with parallel stream conducting of a low-temperature heat source (1) emitting heat or from condensing extraction vapour (108) to the vapour desorbed from the enriched solution (4, 4b), by means of which the equilibrium line for the first partial stream of high-pressure vapour (28a) is determined at the end of the heat absorption,
• and a second partial stream of enriched solution (4b) being conducted to the first high-pressure desorber (9) for desorption,
• a seventh high-pressure desorber (9a) being added with heat transfer through a wall according to the principle of a trickle desorber with parallel stream conducting of the first partial stream of weak solution (8a) emitting heat to the vapour desorbed from the fourth partial stream of enriched solution (4f), by means of which the equilibrium line for the third partial stream of high-pressure vapour (28c) is determined at the end of the heat absorption,
• heat from the low-temperature heat source (1) being transferred from the highest temperature range of the latter or condensing counter-pressure vapour (108) being transferred to the first high-pressure desorber (9) and to the superheater (30),
• the temperature level of the heat supply to the first high-pressure desorber (9) and to the superheater (30) being higher than the heat supply to the sixth high-pressure desorber (9a),
• the first partial stream of weak solution (8a) running out of the first high-pressure desorber (9) to the seventh high-pressure desorber (9a) for desorption and then being united with that from the seventh high-pressure desorber (9a) to form the weak solution (8),
• the first partial stream of high-pressure vapour (28a) being conducted from the first high-pressure desorber (9) and the second partial stream of high-pressure vapour (28b) being conducted from the sixth high-pressure desorber (9b) and the third partial stream of high-pressure vapour (28c) being conducted from the seventh high-pressure desorber (9a) to the superheater (30),
• the second partial stream of weak solution (8b) running out of the seventh high-pressure desorber (9a) being united with the first partial stream of weak solution (8a) before the second solution heat exchanger (19b) to form the weak solution (8),
• a fifth partial stream of enriched solution (4e) is fed into the superheater for evaporation and superheating so that the ammonia content of the superheated high-pressure vapour (29) is increased in comparison to the high-pressure vapour (28) fed into the superheater,
• the division of the first partial stream of enriched solution (4a) into three partial streams (4b, 4e, 4f) taking place after the second solution heat exchanger (19b).

12. The working procedure according to any of Claims 5 to 11, **characterised in that** the working high-pressure relief apparatus is designed as a high-pressure relief apparatus (31a) with vapour extraction such that it is designed to relieve a partial stream of vapour from the high-pressure level to low pressure and for a first vapour extraction at intermediate pressure, and an intermediate-pressure vapour (32) extracted from the high-pressure relief apparatus (31a) with vapour extraction is fed to a low-pressure absorber (13, 13a) for absorption.

13. The working procedure according to any of Claims 5 to 9, **characterised in that** an additional cycle for a strong additional solution (20) and for a weak additional solution (21) is additionally added to the main cycle with the following apparatuses and specific procedural steps:
• an additional intermediate-pressure desorber (25) with parallel stream conducting of the stream of an external heat source (1) emitting heat is added to the vapour desorbed from the strong additional solution (20), by means of which the equilibrium line for the outgoing intermediate-pressure vapour (24) is determined after completion of the heat absorption from the external heat source (1),
• a first additional solution heat exchanger (19c),
• an additional solution pump (17),
• a main cycle/additional lowest pressure absorber (12a) for absorbing lowest-pressure vapour (34) by means of the weak solution (8) and the weak additional solution (21) is additionally added to a intermediate-pressure absorber (14) and to a low-pressure absorber (13),
• and that a lower pressure level than in the low-pressure absorber (13) is set for the main cycle/additional lowest-pressure absorber (12a),
• the solution extracted from the lowest-pressure absorber that is added being raised as a slightly enriched solution (7) to the low-pressure level of the low-pressure absorber (13) by means of a third solution pump (10c) and being fed to the latter for absorption,
• the lowest-pressure vapour (34) to be absorbed in the lowest-pressure absorber that is added being relieved to approximately the same pressure level and being fed to the lowest-pressure absorber for absorption,
• the high-pressure relief apparatus (31 b) being designed to relieve a partial stream of vapour from the high pressure level to the lowest pressure and for extracting vapour at low pressure,
• the second additional cycle being operated between intermediate pressure and lowest pressure and a lower pressure being determined for the additional intermediate-pressure desorber (25) that is added than for each of the other high-pressure desorbers (3, 3a, 3b, 3c, 9),
• a supply of heat from the stream of the external heat source (1) to the additional intermediate-pressure desorber (25) that is added taking place, the temperature level of the supply of heat being set to be lower than that for high-pressure desorption and of any intermediate superheating that is added,
• the additional intermediate-pressure vapour (24) being conducted from the additional intermediate-pressure desorber (25) that is added to the intermediate-pressure absorber (14),
• the strong additional solution (20) is raised by an additional solution pump (17) to the pressure level of the additional intermediate-pressure desorber (25) that is added,
• the strong additional solution (20) is conducted and fed to the additional intermediate-pressure desorber (25) that is added,
• the weak additional solution (21) is united with the fourth partial stream (8d) of weak solution, and this partial stream of weak main/additional solution (22) is conducted through at least one solution heat exchanger (19a, 19c, 19d) in order to emit heat, and is lowered by a main cycle/additional throttle valve (16c) to the lowest pressure and is conducted to the main cycle/additional lowest pressure absorber (12a) for absorption,
• additional vapour (24) passing into the additional cycle by being fed to the intermediate-pressure absorber (14) from the additional cycle into the main cycle, and part of the lowest pressure vapour (34) passing into the additional cycle by being fed to the main cycle/additional lowest pressure absorber (12a), equalisation of the different water percentages by weight of the two vapours (24 and 33) conducted from one partial cycle into the other taking place in the main cycle/additional lowest pressure absorber (12a) through which solutions of both cycles stream,
• according to the principle of two-time supply of heat, the amount of additional vapour (24) desorbed in the additional intermediate-pressure desorber (25) that is added determines the amount of growth of the amount of vapour that can be desorbed in the high-pressure desorption and absorbable to lowest pressure.

14. The working procedure according to any of Claims 5 to 11, or 13, **characterised in that** the relief is executed in two stages with a low-pressure relief apparatus (38) that is additionally added to the main cycle,
• relief taking place in the high-pressure relief apparatus (31) from the high-pressure level at least to the intermediate-pressure level, maximum to the pressure level of an absorber the pressure level of which is higher than that of the absorber with the lowest pressure level,
• the vapour (32, 33, 36) that is relieved in the high-pressure relief apparatus (31) being divided into a first partial stream of vapour (32a, 33a) that is fed to an absorber (13, 13a, 14) that is at the same or nearly the same pressure, and being divided into a second partial stream of vapour (32b, 33b) that is fed to the low-pressure relief apparatus (38), and
• relieved vapour (33, 34) being fed from the low-pressure relief apparatus (38) to the absorber with the lowest pressure for absorption (12a, 13, 13a).

15. The working procedure according to either of Claims 10 or 11, **characterised in that** in order to produce cold an absorption cycle for a strong absorption cycle solution is added to the main cycle, and for a weak absorption cycle solution the following apparatuses and specific procedural steps are additionally added:
• an absorption cycle condenser (42),
• an absorption cycle liquid aftercooler (43),
• an absorption cycle evaporator (44),
• an absorption cycle throttle valve (47),
• a main cycle/absorption cycle solution pump (10e),
• the first high-pressure desorber (9) for also desorbing the absorption cycle high-pressure vapour (28e) is extended to form a main cycle/absorption cycle high-pressure desorber (9a),
• the low-pressure absorber (13) for also absorbing the weak absorption cycle solution is extended to form a main cycle/absorption cycle low-pressure absorber (13c),
• the main cycle and the absorption cycle being operated between high pressure and low pressure,
• the strong solution (2) being increased by the strong absorption cycle solution to form the strong main cycle/absorption cycle solution (11),
• the strong main cycle/absorption cycle solution (11) being raised from low pressure to a high pressure level by means of a main cycle/absorption cycle solution pump (10e),
• the strong main cycle/absorption cycle solution (11) being conducted through a main cycle/absorption cycle solution heat exchanger (19e) in order to absorb heat,
• and then the second partial stream of strong solution (2c) being separated from the main cycle/absorption cycle solution (11),
• and then the strong main cycle/absorption cycle solution (11) being conducted to the main cycle/absorption cycle high pressure desorber (9a) and being fed into the latter,
• the weak solution (8) being extended by the weak absorption cycle solution to form the weak main cycle/absorption cycle solution (23),
• the weak main cycle/absorption cycle solution (23) being conducted through the main cycle/absorption cycle solution heat exchanger (19e) in order to emit heat,
• and being lowered by the main cycle/absorption cycle throttle valve (16d) to low pressure and being conducted to the main cycle/absorption cycle low pressure absorber (13c) for absorption,
• the high-pressure vapour (28) being divided into two partial streams by means of the second three-way valve (50),
• a first partial stream of high-pressure vapour (28a) being fed to the superheater (30), a second partial stream of high-pressure vapour (28b) being fed to the absorption cycle condenser (42) for condensation,
• the second partial stream of high-pressure vapour (28b) being liquefied in the absorption cycle condenser (42) with heat emission to a cooling medium to form a nearly pure absorption cycle ammonia liquid (46),
• the absorption cycle ammonia liquid (46) being conducted through an absorption cycle liquid aftercooler (43) in order to emit heat and then being lowered from the upper intermediate pressure to low pressure by means of an absorption cycle throttle valve (47), and the absorption cycle ammonia liquid (46) then being conducted to the absorption cycle evaporator (44),
• the absorption cycle ammonia liquid (46) in the absorption cycle evaporator (44) being evaporated by absorbing heat from a coolant to form absorption cycle ammonia low-pressure vapour (33c),
• the absorption cycle ammonia low-pressure vapour (33c) being conducted through the absorption cycle liquid aftercooler (43) in order to absorb heat,
• the superheated absorption cycle ammonia low-pressure vapour (33d) being conducted from the absorption cycle liquid aftercooler (43) to the main cycle/absorption cycle low-pressure absorber (13c) for absorption,
• the high-pressure relief apparatus (31) being designed to relieve from the high-pressure level to low pressure,
• the low-pressure vapour (33) being conducted from the high-pressure relief apparatus (31) to the main cycle/absorption cycle low-pressure absorber (13c) for absorption.

## Revendications

1. Procédé de mise en oeuvre d'un cycle de production d'énergie de sorption pour un mélange binaire constitué d'ammoniaque et d'eau, comportant les composants principaux d'un cycle dénommé ci-après circuit principal :
- au moins un générateur haute pression (3, 3a, 3b, 3c, 9) pour extraire d'une solution riche (2, 2a, 2b) amenée une vapeur haute pression (28) constituée d'ammoniaque et d'eau,
- un surchauffeur (30) pour surchauffer une vapeur haute pression (28) constituée d'ammoniaque et d'eau,
- un appareil de décompression haute pression (31) fournissant un travail, pour décompresser la vapeur haute pression (28),
- au moins un absorbeur (12a, 13, 14, 14a, 14b) pour absorber la vapeur décompressée,
- au moins un premier échangeur de chaleur de solution (19a) pour le transfert de chaleur de la solution pauvre (8) à la solution riche (2),
- au moins une source de chaleur,
**caractérisé en ce que**
- la solution pauvre (8) est amenée à un absorbeur (12a, 12b, 13, 13a, 14) fonctionnant au niveau de pression le plus faible à des fins d'absorption, et la solution pauvre (8) est abaissée à ce niveau de pression à l'aide d'au moins une vanne d'étranglement (16a),
- la solution riche (2) est élevée au haut niveau de pression au moyen d'une première pompe de solution (10) par un absorbeur (14, 14a, 14b) travaillant au niveau de pression le plus élevé,
- et la solution riche (2) est amenée à au moins un générateur haute pression (3, 3b, 9) à des fins d'extraction,
- la vapeur haute pression (28) est détendue au moins dans une deuxième section de la détente, avec condensation partielle,
- dans lequel on dépasse le point de rosée, à une pression de 9,5 à 15 bar - de préférence de 13,5 bar - et au moins une partie de la vapeur haute pression (28) est détendue pour atteindre une pression finale de 1,1 à 4 bar, de préférence de 1,5 à 2 bar,
- et la vapeur haute pression (28) à détendre est réglée à une proportion en poids d'eau de 3 à 10 %, de préférence de 6 %,
- et **en ce que** la proportion en poids d'eau présente dans la vapeur haute pression (28), et éventuellement sa température de surchauffe, est établie de manière que la proportion de vapeur demeure, au terme de la détente, au-dessus d'une limite d'impact de gouttes dans l'appareil de décompression haute pression (31),
- dans lequel la proportion en poids d'eau est réglée selon l'une au moins des étapes de procédé suivantes :
- on produit, au moins dans un générateur haute pression (9), de la vapeur haute pression au point d'équilibre par rapport à la solution entrante et, dans au moins un générateur haute pression (3, 9b), de la vapeur haute pression au point d'équilibre par rapport à la solution sortante,
- on fixe la proportion en poids d'eau de la vapeur haute pression dans un rectificateur (18), le rectificateur étant conçu pour une rectification partielle,
- on règle la proportion en poids d'eau de la vapeur haute pression par apport et par vaporisation de solution dans le surchauffeur (10, 11).

2. Procédé de mise en oeuvre selon la revendication 1, **caractérisé en ce que** les appareils suivants sont en outre ajoutés :
- une deuxième pompe de solution (10a) et, en amont d'un absorbeur moyenne pression (14), un absorbeur basse pression (13) pour absorber la vapeur basse pression (33),
et **en ce que**, de plus, les étapes de procédé spécifiques suivantes sont ajoutées :
- on règle le niveau de pression de l'absorbeur basse pression (13) plus bas que celui de l'absorbeur moyenne pression (14),
- et on élève, en provenance de l'absorbeur basse pression (13), un courant principal de solution enrichie (4) au moyen de la deuxième pompe de solution (10a) afin qu'il atteigne le niveau de moyenne pression de l'absorbeur moyenne pression (14) et on l'amène à ce dernier à des fins d'absorption, et on détend, dans l'appareil de décompression haute pression (31, 31a), la vapeur basse pression (33) à absorber dans l'absorbeur basse pression (13) afin qu'elle atteigne un niveau de pression approximativement identique et on l'amène à l'absorbeur basse pression (13) à des fins d'absorption.

3. Procédé de mise en oeuvre selon la revendication 2, **caractérisé en ce que** les appareils suivants sont en outre ajoutés :
une troisième pompe de solution (10b),
un deuxième échangeur de chaleur de solution (19b),
et **en ce que**, de plus, les étapes de procédé spécifiques suivantes sont ajoutées :
• en aval de l'absorbeur basse pression (13), la solution enrichie sortante est divisée en ledit courant principal (4) de solution enrichie et un premier courant partiel (4a) de solution enrichie,
• un premier courant partiel (4a) de solution enrichie est élevé à un haut niveau de pression au moyen de la troisième pompe de solution (10b), et le premier courant partiel (4a) de solution enrichie suit le chemin du deuxième échangeur de chaleur de solution (19b) à des fins d'extraction,
• la solution pauvre (8), après l'émission de chaleur, à des fins de production de vapeur haute pression, est divisée en un quatrième (8d) et un cinquième courant partiel (8e) de solution pauvre, et il se forme dans l'échangeur de chaleur de solution (19a, 19b), à partir de la solution pauvre (8), avant l'émission de chaleur, un quatrième (8d) et un cinquième courant partiel (8e) de solution pauvre,
- le premier courant partiel (4a) de solution enrichie est réchauffé dans le deuxième échangeur de chaleur de solution (19b) à contre-courant d'un cinquième courant partiel (8e) de solution pauvre,
- la solution riche (2) est réchauffée dans le premier échangeur de chaleur de solution (19a) à contre-courant d'un quatrième courant partiel (8d) de solution pauvre,
- et le quatrième courant partiel (8d) de solution pauvre et le cinquième courant partiel (8e) de solution pauvre sont de nouveau réunis en solution pauvre (8) après avoir traversé les échangeurs de chaleur de solution (19a, 19b).

4. Procédé de mise en oeuvre selon l'une des revendications 1 à 3, **caractérisé en ce que** des appareils de génération sont ajoutés dans la forme de réalisation ci-dessous et sont exploités selon les étapes de procédé spécifiques suivantes :
• on ajoute un cycle de Clausius-Rankine à milieu mono-substance « eau »,
• on apporte à celui-ci de la chaleur à un niveau de température sensiblement plus élevé que celle apportée au cycle de production d'énergie de sorption et la chaleur apportée est exploitée pour produire un travail mécanique,
• dans lequel l'appareil de détente qui y appartient est conçu sous la forme d'une turbine à contre-pression (110) à prise de vapeur ou soutirage de vapeur et la détente de la vapeur d'eau finit avantageusement sous la forme de contre-pression au-dessus de 100 °C,
• dans lequel la vapeur soutirée (108) et la vapeur de contre-pression (104) sont introduites dans le cycle de production d'énergie de sorption et servent de source de chaleur sous l'effet de la condensation de la vapeur d'eau dans le cycle de production d'énergie de sorption,
• dans lequel la vapeur soutirée (108) présente une température supérieure à celle de la vapeur de contre-pression (104),
• et une fois le transfert de chaleur réalisé, le produit de condensation d'eau formé est renvoyé vers le cycle de Clausius-Rankine.

5. Procédé de mise en oeuvre selon l'une des revendications 1 à 3, **caractérisé en ce que** la source de chaleur présente les caractéristiques suivantes et **en ce que** d'autres appareils de génération de haute pression sont ajoutés dans la forme de réalisation ci-dessous et d'autres étapes de procédé spécifiques sont mises en oeuvre:
• on utilise une source de chaleur basse température à gradient de température,
• on ajoute un deuxième générateur haute pression (3) avec transfert de chaleur à travers une paroi selon le principe d'un générateur de bulles et avec guidage à contre-courant de la source de chaleur basse température (1) vers le courant principal de solution riche évaporant, moyennant quoi la ligne d'équilibre est destinée à un premier courant partiel (5a) de mélange à deux phases sortant, au commencement de l'absorption de chaleur de la source de chaleur basse température (1),
• on ajoute un troisième générateur haute pression (3a) avec transfert de chaleur à travers une paroi selon le principe d'un générateur de bulles avec guidage à contre-courant de la solution pauvre (8) émettrice de chaleur vers le premier courant partiel (2b) de solution riche évaporant, moyennant quoi la ligne d'équilibre est destinée à un deuxième courant partiel (5b) de mélange à deux phases sortant, au commencement de l'absorption de chaleur de la solution pauvre (8),
• on ajoute un séparateur (6),
• dans lequel le premier courant partiel (5a) de mélange à deux phases issu du deuxième générateur haute pression (3) et le deuxième courant partiel (5b) de mélange à deux phases issu du troisième générateur haute pression (3a) sont conduits au séparateurs (6) et introduits dans celui-ci,
• dans lequel, dans le séparateur (6), les courants partiels (5a, 5b) de mélange à deux phases sont divisés en une vapeur haute pression à teneur en eau supérieure (27) et en un courant de solution pauvre,
on ajoute de plus un rectificateur (18) conçu pour une rectification partielle,
• avec lequel un deuxième courant partiel (2c) de solution riche est introduit en tête du rectificateur (18), et la vapeur haute pression (28) introduite est partiellement condensée dans le rectificateur (18) sous l'effet d'un échange de chaleur et d'un échange de masse avec le deuxième courant partiel (2c) de solution riche, avec formation du liquide de reflux du circuit principal,
et à la différence du mode opératoire dans lequel on apporte de l'ammoniaque liquide et on l'évapore, on extrait ici de la vapeur de travail au moins également hors d'un deuxième courant partiel (2c) de solution riche et on chauffe la solution de ce deuxième courant partiel (2c) de solution riche,
• dans lequel la quantité de deuxième courant partiel (2c) de solution riche étant telle que la vapeur haute pression (28) sortante soit réglée sur une proportion en poids d'eau de 3 à 8 %, de préférence de 6 %, au moyen d'une rectification partielle,
• un reflux renforcé (26) sortant du fond du rectificateur est introduit dans le séparateur (6),
• et ce reflux renforcé, conjointement à la solution isolée à l'issue de la séparation, sort du séparateur (6) sous la forme de solution pauvre (8),
• et le courant de la source de chaleur basse température (1), à des fins de transfert de chaleur, est tout d'abord amené à traverser un surchauffeur (30), puis le deuxième générateur haute pression (3).

6. Procédé de mise en oeuvre selon l'une des revendications 1 à 3, **caractérisé en ce que** la source de chaleur présente les caractéristiques suivantes et **en ce que** des appareils de génération de haute pression sont ajoutés dans la forme de réalisation ci-dessous et mis en oeuvre selon les étapes de procédé spécifiques suivantes :
• on emploie une source de chaleur basse température (1) à gradient de température,
• on ajoute un deuxième générateur haute pression (3) avec transfert de chaleur à travers une paroi selon le principe d'un générateur de bulles avec guidage à contre-courant de la source de chaleur basse température (1) émettrice de chaleur vers le courant principal de solution riche (2a) évaporant, moyennant quoi la ligne d'équilibre est destinée à un premier courant partiel (5a) de mélange à deux phases sortant, au commencement de l'absorption de chaleur de la source de chaleur basse température (1),
• on ajoute un troisième générateur haute pression (3a) avec transfert de chaleur à travers une paroi selon le principe d'un générateur de bulles avec guidage à contre-courant de la solution pauvre (8) émettrice de chaleur vers le premier courant partiel (2b) de solution riche évaporant, moyennant quoi la ligne d'équilibre est destinée à un deuxième courant partiel (5b) de mélange à deux phases sortant, au commencement de l'absorption de chaleur de la solution pauvre (8),
• on ajoute un séparateur (6),
• dans lequel le premier courant partiel (5a) de mélange à deux phases issu du deuxième générateur haute pression (3) et le deuxième courant partiel (5b) de mélange à deux phases issu du troisième générateur haute pression (3a) sont conduits au séparateur (6) et introduits dans celui-ci,
• dans lequel, dans le séparateur (6), les courants partiels (5a, 5b) de mélange à deux phases sont divisés en une vapeur haute pression à teneur en eau supérieure (27) et en un courant de solution pauvre,
• on ajoute un rectificateur (18) conçu pour une rectification partielle,
• dans lequel un premier courant partiel (4a) de solution enrichie est introduit en tête du rectificateur (18), la vapeur haute pression à teneur en eau supérieure (27) introduite est partiellement condensée dans le rectificateur (18) sous l'effet d'un échange de chaleur et d'un échange de masse avec le premier courant partiel (4a) de solution enrichie, avec formation du liquide de reflux du circuit principal,
• et à la différence du mode opératoire dans lequel on apporte au rectificateur de l'ammoniaque liquide et on l'évapore, on extrait ici de la vapeur de travail au moins également hors du premier courant partiel (4a) de solution enrichie et on chauffe la solution de ce premier courant partiel (4a) de solution enrichie,
• dans lequel la quantité de premier courant partiel (4a) de solution enrichie est telle que la vapeur haute pression (28) sortante soit réglée sur une proportion en poids d'eau de 3 à 8 %, de préférence de 6 %, au moyen d'une rectification partielle,
• un reflux renforcé (26) sortant du fond du rectificateur est introduit dans le séparateur (6), et le reflux renforcé, conjointement à la solution isolée à l'issue de la séparation, sort du séparateur (6) sous la forme de solution pauvre (8),
- et le courant de la source de chaleur basse température (1), à des fins de transfert de chaleur, est tout d'abord amené à traverser un surchauffeur (30), puis le deuxième générateur haute pression (3).

7. Procédé de mise en oeuvre selon la revendication 1 ou 2, **caractérisé en ce que** la source de chaleur présente les caractéristiques suivantes et **en ce que** des appareils de génération sont ajoutés dans la forme de réalisation ci-dessous et sont mis en oeuvre selon les étapes de procédé spécifiques suivantes :
• on emploie une source de chaleur basse température (1) à gradient de température,
• on ajoute un deuxième générateur haute pression (3) avec transfert de chaleur à travers une paroi selon le principe d'un générateur de bulles avec guidage à contre-courant de la source de chaleur basse température (1) émettrice de chaleur vers le courant principal de solution riche (2a) évaporant, moyennant quoi la ligne d'équilibre est destinée à un premier courant partiel (5a) de mélange à deux phases sortant, au commencement de l'absorption de chaleur de la source de chaleur basse température (1),
• on ajoute un troisième générateur haute pression (3a) avec transfert de chaleur à travers une paroi selon le principe d'un générateur de bulles avec guidage à contre-courant de la solution pauvre (8) émettrice de chaleur vers le premier courant partiel (2b) de solution riche évaporant, moyennant quoi la ligne d'équilibre est destinée à un deuxième courant partiel (5b) de mélange à deux phases sortant, au commencement de l'absorption de chaleur de la solution pauvre (8),
• dans lequel les quantités des deux courants partiels de solution riche (2a, 2b) sont suffisamment faibles pour que l'écart de température entre la solution et le courant de la source de chaleur basse température (1), au début et à la fin de son transfert de chaleur, soit établi entre 4 et 10 kelvin, de préférence à 5 kelvin,
• dans lequel la division de la solution riche (2) en deux courants partiels (2a, 2b) s'effectue en aval du premier échangeur de chaleur de solution (19a),
• on ajoute un séparateur (6),
• dans lequel le premier courant partiel (5a) de mélange à deux phases issu du deuxième générateur haute pression (3) et le deuxième courant partiel (5b) de mélange à deux phases issu du troisième générateur haute pression (3a) sont conduits au séparateur (6) et introduits dans celui-ci,
• dans lequel, dans le séparateur (6), les courants partiels (5a, 5b) de mélange à deux phases sont séparés en vapeur haute pression (28) et en un courant principal de solution enrichie (4),
• on ajoute un premier générateur haute pression (9) avec transfert de chaleur à travers une paroi selon le principe d'un générateur à ruissellement à écoulements parallèles d'un premier courant partiel (1a) émetteur de chaleur issu d'une source de chaleur basse température et de vapeur extraite du courant principal de solution enrichie (4),
• le courant principal de solution enrichie (4) est conduit du séparateur jusqu'au premier générateur haute pression (9) ajouté, à des fins d'extraction,
• dans lequel les quantités du premier courant partiel (1a) de la source de chaleur basse température sont suffisamment faibles pour que, dans le premier générateur haute pression (9) ajouté, l'écart de température par rapport à la solution, au début et à la fin de son transfert de chaleur, soit établi entre 4 et 10 kelvin, de préférence à 5 kelvin,
• la solution pauvre (8) sortant du premier générateur haute pression (9) ajouté est conduite jusqu'au troisième générateur haute pression (3a) ajouté, à des fins d'extraction, puis est amenée à traverser le premier échangeur de chaleur de solution (19a),
• et le courant de la source de chaleur basse température (1), à des fins de transfert de chaleur, est tout d'abord amené à traverser un surchauffeur (30), avant d'être divisé en un premier (1a) et un deuxième courant partiel (1b), le premier courant partiel (1a) de la source de chaleur basse température est amené à traverser le premier générateur haute pression (9) ajouté, après quoi le premier courant partiel (1a) de la source de chaleur basse température est de nouveau réuni avec le deuxième courant partiel (1b) de la source de chaleur basse température et est amené à traverser le deuxième générateur haute pression (3) ajouté,
• le premier courant partiel de vapeur haute pression (28a) issu du premier générateur haute pression (9) ajouté et le deuxième courant partiel de vapeur haute pression (28b) issu du séparateur (6) sont conduits au surchauffeur.

8. Procédé de mise en oeuvre selon l'une des revendications 1 à 3, **caractérisé en ce que** la source de chaleur présente les caractéristiques suivantes et **en ce que** des appareils de génération sont ajoutés dans la forme de réalisation ci-dessous et sont mis en oeuvre selon les étapes de procédé spécifiques suivantes :
• on emploie une source de chaleur basse température à gradient de température,
• on ajoute un deuxième générateur haute pression (3) avec transfert de chaleur à travers une paroi selon le principe d'un générateur de bulles avec guidage à contre-courant de la source de chaleur basse température (1) émettrice de chaleur vers le courant principal de solution riche (2a) évaporant, moyennant quoi la ligne d'équilibre est destinée à un premier courant partiel (5a) de mélange à deux phases sortant, au commencement de l'absorption de chaleur de la source de chaleur basse température (1),
• on ajoute un troisième générateur haute pression (3a) avec transfert de chaleur à travers une paroi selon le principe d'un générateur de bulles avec guidage à contre-courant de la solution pauvre (8) émettrice de chaleur vers le deuxième courant partiel (2b) de solution riche évaporant, moyennant quoi la ligne d'équilibre est destinée à un deuxième courant partiel (5b) de mélange à deux phases sortant, au commencement de l'absorption de chaleur de la solution pauvre (8),
• dans lequel les quantités des deux courants partiels de solution riche (2a, 2b) sont suffisamment faibles pour que l'écart de température entre cette solution riche (2a, 2b) et le courant de la source de chaleur basse température (1), au début et à la fin de son transfert de chaleur, soit établi entre 4 et 10 kelvin, de préférence à 5 kelvin,
• dans lequel la division de la solution riche (2) en deux courants partiels (2a, 2b) s'effectue en aval du premier échangeur de chaleur de solution (19a),
• on ajoute un séparateur (6),
• dans lequel le premier courant partiel (5a) de mélange à deux phases issu du deuxième générateur haute pression (3) ajouté et le deuxième courant partiel (5b) de mélange à deux phases issu du troisième générateur haute pression (3a) ajouté sont conduits au séparateur (6) et introduits dans celui-ci,
• dans lequel, dans le séparateur (6), les courants partiels (5a, 5b) de mélange à deux phases sont séparés en vapeur haute pression (28) et en un courant principal de solution enrichie (4),
• on ajoute un premier générateur haute pression (9) avec transfert de chaleur à travers une paroi selon le principe d'un générateur à ruissellement à écoulements parallèles du premier courant partiel (1a) émetteur de chaleur, issu de la source de chaleur basse température, vers la vapeur extraite du courant principal de solution enrichie (4),
• le courant principal de solution enrichie (4) issu du séparateur est conduit au premier générateur haute pression (9) ajouté, à des fins d'extraction,
• le premier courant partiel de solution enrichie (4a) est amené au premier générateur haute pression (9) ajouté, à des fins d'extraction,
• dans lequel les quantités du premier courant partiel de solution enrichie (4a) sont suffisamment faibles pour que, dans le premier générateur haute pression (9) ajouté, l'écart de température par rapport aux solutions amenées (4, 4a), au début et à la fin de son transfert de chaleur, soit établi entre 4 et 10 kelvin, de préférence à 5 kelvin,
• un premier courant partiel (8a) et un deuxième courant partiel de solution pauvre (8b) sont prélevés du premier générateur haute pression (9) ajouté,
• le premier courant partiel de solution pauvre (8a) est conduit jusqu'au troisième générateur haute pression (3a) ajouté, à des fins d'extraction, avant d'être divisé en un troisième (8c) et un quatrième courant partiel de solution pauvre (8d),
• le deuxième courant partiel de solution pauvre (8b) est réuni au troisième courant partiel de solution pauvre (8c) pour former le cinquième courant partiel de solution pauvre (8e),
• et le courant de la source de chaleur basse température (1), à des fins de transfert de chaleur, est tout d'abord amené à traverser un surchauffeur (30), puis le premier générateur haute pression (9) ajouté et le deuxième générateur haute pression (3) ajouté.

9. Procédé de mise en oeuvre selon la revendication 3, **caractérisé en ce que** la source de chaleur présente les caractéristiques suivantes et d'autres appareils de génération de haute pression sont ajoutés dans la forme de réalisation ci-dessous et d'autres étapes de procédé spécifiques sont mises en oeuvre :
• on emploie une source de chaleur basse température à gradient de température,
• on ajoute un cinquième générateur haute pression (3c) avec transfert de chaleur à travers une paroi selon le principe d'un générateur de bulles avec guidage à contre-courant du courant de la source de chaleur basse température (1) émettrice de chaleur vers le deuxième courant partiel de solution riche (4b) évaporant, la ligne d'équilibre étant destinée à un troisième courant partiel (5c) de mélange à deux phases sortant au commencement de l'absorption de chaleur du courant de la source de chaleur basse température (1),
• on ajoute un deuxième générateur haute pression (3) avec transfert de chaleur à travers une paroi selon le principe d'un générateur de bulles avec guidage à contre-courant du courant de la source de chaleur basse température (1) émettrice de chaleur vers la solution riche (2) évaporante, moyennant quoi la ligne d'équilibre est destinée à un premier courant partiel (5a) de mélange à deux phases sortant, au commencement de l'absorption de chaleur du courant de la source de chaleur basse température (1),
• dans lequel la quantité de solution riche (2) est suffisamment faible pour que l'écart de température entre la solution et la source de chaleur basse température (1), au début et à la fin de son transfert de chaleur, soit établi entre 3 et 10 kelvin, de préférence à 5 kelvin,
• on ajoute une colonne de distillation (15) à écoulement de la solution pauvre (8) indirectement transmettrice de chaleur du bas vers le haut,
• dans lequel le troisième courant partiel (5c) de mélange à deux phases est conduit, du cinquième générateur haute pression (3c) ajouté, jusqu'à la colonne de distillation (15) et est introduit dans le fond de celle-ci,
• le premier courant partiel (5a) de mélange à deux phases est conduit, du deuxième générateur haute pression (3) ajouté, jusqu'à la colonne de distillation (15) et est introduit dans la partie médiane de celle-ci,
• un troisième courant partiel (4c) de solution riche enrichie est introduit en tête de la colonne de distillation (15),
• la solution pauvre (8) est soutirée du fond de la colonne de distillation (15) et est renvoyée à des fins d'émission de chaleur indirecte,
• les deux courants partiels (5a, 5c) de mélange à deux phases introduits sont séparés en leurs phases et se condensent partiellement sous l'effet d'un échange de chaleur et d'un échange de masse avec le troisième courant partiel (4c) de solution enrichie,
• et on extrait du troisième courant partiel (4c) de solution enrichie, en sus de l'extraction par la solution pauvre (8) renvoyée, de la vapeur de travail, et on chauffe la solution de ce troisième courant partiel (4c) de solution enrichie,
• la quantité du troisième courant partiel (4c) de solution enrichie est telle qu'une rectification partielle et une extraction permettent de régler la proportion en poids d'eau de la vapeur haute pression (28) sortant de la colonne de distillation (15) à une proportion de 3 à 8 %, de préférence de 6 %,
• la division du premier courant partiel (4a) de solution enrichie en deux courants partiels (4a, 4b) s'effectue en aval du deuxième échangeur de chaleur de solution (19b),
• et le courant de la source de chaleur basse température (1), à des fins de transfert de chaleur, est tout d'abord amené à traverser un surchauffeur (30), puis le cinquième générateur haute pression (3c) ajouté avant de traverser le deuxième générateur haute pression (3) ajouté.

10. Procédé de mise en oeuvre selon l'une des revendications 1 à 4, **caractérisé en ce que** la source de chaleur présente les caractéristiques suivantes et **en ce que** des appareils de génération sont ajoutés dans la forme de réalisation ci-dessous et sont mis en oeuvre selon les étapes de procédé spécifiques suivantes :
• la source de chaleur exploitée consiste en de la vapeur de contre-pression (104) en condensation,
• on ajoute un premier générateur haute pression (9) avec transfert de chaleur à travers une paroi selon le principe d'un générateur à ruissellement à écoulements parallèles de la vapeur de contre-pression (104) en condensation émettrice de chaleur vers la vapeur extraite du courant principal de solution riche (2a), moyennant quoi la ligne d'équilibre est destinée au premier courant partiel de vapeur haute pression (28a) à la fin de l'absorption de chaleur,
• la solution riche (2) issue du premier échangeur de chaleur de solution (19a) est conduite au premier générateur haute pression (9) à des fins d'extraction,
• la première solution pauvre (8) sortant du premier générateur haute pression (9) est amenée vers/à traverser le premier échangeur de chaleur de solution (19a),
• la vapeur haute pression (28) est conduite du premier générateur haute pression (9) jusqu'au surchauffeur (30),
• on introduit un quatrième courant partiel de solution riche (2e) dans le surchauffeur à des fins d'évaporation et de surchauffage, de manière à élever la proportion d'ammoniaque de la vapeur haute pression surchauffée (29) en comparaison à la vapeur haute pression (28) introduite dans le surchauffeur,
• dans lequel la séparation du courant partiel de solution (2e) amené au surchauffeur s'effectue après le réchauffage de la solution (19b),
• dans lequel de la chaleur issue de la source de chaleur externe (1, 104) est transmise au premier générateur haute pression (9) à partir de sa plage de température la plus élevée ou celle juste en deçà,
• dans lequel de la chaleur issue de la source de chaleur externe (1, 104) est transmise au surchauffeur (30) à partir de sa plage de température la plus élevée.

11. Procédé de mise en oeuvre selon l'une des revendications 1 à 4, **caractérisé en ce que** la source de chaleur présente les caractéristiques suivantes et **en ce que** des appareils de génération sont ajoutés dans la forme de réalisation ci-dessous et sont mis en oeuvre selon les étapes de procédé spécifiques suivantes :
• on emploie une source de chaleur basse température (1) à gradient de température ou une vapeur soutirée (108) en condensation voire une vapeur de contre-pression (104) en condensation,
• on ajoute un sixième générateur haute pression (9b) avec transfert de chaleur à travers une paroi selon le principe d'un générateur à ruissellement avec guidage à contre-courant d'une source de chaleur basse température (1) émettrice de chaleur, ou de vapeur soutirée (108) en condensation, vers la solution riche (2) évaporante, moyennant quoi la ligne d'équilibre est destinée à un deuxième courant partiel (28b) sortant, au commencement de l'absorption de chaleur de la source de chaleur basse température (1) ou de la vapeur de contre-pression (104) en condensation,
• dans lequel on prélève de la partie inférieure du sixième générateur haute pression (9b), séparément, un deuxième courant partiel de vapeur haute pression (28b) et un courant principal de solution enrichie (4),
• on ajoute un premier générateur haute pression (9) avec transfert de chaleur à travers une paroi selon le principe d'un générateur à ruissellement à écoulements parallèles d'une source de chaleur basse température (1) émettrice de chaleur, ou de vapeur soutirée (108) en condensation, vers la vapeur extraite de la solution enrichie (4, 4b), moyennant quoi la ligne d'équilibre est destinée au premier courant partiel de vapeur haute pression (28a) à la fin de l'absorption de chaleur,
• et on conduit un deuxième courant partiel de solution enrichie (4b) jusqu'au premier générateur haute pression (9) à des fins d'extraction,
• on ajoute un septième générateur haute pression (9a) avec transfert de chaleur à travers une paroi selon le principe d'un générateur à ruissellement à écoulements parallèles du premier courant partiel de solution pauvre (8a) émetteur de chaleur vers de la vapeur extraite du quatrième courant partiel de solution enrichie (4f), moyennant quoi la ligne d'équilibre est destinée au troisième courant partiel de vapeur haute pression (28c) à la fin de l'absorption de chaleur,
• dans lequel de la chaleur issue de la source de chaleur basse température (1) à partir de la plage de température la plus élevée de celle-ci ou de la vapeur de contre-pression (108) en condensation est transmise au premier générateur haute pression (9) et au surchauffeur (30),
• dans lequel le niveau de température de l'apport de chaleur auprès du premier générateur haute pression (9) et du surchauffeur (30) est supérieur à celui de l'apport de chaleur auprès du sixième générateur haute pression (9a),
• le premier courant partiel de solution pauvre (8a) sortant du premier générateur haute pression (9) est conduit au septième générateur haute pression (9a) à des fins d'extraction puis est réuni à celui sortant du septième générateur haute pression (9a) pour former la solution pauvre (8),
• le premier courant partiel de vapeur haute pression (28a) issu du premier générateur haute pression (9) et le deuxième courant partiel de vapeur haute pression (28b) issu du sixième générateur haute pression (9b) ainsi que le troisième courant partiel de vapeur haute pression (28c) issu du septième générateur haute pression (9a) sont conduits au surchauffeur (30),
• le deuxième courant partiel de solution pauvre (8b) issu du septième générateur haute pression (9a) est réuni avec le premier courant partiel de solution pauvre (8a) en amont du deuxième échangeur de chaleur de solution (19b) pour former la solution pauvre (8),
• on introduit un cinquième courant partiel de solution enrichie (4e) dans le surchauffeur à des fins d'évaporation et de surchauffage, de manière à élever la proportion d'ammoniaque de la vapeur haute pression surchauffée (29) en comparaison avec la vapeur haute pression (28) introduite dans le surchauffeur,
• dans lequel la division du premier courant partiel de solution enrichie (4a) en trois courants partiels (4b, 4e, 4f) s'effectue en aval du deuxième échangeur de chaleur de solution (19b).

12. Procédé de mise en oeuvre selon l'une des revendications 5 à 11, **caractérisé en ce que** l'appareil de décompression haute pression fournissant un travail est conçu sous la forme d'un appareil de décompression haute pression (31a) à soutirage de vapeur d'une telle façon qu'il est conçu pour la détente d'un courant partiel de vapeur d'un niveau de pression élevé jusqu'à une basse pression et pour un premier soutirage de vapeur en cas de moyenne pression, une vapeur à moyenne pression (32) soutirée de l'appareil de décompression haute pression (31a) à soutirage de vapeur est amenée à un absorbeur basse pression (13, 13a) à des fins d'absorption.

13. Procédé de mise en oeuvre selon l'une des revendications 5 à 9, **caractérisé en ce qu'**un circuit additionnel pour une solution additionnelle riche (20) et pour une solution additionnelle pauvre (21) est encore ajouté au circuit principal, avec les appareils suivants et les étapes de procédé spécifiques suivantes :
• on ajoute un générateur de moyenne pression additionnel (25) à écoulements parallèles du courant d'une source de chaleur externe (1) émettrice de chaleur et à la vapeur extraite de la solution additionnelle riche (20), moyennant quoi la ligne d'équilibre est destinée à la vapeur à moyenne pression (24) sortant au terme de l'absorption de chaleur de la source de chaleur externe (1),
• un premier échangeur de chaleur de solution additionnel (19c),
• une pompe de solution additionnelle (17),
• en amont d'un absorbeur moyenne pression (14) et d'un absorbeur basse pression (13), on ajoute encore un absorbeur ultra-basse pression de circuit principal/additionnel (12a) à des fins d'absorption de vapeur ultra-basse pression (34) au moyen de la solution pauvre (8) et de la solution additionnelle pauvre (21),
• et on fixe un moindre niveau de pression pour l'absorbeur ultra-basse pression de circuit principal/additionnel (12a) que dans l'absorbeur basse pression (13),
• dans lequel la solution prélevée hors de l'absorbeur ultra-basse pression ajouté est élevée, sous la forme d'une solution faiblement enrichie (7), au niveau de basse pression de l'absorbeur basse pression (13) au moyen d'une troisième pompe de solution (10c) et est amenée à celui-ci à des fins d'absorption,
• dans lequel la vapeur ultra-basse pression (34) destinée à être absorbée dans l'absorbeur ultra-basse pression ajouté est détendue à un niveau de pression approximativement identique et est amenée à l'absorbeur ultra-basse pression à des fins d'absorption,
• l'appareil de décompression haute pression (31b) est conçu pour la détente d'un courant partiel de vapeur du niveau de pression élevé jusqu'à une ultra-basse pression et pour un soutirage de vapeur en cas de basse pression,
• dans lequel le deuxième circuit additionnel est exploité entre une moyenne pression et une ultra-basse pression et il est déterminé, pour le générateur de moyenne pression additionnel (25) ajouté, une pression inférieure à celle de chacun des autres générateurs haute pression (3, 3a, 3b, 3c, 9),
• on effectue un apport de chaleur entre le courant de la source de chaleur externe (1) et le générateur de moyenne pression additionnel (25) ajouté, le niveau de température de l'apport de chaleur étant fixé plus bas que celui servant à la génération de haute pression et à une surchauffe intermédiaire éventuellement ajoutée,
• la vapeur à moyenne pression additionnelle (24) est conduite du générateur de moyenne pression additionnel (25) ajouté jusqu'à l'absorbeur moyenne pression (14),
• la solution additionnelle riche (20) est élevée au niveau de pression du générateur de moyenne pression additionnel (25) ajouté, à l'aide d'une pompe de solution additionnelle (17),
• la solution additionnelle riche (20) est conduite vers le générateur de moyenne pression additionnel (25) ajouté et y est introduite,
• la solution additionnelle pauvre (21) est réunie avec le quatrième courant partiel (8d) de solution pauvre, et ce courant partiel de solution principale/additionnelle pauvre (22) traverse au moins un échangeur de chaleur de solution (19a, 19c, 19d) à des fins d'émission de chaleur, et est abaissée à une ultra-basse pression au moyen d'une vanne d'étranglement de circuit principal/additionnelle (16c) et est conduite à l'absorbeur ultra-basse pression de circuit principal/additionnel (12a) à des fins d'absorption,
• dans lequel de la vapeur additionnelle (24) passe, par le biais d'un apport auprès de l'absorbeur moyenne pression (14), du circuit additionnel au circuit principal, et une partie de la vapeur ultra-basse pression (34) passe, par le biais d'un apport auprès de l'absorbeur ultra-basse pression de circuit principal/additionnel (12a), au circuit additionnel, dans lequel un équilibrage des proportions en poids d'eau différentes des deux vapeurs (24 et 33) en transit d'un circuit partiel vers l'autre se produit dans l'absorbeur ultra-basse pression de circuit principal/additionnel (12a) traversé par les solutions des deux circuits,
• dans lequel, selon le principe du double apport de chaleur, la quantité de vapeur additionnelle (24) extraite dans le générateur de moyenne pression additionnel (25) ajouté détermine la quantité de croissance de la quantité de vapeur susceptible d'être extraite lors de la génération de haute pression et susceptible d'être absorbée en ultra-basse pression.

14. Procédé de mise en oeuvre selon l'une des revendications 5 à 11, ou 13, **caractérisé en ce que** la détente s'effectue en deux étapes au moyen d'un appareil de décompression basse pression (38) additionnel ajouté au circuit principal,
• dans lequel on effectue la détente dans l'appareil de décompression haute pression (31) du niveau de haute pression au moins jusqu'au niveau de moyenne pression, au maximum jusqu'au niveau de pression d'un absorbeur dont le niveau de pression est supérieur à celui de l'absorbeur présentant le niveau de pression le plus faible,
• dans lequel la vapeur (32, 33, 36) détendue dans l'appareil de décompression haute pression (31) est divisée en un premier courant partiel de vapeur (32a, 33a) qui est amené à un absorbeur (13, 13a, 14) exposé à une pression identique ou quasi-identique, et en un deuxième courant partiel de vapeur (32b, 33b) qui est amené à l'appareil de décompression basse pression (38), et
• la vapeur détendue (33, 34) est amenée de l'appareil de décompression basse pression (38) à l'absorbeur à la pression la plus faible à des fins d'absorption (12a, 13, 13a).

15. Procédé de mise en oeuvre selon l'une des revendications 10 ou 11, **caractérisé en ce que**, à des fins de production de froid, en amont du circuit principal, on ajoute un circuit d'absorption pour une solution riche du circuit d'absorption et pour une solution pauvre du circuit d'absorption, les appareils et étapes de procédé spécifiques supplémentaires suivants :
• un condensateur de circuit d'absorption (42),
• un post-refroidisseur de liquide de circuit d'absorption (43),
• un évaporateur de circuit d'absorption (44),
• une vanne d'étranglement de circuit d'absorption (47),
• une pompe de solution de circuit principal/de circuit d'absorption (10e),
• le premier générateur haute pression (9), afin de pouvoir extraire également la vapeur haute pression (28e) du circuit d'absorption, est développé pour former un générateur haute pression de circuit principal/de circuit d'absorption (9a),
• l'absorbeur basse pression (13), afin de pouvoir absorber également la solution pauvre du circuit d'absorption, est développé pour former un absorbeur basse pression de circuit principal/de circuit d'absorption (13c),
• dans lequel le circuit principal et le circuit d'absorption sont exploités entre la haute pression et la basse pression,
• la solution riche (2) est agrémentée de la solution riche du circuit d'absorption pour former la solution riche de circuit principal/de circuit d'absorption (11),
• la solution riche de circuit principal/de circuit d'absorption (11) est élevée d'une basse pression à un haut niveau de pression au moyen de la pompe de solution de circuit principal/de circuit d'absorption (10e),
• la solution riche de circuit principal/de circuit d'absorption (11) traverse un échangeur de chaleur de solution de circuit principal/de circuit d'absorption (19e) à des fins d'absorption de chaleur,
• puis le deuxième courant partiel de solution riche (2c) est séparé de la solution de circuit principal/de circuit d'absorption (11),
• puis la solution riche de circuit principal/de circuit d'absorption (11) est conduite au générateur haute pression de circuit principal/de circuit d'absorption (9a) et introduite dans celui-ci,
• la solution pauvre (8) est agrémentée de la solution pauvre du circuit d'absorption pour former la solution pauvre de circuit principal/de circuit d'absorption (23),
• la solution pauvre de circuit principal/de circuit d'absorption (23) est amenée à traverser l'échangeur de chaleur de solution de circuit principal/de circuit d'absorption (19e) à des fins d'émission de chaleur,
• et celle-ci est abaissée à une basse pression au moyen de la vanne d'étranglement de circuit principal/de circuit d'absorption (16d) et est conduite à l'absorbeur basse pression de circuit principal/de circuit d'absorption (13c) à des fins d'absorption,
• la vapeur haute pression (28) est divisée en deux courants partiels au moyen d'une deuxième vanne à trois voies (50),
• un premier courant partiel de vapeur haute pression (28a) est amené au surchauffeur (30) et un deuxième courant partiel de vapeur haute pression (28b) au condensateur de circuit d'absorption (42) à des fins de condensation,
• le deuxième courant partiel de vapeur haute pression (28b) est liquéfié dans le condensateur de circuit d'absorption (42), avec émission de chaleur au contact d'un fluide de refroidissement, pour former l'ammoniaque liquide pratiquement pure du circuit d'absorption (46),
• l'ammoniaque liquide du circuit d'absorption (46) est amenée à traverser un post-refroidisseur de liquide de circuit d'absorption (43) à des fins d'émission de chaleur puis est abaissée, d'une moyenne pression supérieure à une basse pression, au moyen de la vanne d'étranglement de circuit d'absorption (47), après quoi l'ammoniaque liquide du circuit d'absorption (46) est conduite à l'évaporateur de circuit d'absorption (44),
• l'ammoniaque liquide du circuit d'absorption (46) est évaporée, avec absorption de chaleur, à partir d'un agent réfrigérant en vapeur d'ammoniaque basse pression de circuit d'absorption (33c) dans l'évaporateur de circuit d'absorption (44),
• la vapeur d'ammoniaque basse pression de circuit d'absorption (33c) traverse le post-refroidisseur de liquide de circuit d'absorption (43) à des fins d'absorption de chaleur,
• la vapeur d'ammoniaque basse pression de circuit d'absorption surchauffée (33d) issue du post-refroidisseur de liquide de circuit d'absorption (43) est conduite à l'absorbeur basse pression de circuit principal/de circuit d'absorption (13c) à des fins d'absorption,
• l'appareil de décompression haute pression (31) est conçu pour une détente du niveau de pression élevé jusqu'à une basse pression,
• la vapeur basse pression (33) issue de l'appareil de décompression haute pression (31) est conduite à l'absorbeur basse pression de circuit principal/de circuit d'absorption (13c) à des fins d'absorption.
